(19) **Europäisches Patentamt / European Patent Office / Office européen des brevets**

(11) **EP 4 583 467 A1**

(12) **EUROPEAN PATENT APPLICATION**
published in accordance with Art. 153(4) EPC

(43) Date of publication:
**09.07.2025 Bulletin 2025/28**

(21) Application number: **22960175.2**

(22) Date of filing: **29.09.2022**

(51) International Patent Classification (IPC):
**H04L 27/00** (2006.01)

(52) Cooperative Patent Classification (CPC):
**H04L 27/00**

(86) International application number:
**PCT/CN2022/122933**

(87) International publication number:
**WO 2024/065540 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Ting
Shenzhen, Guangdong 518129 (CN)**
• **MA, Jianglei
Shenzhen, Guangdong 518129 (CN)**
• **WEI, Dongdong
Shenzhen, Guangdong 518129 (CN)**
• **BI, Xiaoyan
Shenzhen, Guangdong 518129 (CN)**
• **ZHU, Peiying
Shenzhen, Guangdong 518129 (CN)**
• **TANG, Hao
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) A communication method and apparatus are provided, to flexibly adjust a frame structure, so as to meet differentiated communication requirements. In the method, when a symbol length remains unchanged, different cyclic shift code lengths and different useful symbol lengths may be configured, for example, a first cyclic shift code length and a second cyclic shift code length that are different, and a first useful symbol length and a second useful symbol length that are different, to flexibly adjust a frame structure. In this way, a signal is transmitted on a symbol corresponding to the frame structure, for example, a first symbol, so that differentiated communication requirements can be met.

```
        ┌──────────────┐              ┌──────────────┐
        │    Second    │              │    First     │
        │communication │              │communication │
        │  apparatus   │              │  apparatus   │
        └──────┬───────┘              └──────┬───────┘
        ┌──────┴───────┐              ┌──────┴───────┐
        │ S701: The    │              │ S702: The    │
        │ second       │              │ first        │
        │ communication│              │ communication│
        │ apparatus    │              │ apparatus    │
        │ determines a │              │ determines a │
        │ first symbol │              │ first symbol │
        └──────┬───────┘              └──────┬───────┘
               │  S703: Transmit a first signal on the
               │           first symbol
               │◄─────────────────────────────►│
```

FIG. 7

## Description

### TECHNICAL FIELD

This application relates to the communication field, and in particular, to a communication method and apparatus.

### BACKGROUND

The 3rd generation partnership project (3rd generation partnership project, 3GPP) defines a standard frame structure. For a frame structure, a symbol length of the frame structure includes a cyclic shift code (cyclic permutation, CP) length and a useful symbol length, and a symbol of the frame structure is related to a subcarrier spacing (subcarrier spacing, SCS) of the frame structure. When the SCS of the frame structure is determined, the cyclic shift code length and the useful symbol length are also determined, to meet maximum delay spread of a cell (cell).

However, as communication requirements continuously develop towards differentiation, a current frame structure may not meet differentiated communication requirements.

### SUMMARY

Embodiments of this application provide a communication method and apparatus, to flexibly adjust a frame structure, so as to meet differentiated communication requirements.

To achieve the foregoing objective, this application uses the following technical solutions.

According to a first aspect, a communication method is provided. The method includes: A first communication apparatus determines a first symbol, to transmit a first signal on the first symbol. The first symbol is a symbol configured for a first frame structure or a second frame structure, a symbol length of the first frame structure is the same as a symbol length of the second frame structure, the symbol length of the first frame structure includes a first cyclic shift code length and a first useful symbol length, the symbol length of the second frame structure includes a second cyclic shift code length and a second useful symbol length. The first cyclic shift code length is different from the second cyclic shift code length, and the first useful symbol length is different from the second useful symbol length.

It can be learned from the method according to the first aspect that, when symbol lengths remain unchanged, different cyclic shift code lengths and different useful symbol lengths, for example, the first cyclic shift code length and the second cyclic shift code length that are different, and the first useful symbol length and the second useful symbol length that are different, may be configured for different frame structures based on different communication requirements, to flexibly adjust the frame structure. In this way, a signal is transmitted on a symbol corresponding to the frame structure, for example, the first symbol, so that differentiated communication requirements can be met. In addition, the symbol length of the first frame structure is the same as the symbol length of the second frame structure, so that symbol boundaries for different subcarrier spacings can be aligned, to reduce processing complexity of a terminal. In addition, a symbol for an existing frame structure can be compatible, to avoid resource fragmentation, implement efficient resource utilization, and improve communication performance.

In a possible design solution, the method according to the first aspect may further include: The first communication apparatus receives first indication information, to determine the first cyclic shift code length and the first useful symbol length based on the first indication information. The first indication information indicates at least one of the following of the first frame structure: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

It may be understood that the first indication information may directly indicate the subcarrier spacing of the first frame structure. Alternatively, the first indication information may indicate the DFT corresponding to the first frame structure, and the first communication apparatus may autonomously select the subcarrier spacing of the first frame structure based on the DFT sampling number corresponding to the first frame structure, to implement flexible configuration of the subcarrier spacing. When the subcarrier spacing of the first frame structure is determined, if the first cyclic shift code length is known, the first useful symbol length may be determined, or if the first useful symbol length is known, the first cyclic shift code length may be determined. Therefore, the first indication information may indicate the first cyclic shift code length or the first useful symbol length, to reduce signaling overheads. Alternatively, the first indication information may directly indicate a ratio of the first cyclic shift code length to the first useful symbol length. In this way, the first communication apparatus can directly determine the first cyclic shift code length and the first useful symbol length, to implement efficient processing.

It may be further understood that the first indication information mainly indicates the first frame structure, to represent that all symbols (including the first symbol) in the frame are symbols corresponding to the first frame structure, and does not need to indicate each symbol in the first frame structure, to reduce signaling overheads.

Alternatively, in a possible design solution, the method according to the first aspect may further include: The first communication apparatus receives first index information, and determines the first cyclic shift code length and the first useful symbol length based on the first index information. The first index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol.

It may be understood that different index information may be configured for different symbol structures, so that a structure of a specific symbol (for example, the structure of the first symbol) is implicitly indicated by indicating specific index information (for example, the first index information), thereby reducing signaling overheads.

It may be further understood that the index information mainly indicates a structure of a specific symbol. For example, the first index information indicates the structure of the first symbol, so that structures of different symbols in a same frame may be different, thereby implementing more flexible frame structure configuration.

In a possible design solution, that a first communication apparatus determines a first symbol includes: The first communication apparatus determines, based on the second frame structure, the first symbol corresponding to the first frame structure. In other words, when the second frame structure is determined, the second frame structure may be used as a reference, so that the first communication apparatus can quickly determine the structure of the first symbol.

Optionally, a symbol boundary of the second frame structure is aligned with a symbol boundary of the first frame structure. That the first communication apparatus determines, based on the second frame structure, the first symbol corresponding to the first frame structure includes: The first communication apparatus determines a time domain location of the first symbol based on alignment between the symbol boundary of the second frame structure and the symbol boundary of the first frame structure.

It may be understood that, when the second frame structure is determined, both a time domain location and a symbol length of a symbol corresponding to the second frame structure are determined. In this way, the first communication apparatus can quickly determine the time domain location of the first symbol based on the alignment between the symbol boundary of the second frame structure and the symbol boundary of the first frame structure.

Optionally, the method according to the first aspect may further include: The first communication apparatus receives second indication information, where the second indication information indicates the second frame structure, for example, including at least one of the following of the second frame structure: a subcarrier spacing, the symbol length, or index information, to implicitly indicate symbol boundary alignment by using these pieces of information. This can prevent the second indication information from carrying an additional information element to indicate symbol boundary alignment, thereby reducing signaling overheads.

In a possible design solution, that the first communication apparatus transmits a first signal on the first symbol includes: The first communication apparatus determines an unavailable resource in a frequency domain resource set corresponding to the first symbol, and transmits the first signal on a frequency domain resource other than the unavailable resource in the frequency domain resource set, to reduce interference, implement resource isolation, and avoid data leakage.

Optionally, the unavailable resource is at least one subcarrier or at least one resource block. This is not limited. Specifically, the unavailable resource may be flexibly configured based on an actual requirement, to meet the actual requirement.

Optionally, the method according to the first aspect may further include: The first communication apparatus receives third indication information. The third indication information indicates an unavailable resource, to flexibly configure the unavailable resource by using signaling.

According to a second aspect, a communication method is provided. The method includes: A second communication apparatus determines a first symbol, and transmits a first signal on the first symbol. The first symbol is a symbol configured for a first frame structure or a second frame structure, a symbol length of the first frame structure is the same as a symbol length of the second frame structure, the symbol length of the first frame structure includes a first cyclic shift code length and a first useful symbol length, the symbol length of the second frame structure includes a second cyclic shift code length and a second useful symbol length. The first cyclic shift code length is different from the second cyclic shift code length, and the first useful symbol length is different from the second useful symbol length.

In a possible design solution, the method according to the second aspect may further include: The second communication apparatus sends first indication information. At least one that is of the following of the first frame structure and that is indicated by the first indication information is used to determine the first cyclic shift code length and the first useful symbol length: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure. The at least one of the following is used to determine the first cyclic shift code length and the first useful symbol length.

In a possible design solution, the method according to the second aspect may further include: The second communication apparatus sends first index information. The first index information corresponds to a structure of the first symbol, and at least one that is of the following and that is included in the structure of the first symbol is used to determine the first cyclic shift code length and the first useful symbol length: the first cyclic shift code length, a ratio of the first cyclic shift code length to the first useful symbol length, the first useful symbol length, or a subcarrier spacing corresponding to the first symbol. The at least one of the following is used to determine the first cyclic shift code length and the first useful symbol length.

In a possible design solution, that a second communication apparatus determines a first symbol includes: The second communication apparatus determines, based on the second frame structure, the first symbol corresponding to the first frame structure.

Optionally, a symbol boundary of the second frame structure is aligned with a symbol boundary of the first frame structure.

Optionally, that the second communication apparatus determines, based on the second frame structure, the first symbol corresponding to the first frame structure includes: The second communication apparatus determines a time domain location of the first symbol based on alignment between the symbol boundary of the second frame structure and the symbol boundary of the first frame structure.

Optionally, the method according to the second aspect may further include: The second communication apparatus sends second indication information. The second indication information indicates the second frame structure.

In a possible design solution, that the second communication apparatus transmits a first signal on the first symbol includes: The second communication apparatus determines an unavailable resource in a frequency domain resource set corresponding to the first symbol, and transmits the first signal on a frequency domain resource other than the unavailable resource in the frequency domain resource set.

Optionally, the unavailable resource is at least one subcarrier or at least one resource block.

Optionally, the method according to the second aspect may further include: The second communication apparatus sends third indication information. The third indication information indicates an unavailable resource.

In addition, for other technical effects of the communication method according to the second aspect, refer to the technical effects of the communication method according to the first aspect. Details are not described herein again.

With reference to the first aspect or the second aspect, in a possible design solution, at least one of the first cyclic shift code length, the second cyclic shift code length, the first useful symbol length, and the second useful symbol length is represented by using a quantity of reference time units. In other words, these time domain lengths may be represented by using a unified time domain scale, that is, a quantity of reference time units, so that a device performs time domain-related processing.

Optionally, the reference time unit is related to a maximum subcarrier spacing and a maximum DFT sampling number. For example, the reference time unit satisfies the following relationship:

$$T_{s-base} = 1/(DFT\ size\ max \cdot \Delta fmax);$$

$$DFT\ size\ max = 2^{d1max} \cdot 3^{d2max} \cdot 5^{d3max};$$

$$\Delta fmax = 2^{\mu1max} \cdot 3^{\mu2max} \cdot 5^{\mu3max};$$

$T_{s-base}$ is a basic time unit, the reference time unit is an integer multiple of the basic time unit, *DFT size max* is the maximum DFT sampling number, $\Delta fmax$ is the maximum subcarrier spacing, *d*1, *d*2, and *d*3 are integers, *d*1*max* is a maximum value of *d*1, *d*2*max* is a maximum value of d2, *d*3*max* is a maximum value of *d*3, $\mu$1, $\mu$2, and $\mu$3 are integers, $\mu$1*max* is a maximum value of $\mu$1, $\mu$2*max* is a maximum value of $\mu$2, and $\mu$3*max* is a maximum value of $\mu$3.

It can be learned that the basic time unit may be a minimum time unit supported by a system. In this way, the reference time unit including the basic time unit can more accurately represent an absolute time in time domain.

With reference to the first aspect or the second aspect, in a possible design solution, at least one of the first cyclic shift code length, the second cyclic shift code length, the first useful symbol length, and the second useful symbol length is represented by using a quantity of ith reference time units in M reference time units, values of any two of the M reference time units are different, M is an integer greater than 1, and i is any integer in 1 to M.

In other words, when the cyclic shift code length and/or the useful symbol length are/is represented by using different reference time units, quantities of these reference time units may be different. For example, the cyclic shift code length may be represented by 10 reference time units A. In this case, if the reference time units A are twice reference time units B, the cyclic shift code length may also be represented by 20 reference time units B. Therefore, for different cyclic shift code lengths and/or useful symbol lengths, reference time units of different scales may be used for representation, to ensure that a quantity of reference time units is proper, so that a first communication apparatus performs time domain-related processing.

Optionally, the subcarrier spacing of the first frame structure falls within an $i^{th}$ subcarrier spacing set in M subcarrier spacing sets, and at least a part of subcarrier spacings in any two of the M subcarrier spacing sets are different; and/or the DFT sampling number corresponding to the first frame structure falls within an $i^{th}$ DFT sampling number set in M DFT sampling number sets, and at least a part of DFT sampling numbers in any two of the M DFT sampling number sets are different.

The $i^{th}$ reference time unit is related to a maximum subcarrier spacing in the $i^{th}$ subcarrier spacing set, and/or the $i^{th}$ reference time unit is related to a maximum DFT sampling number in the $i^{th}$ DFT sampling number set.

For example, the $i^{th}$ reference time unit satisfies the following relationship:

$$T_{s-base\,i} = 1/(DFT\ size\ max\ i \cdot \Delta fmax\ i);$$

$$DFT\ size\ \max i = 2^{di1max} \cdot 3^{di2max} \cdot 5^{di3max};$$

$$\Delta fmax\ i = 2^{\mu i1max} \cdot 3^{\mu i2max} \cdot 5^{\mu i3max};$$

$T_{s-base\,i}$ is an $i^{th}$ basic time unit, the $i^{th}$ reference time unit is an integer multiple of the $i^{th}$ basic time unit, *DFT size max i* is the maximum DFT sampling number in the $i^{th}$ DFT sampling number set, $\Delta fmax\,i$ is the maximum subcarrier spacing in the $i^{th}$ subcarrier spacing set, *di*1, *di*2, and *di*3 are integers, *di*1*max* is a maximum value of *di*1, *di*2*max* is a maximum value of *di*2, *di*3*max* is a maximum value of *di*3, $\mu i$1, $\mu i$2, and $\mu i$3 are integers, $\mu i$1*max* is a maximum value of $\mu i$1, $\mu i$2*max* is a maximum value of $\mu i$2, and $\mu i$3*max* is a maximum value of $\mu i$3.

For another example, the $i^{th}$ reference time unit satisfies the following relationship:

$$T_{s-base\,i} = 1/(DFT\ size\ max \cdot \Delta fmax\ i);$$

$$DFT\ size\ max = 2^{d1max} \cdot 3^{d2max} \cdot 5^{d3max};$$

$$\Delta fmax\ i = 2^{\mu i1max} \cdot 3^{\mu i2max} \cdot 5^{\mu i3max};$$

$T_{s-base\,i}$ is an $i^{th}$ basic time unit, the $i^{th}$ reference time unit is an integer multiple of the $i^{th}$ basic time unit, *DFT size max* is the maximum DFT sampling number, $\Delta fmax\,i$ is the maximum subcarrier spacing in the $i^{th}$ subcarrier spacing set, *d*1, *d*2, and *d*3 are integers, *d*1*max* is the maximum value of *d*1, *d*2*max* is the maximum value of *d*2, *d*3*max* is the maximum value of *d*3, $\mu i$1, $\mu i$2, and $\mu i$3 are integers, $\mu i$1*max* is a maximum value of $\mu i$1, $\mu i$2*max* is a maximum value of $\mu i$2, and $\mu i$3*max* is a maximum value of $\mu i$3.

For still another example, the $i^{th}$ reference time unit satisfies the following relationship:

$$T_{s-base\,i} = 1/(DFT\ size\ max\ i \cdot \Delta fmax\ i);$$

$$DFT\ size\ \max i = 2^{di1max} \cdot 3^{di2max} \cdot 5^{di3max};$$

$$\Delta fmax\ i = 2^{\mu 1max} \cdot 3^{\mu 2max} \cdot 5^{\mu 3max};$$

$T_{s-base\,i}$ is an $i^{th}$ basic time unit, the $i^{th}$ reference time unit is an integer multiple of the $i^{th}$ basic time unit, *DFT size max i* is the maximum DFT sampling number in the $i^{th}$ DFT sampling number set, $\Delta fmax$ is the maximum subcarrier spacing, *di*1, *di*2, and *di*3 are integers, *di*1*max* is a maximum value of *di*1, *di*2*max* is a maximum value of *di*2, *di*3*max* is a maximum value of *di*3, $\mu$1, $\mu$2, and $\mu$3 are integers, $\mu$1*max* is the maximum value of $\mu$1, $\mu$2*max* is the maximum value of $\mu$2, and $\mu$3*max* is the maximum value of $\mu$3.

It can be learned that the $i^{th}$ basic time unit may be a minimum time unit for the $i^{th}$ DFT sampling number set and/or the $i^{th}$ subcarrier spacing set. In this way, the $i^{th}$ reference time unit including the $i^{th}$ basic time unit can more accurately represent an absolute time in time domain.

According to a third aspect, a communication method is provided. The method includes: A first communication apparatus determines, based on a time domain offset and a time domain location of a second symbol corresponding to a second frame structure, a time domain location of a first symbol corresponding to a first frame structure, and transmits a first signal on the first symbol. The time domain offset is a time domain offset between the time domain location of the first symbol and the time domain location of the second symbol, and a symbol length of the first frame structure is different from a symbol length of the second frame structure.

It can be learned from the method according to the third aspect that, when subcarrier spacings of frame structures are different, time domain locations of symbols corresponding to different frame structures may not be aligned. In this case, the first communication apparatus may determine, by using a symbol with a determined time domain location, for example, the second symbol corresponding to the second frame structure, as a reference, a time domain location of a symbol with an undetermined time domain location, for example, the time domain location of the first symbol corresponding to the first frame structure, based on a time domain offset between the symbol with the determined time domain location and the symbol with the undetermined time domain location, for example, the time domain offset, so that the first communication apparatus can transmit the first signal on the first symbol.

In a possible design solution, the time domain offset includes at least one of the following: a time domain offset between a start time domain location of the first symbol and a start time domain location of the second symbol, a time domain offset between an end time domain location of the first symbol and an end time domain location of the second symbol, a time domain offset between the start time domain location of the first symbol and the end time domain location of the second symbol, or a time domain offset between the end time domain location of the first symbol and the start time domain location of the second symbol. This implements flexibly determining or indicating the time domain offset, thereby reducing signaling overheads and improving communication performance.

Optionally, the time domain offset is represented by using a quantity of reference time units.

Optionally, the method according to the third aspect may further include: The first communication apparatus receives fourth indication information. The fourth indication information indicates the time domain offset. In this way, various time domain offsets can be flexibly indicated by using signaling.

Further, the fourth indication information further indicates at least one of the following: the time domain location of the second symbol or a quantity of first symbols. It may be understood that, when the fourth indication information indicates the time domain offset, the fourth indication information may further be reused to indicate the time domain location of the second symbol. This can reduce signaling overheads. In addition, the quantity of first symbols may be used by the first communication apparatus to determine an entire time domain interval occupied by the first symbol, so that the first communication apparatus can transmit the first signal in the time domain interval.

In a possible design solution, the method according to the third aspect may further include: The first communication apparatus determines a first cyclic shift code length of the first symbol and a first useful symbol length of the first symbol, that is, determines a structure of the first symbol, to transmit the first signal on the first symbol.

Optionally, that the first communication apparatus determines a first cyclic shift code length of the first symbol and a first useful symbol length of the first symbol includes: The first communication apparatus receives fifth indication information, and determines the first cyclic shift code length and the first useful symbol length based on the fifth indication information. The fifth indication information indicates at least one of the following of the first frame structure: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

Optionally, that the first communication apparatus determines a first cyclic shift code length of the first symbol and a first useful symbol length of the first symbol includes: The first communication apparatus receives second index information, and determines the first cyclic shift code length and the first useful symbol length based on the second index information. The second index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol.

Optionally, that the first communication apparatus determines a first cyclic shift code length of the first symbol and a first useful symbol length of the first symbol includes: The first communication apparatus receives fifth indication information and second index information, and determines the first cyclic shift code length and the first useful symbol length based on the fifth indication information and the second index information.

The fifth indication information indicates a DFT sampling number corresponding to the first frame structure, the second index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol. Alternatively, the fifth indication information indicates at least one of the following of the first frame structure: a subcarrier spacing of the first frame structure or the first useful symbol length, the second index information corresponds to a structure of the first symbol, and the structure of the first symbol includes at least one of the following: the first cyclic shift code length or a DFT sampling number corresponding to the first symbol. Alternatively, the fifth indication information indicates at least one of the following of the first frame structure: a subcarrier spacing of the first frame structure, the first useful symbol length, or a DFT sampling number corresponding to the first frame structure, the second index information corresponds to a structure of the first symbol, and the structure of the first symbol includes the first cyclic shift code length.

It can be learned that the fifth indication information mainly indicates the frame structure, and the second index information mainly indicates the structure of the symbol, that is, the frame structure and the structure of the symbol are jointly indicated. In this way, the structure of the first symbol can be configured more flexibly.

Optionally, at least one of the first cyclic shift code length and the first useful symbol length is represented by using a quantity of reference time units.

In a possible design solution, the method according to the third aspect may further include: The first communication apparatus determines the time domain location of the second symbol.

Optionally, that the first communication apparatus determines the time domain location of the second symbol includes: The first communication apparatus receives sixth indication information, and determines the time domain location of the second symbol based on the sixth indication information. The sixth indication information indicates at least one of the following of the second frame structure: a second cyclic shift code length, a ratio of the second cyclic shift code length to a second useful symbol length, the second useful symbol length, a subcarrier spacing of the second frame structure, or a DFT sampling number corresponding to the second frame structure.

Optionally, that the first communication apparatus determines the time domain location of the second symbol includes: The first communication apparatus receives third index information, and determines the time domain location of the second symbol based on the third index information. The third index information corresponds to a structure of the second symbol, and the structure of the second symbol includes at least one of the following: a second cyclic shift code length, a ratio of the second cyclic shift code length to a second useful symbol length, the second useful symbol length, or a subcarrier spacing corresponding to the second symbol.

Optionally, that the first communication apparatus determines the time domain location of the second symbol includes: The first communication apparatus receives sixth indication information and third index information, and determines the time domain location of the second symbol based on the sixth indication information and the third index information.

The sixth indication information indicates a DFT sampling number corresponding to the second frame structure, the third index information corresponds to a structure of the second symbol, and the structure of the second symbol includes at least one of the following: a second cyclic shift code length, a ratio of the first cyclic shift code length to a second useful symbol length, the first useful symbol length, or a subcarrier spacing corresponding to the second symbol. Alternatively, the sixth indication information indicates at least one of the following of the second frame structure: a subcarrier spacing of the second frame structure or a second useful symbol length, the third index information corresponds to a structure of the second symbol, and the structure of the second symbol includes at least one of the following: a second cyclic shift code length or a DFT sampling number corresponding to the second symbol. Alternatively, the sixth indication information indicates at least one of the following of the second frame structure: a subcarrier spacing of the second frame structure, a second useful symbol length, or a DFT sampling number corresponding to the second frame structure, the third index information corresponds to a structure of a second symbol, and the structure of the second symbol includes a second cyclic shift code length.

It can be learned that the sixth indication information mainly indicates the frame structure, and the third index information mainly indicates the structure of the symbol, that is, the frame structure and the structure of the symbol are jointly indicated. In this way, the structure of the second symbol can be configured more flexibly.

Optionally, at least one of the second cyclic shift code length and the second useful symbol length is represented by using a quantity of reference time units.

In addition, for other technical effects of the communication method according to the third aspect, refer to the technical effects of the communication method according to the first aspect. Details are not described herein again.

According to a fourth aspect, a communication method is provided. The method includes: A second communication apparatus determines, based on a time domain offset and a time domain location of a second symbol corresponding to a second frame structure, a time domain location of a first symbol corresponding to a first frame structure, to transmit a first signal on the first symbol. The time domain offset is a time domain offset between the time domain location of the first symbol and the time domain location of the second symbol, and a symbol length of the first frame structure is different from a symbol length of the second frame structure.

In a possible design solution, the time domain offset includes at least one of the following: a time domain offset between a start time domain location of the first symbol and a start time domain location of the second symbol, a time domain offset between an end time domain location of the first symbol and an end time domain location of the second symbol, a time domain offset between the start time domain location of the first symbol and the end time domain location of the second symbol, or a time domain offset between the end time domain location of the first symbol and the start time domain location of the second symbol.

Optionally, the time domain offset is represented by using a quantity of reference time units.

Optionally, the method according to the fourth aspect may further include: The second communication apparatus sends fourth indication information. The fourth indication information indicates the time domain offset.

Further, the fourth indication information further indicates at least one of the following: the time domain location of the second symbol or a quantity of first symbols.

In a possible design solution, the method according to the fourth aspect may further include: The second communication apparatus determines a first cyclic shift code length of the first symbol and a first useful symbol length of the first symbol.

Optionally, the method according to the fourth aspect may further include: The second communication apparatus sends fifth indication information. At least one that is of the following of the first frame structure and that is indicated by the fifth indication information is used to determine the first cyclic shift code length and the first useful symbol length: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

Optionally, the method according to the fourth aspect may further include: The second communication apparatus sends second index information. The second index information corresponds to a structure of the first symbol, and at least one that is of the following and that is included in the structure of the first symbol is used to determine the first cyclic shift code length and the first useful symbol length: the first cyclic shift code length, a ratio of the first cyclic shift code length to the first useful symbol length, the first useful symbol length, or a subcarrier spacing corresponding to the first symbol.

Optionally, the method according to the fourth aspect may further include: The second communication apparatus sends fifth indication information and second index information. Information indicated by the fifth indication information and the second index information is used to determine the first cyclic shift code length and the first useful symbol length. The fifth indication information indicates a DFT sampling number corresponding to the first frame structure, the second index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol. Alternatively, the fifth indication information indicates at least one of the following of the first frame structure: a subcarrier spacing of the first frame structure or the first useful symbol length, the second index information corresponds to a structure of the first symbol, and the structure of the first symbol includes at least one of the following: the first cyclic shift code length or a DFT sampling number corresponding to the first symbol. Alternatively, the fifth indication information indicates at least one of the following of the first frame structure: a subcarrier spacing of the first frame structure, the first useful symbol length, or a DFT sampling number corresponding to the first frame structure, the second index information corresponds to a structure of the first symbol, and the structure of the first symbol includes the first cyclic shift code length.

Optionally, at least one of the first cyclic shift code length and the first useful symbol length is represented by using a quantity of reference time units.

In a possible design solution, the method according to the fourth aspect may further include: The second communication apparatus determines the time domain location of the second symbol.

Optionally, the method according to the fourth aspect may further include: The second communication apparatus sends sixth indication information. At least one that is of the following of the second frame structure and that is indicated by the sixth indication information is used to determine the time domain location of the second symbol: a second cyclic shift code length, a ratio of the second cyclic shift code length to a second useful symbol length, the second useful symbol length, a subcarrier spacing of the second frame structure, or a DFT sampling number corresponding to the second frame structure.

Optionally, the method according to the fourth aspect may further include: The second communication apparatus sends third index information. The third index information corresponds to a structure of the second symbol, and at least one that is of the following and that is included in the structure of the second symbol is used to determine the time domain location of the second symbol: a second cyclic shift code length, a ratio of the second cyclic shift code length to a second useful symbol length, the second useful symbol length, or a subcarrier spacing corresponding to the second symbol.

Optionally, the method according to the fourth aspect may further include: The second communication apparatus sends sixth indication information and third index information. Information indicated by the sixth indication information and the third index information is used to determine the time domain location of the second symbol. For example, the sixth indication information indicates a DFT sampling number corresponding to the second frame structure, the third index information corresponds to a structure of the second symbol, and the structure of the second symbol includes at least one of the following: a second cyclic shift code length, a ratio of the first cyclic shift code length to a second useful symbol length, the first useful symbol length, or a subcarrier spacing corresponding to the second symbol. Alternatively, the sixth indication information indicates at least one of the following of the second frame structure: a subcarrier spacing of the second frame structure or a second useful symbol length, the third index information corresponds to a structure of the second symbol, and the structure of the second symbol includes at least one of the following: a second cyclic shift code length or a DFT sampling number corresponding to the second symbol. Alternatively, the sixth indication information indicates at least one of the following of the second frame structure: a subcarrier spacing of the second frame structure, a second useful symbol length, or a DFT sampling number corresponding to the second frame structure, the third index information corresponds to a structure of a second symbol, and the structure of the second symbol includes a second cyclic shift code length.

Optionally, at least one of the second cyclic shift code length and the second useful symbol length is represented by using a quantity of reference time units.

In addition, for other technical effects of the communication method according to the fourth aspect, refer to the technical effects of the communication method according to the third aspect. Details are not described herein again.

With reference to the third aspect and the fourth aspect, in a possible design solution, the reference time unit is related to a maximum subcarrier spacing and a maximum DFT sampling number.

For example, the reference time unit satisfies the following relationship:

$$T_{s-base} = 1/(DFT\ size\ max \cdot \Delta fmax);$$

$$DFT\ size\ max = 2^{d1max} \cdot 3^{d2max} \cdot 5^{d3max};$$

$$\Delta fmax = 2^{\mu1max} \cdot 3^{\mu2max} \cdot 5^{\mu3max};$$

$T_{s-base}$ is a basic time unit, the reference time unit is an integer multiple of the basic time unit, *DFT size max* is the maximum DFT sampling number, $\Delta fmax$ is the maximum subcarrier spacing, $d1$, $d2$, and $d3$ are integers, $d1max$ is a maximum value of $d1$, $d2max$ is a maximum value of $d2$, $d3max$ is a maximum value of $d3$, $\mu1$, $\mu2$, and $\mu3$ are integers, $\mu1max$ is a maximum value of $\mu1$, $\mu2max$ is a maximum value of $\mu2$, and $\mu3max$ is a maximum value of $\mu3$.

In a possible design solution, the reference time unit is an ith reference time unit in M reference time units, values of any two of the M reference time units are different, M is an integer greater than 1, and i is any integer in 1 to M.

Optionally, the subcarrier spacing falls within an ith subcarrier spacing set in M subcarrier spacing sets, and at least a part of subcarrier spacings in any two of the M subcarrier spacing sets are different; and/or the DFT sampling number falls within an ith DFT sampling number set in M DFT sampling number sets, and at least a part of DFT sampling numbers in any two of the M DFT sampling number sets are different.

The ith reference time unit is related to a maximum subcarrier spacing in the ith subcarrier spacing set, and/or the ith reference time unit is related to a maximum DFT sampling number in the ith DFT sampling number set.

For example, the ith reference time unit satisfies the following relationship:

$$T_{s-base\ i} = 1/(DFT\ size\ max\ i \cdot \Delta fmax\ i);$$

$$DFT\ size\ \max i = 2^{di1max} \cdot 3^{di2max} \cdot 5^{di3max};$$

$$\Delta fmax\ i = 2^{\mu i1max} \cdot 3^{\mu i2max} \cdot 5^{\mu i3max};$$

$T_{s-base\ i}$ is an ith basic time unit, the ith reference time unit is an integer multiple of the ith basic time unit, *DFT size max i* is the maximum DFT sampling number in the ith DFT sampling number set, $\Delta fmax\ i$ is the maximum subcarrier spacing in the ith subcarrier spacing set, $di1$, $di2$, and $di3$ are integers, $di1max$ is a maximum value of $di1$, $di2max$ is a maximum value of $di2$, $di3max$ is a maximum value of $di3$, $\mu i1$, $\mu i2$, and $\mu i3$ are integers, $\mu i1max$ is a maximum value of $\mu i1$, $\mu i2max$ is a maximum value of $\mu i2$, and $\mu i3max$ is a maximum value of $\mu i3$.

For another example, the ith reference time unit satisfies the following relationship:

$$T_{s-base\ i} = 1/(DFT\ size\ max \cdot \Delta fmax\ i);$$

$$DFT\ size\ max = 2^{d1max} \cdot 3^{d2max} \cdot 5^{d3max};$$

$$\Delta fmax\ i = 2^{\mu i1max} \cdot 3^{\mu i2max} \cdot 5^{\mu i3max};$$

$T_{s-base\ i}$ is an ith basic time unit, the ith reference time unit is an integer multiple of the ith basic time unit, *DFT size max i* is the maximum DFT sampling number, $\Delta fmax\ i$ is the maximum subcarrier spacing in the ith subcarrier spacing set, $d1$, $d2$, and $d3$ are integers, $d1max$ is the maximum value of $d1$, $d2max$ is the maximum value of $d2$, $d3max$ is the maximum

value of $d3$, $\mu i1$, $\mu i2$, and $\mu i3$ are integers, $\mu i1max$ is a maximum value of $\mu i1$, $\mu i2max$ is a maximum value of $\mu i2$, and $\mu i3max$ is a maximum value of $\mu i3$.

For still another example, the $i^{th}$ reference time unit satisfies the following relationship:

$$T_{s-base\ i} = 1/(DFT\ size\ max\ i \cdot \Delta fmax\ i);$$

$$DFT\ size\ max\ i = 2^{di1max} \cdot 3^{di2max} \cdot 5^{di3max};$$

$$\Delta fmax\ i = 2^{\mu 1max} \cdot 3^{\mu 2max} \cdot 5^{\mu 3max};$$

$T_{s-base\ i}$ is an $i^{th}$ basic time unit, the $i^{th}$ reference time unit is an integer multiple of the $i^{th}$ basic time unit, *DFT size max i* is the maximum DFT sampling number in the $i^{th}$ DFT sampling number set, $\Delta fmax$ is the maximum subcarrier spacing, $di1$, $di2$, and $di3$ are integers, $di1max$ is a maximum value of $di1$, $di2max$ is a maximum value of $di2$, $di3max$ is a maximum value of $di3$, $\mu 1$, $\mu 2$, and $\mu 3$ are integers, $\mu 1max$ is the maximum value of $\mu 1$, $\mu 2max$ is the maximum value of $\mu 2$, and $\mu 3max$ is the maximum value of $\mu 3$.

In a possible design solution, a boundary of a time unit in which the first symbol is located is aligned with a boundary of a time unit in which the second symbol is located, to facilitate signal modulation and demodulation.

According to a fifth aspect, a communication apparatus is provided. The communication apparatus includes modules configured to perform the communication method according to the first aspect, for example, a transceiver module and a processing module. The transceiver module is configured to perform a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the communication method according to the first aspect.

It should be noted that the communication apparatus according to the fifth aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the fifth aspect, refer to the technical effects of the communication method according to the first aspect. Details are not described herein again.

According to a sixth aspect, a communication apparatus is provided. The communication apparatus includes modules configured to perform the communication method according to the second aspect, for example, a transceiver module and a processing module. The transceiver module is configured to perform a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the communication method according to the second aspect.

It should be noted that the communication apparatus according to the sixth aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the sixth aspect, refer to the technical effects of the communication method according to the second aspect. Details are not described herein again.

According to a seventh aspect, a communication apparatus is provided. The communication apparatus includes modules configured to perform the communication method according to the third aspect, for example, a transceiver module and a processing module. The transceiver module is configured to perform a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module. The storage module stores a program or instructions. When the processing module executes the program or the instructions, the communication apparatus is enabled to perform the communication method according to the third aspect.

It should be noted that the communication apparatus according to the seventh aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the seventh aspect, refer to the technical effects of the communication method according to the third aspect. Details are not described herein again.

According to an eighth aspect, a communication apparatus is provided. The communication apparatus includes modules configured to perform the communication method according to the fourth aspect, for example, a transceiver module and a processing module. The transceiver module is configured to perform a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module. The storage module stores a program or instructions. When the processing module executes the program or the instructions, the communication apparatus is enabled to perform the communication method according to the fourth aspect.

It should be noted that the communication apparatus according to the eighth aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the eighth aspect, refer to the technical effects of the communication method according to the fourth aspect. Details are not described herein again.

According to a ninth aspect, a communication apparatus is provided. The communication apparatus includes a processor, and the processor is configured to perform the communication method according to any one of the possible implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In a possible design solution, the communication apparatus according to the ninth aspect may further include a memory. The memory and the processor may be integrated together, or may be disposed separately. The memory may be configured to store a computer program and/or data related to the communication method according to any one of the first aspect to the fourth aspect.

In this application, the communication apparatus according to the ninth aspect may be the terminal or the network device according to any one of the first aspect to the fourth aspect, or a chip (system) or another part or component that may be disposed in the terminal or the network device, or an apparatus that includes the terminal or the network device.

In addition, for technical effects of the communication apparatus according to the ninth aspect, refer to the technical effects of the communication method according to any one of the implementations of the first aspect to the fourth aspect. Details are not described herein again.

According to a tenth aspect, a communication apparatus is provided. The communication apparatus includes a processor. The processor is coupled to a memory, and the processor is configured to execute a computer program stored in the memory, so that the communication apparatus performs the communication method according to any one of the possible implementations of the first aspect to the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be the terminal or the network device according to any one of the first aspect to the fourth aspect, or a chip (system) or another part or component that may be disposed in the terminal or the network device, or an apparatus that includes the terminal or the network device.

In addition, for technical effects of the communication apparatus according to the tenth aspect, refer to the technical effects of the communication method according to any one of the implementations of the first aspect to the fourth aspect. Details are not described herein again.

According to an eleventh aspect, a communication apparatus is provided, including a processor and a memory. The memory is configured to store a computer program, and when the processor executes the computer program, the communication apparatus is enabled to perform the communication method according to any one of the implementations of the first aspect to the fourth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the eleventh aspect may be the terminal or the network device according to any one of the first aspect to the fourth aspect, or a chip (system) or another part or component that may be disposed in the terminal or the network device, or an apparatus that includes the terminal or the network device.

In addition, for technical effects of the communication apparatus according to the eleventh aspect, refer to the technical effects of the communication method according to any one of the implementations of the first aspect to the fourth aspect. Details are not described herein again.

According to a twelfth aspect, a communication system is provided. The communication system includes the first communication apparatus according to the first aspect and the second communication apparatus according to the second aspect. Alternatively, the communication system includes the first communication apparatus according to the third aspect and the second communication apparatus according to the fourth aspect.

According to a thirteenth aspect, a computer-readable storage medium is provided, including a computer program or instructions. When the computer program or the instructions are run on a computer, the computer is enabled to perform the communication method according to any one of the possible implementations of the first aspect to the fourth aspect.

According to a fourteenth aspect, a computer program product is provided, including a computer program or instructions. When the computer program or the instructions are run on a computer, the computer is enabled to perform the communication method according to any one of the possible implementations of the first aspect to the fourth aspect.

## BRIEF DESCRIPTION OF DRAWINGS

FIG. 1 is a diagram of an architecture of a communication system according to an embodiment of this application;
FIG. 2 is a diagram of an architecture of a communication system applicable to a space-to-ground communication scenario according to an embodiment of this application;
FIG. 3 is a diagram of an architecture of a communication system applicable to an inter-satellite communication scenario according to an embodiment of this application;
FIG. 4 is a diagram of an architecture of a communication system applicable to a terminal-base station communication scenario according to an embodiment of this application;
FIG. 5 is a diagram of an architecture of a communication system applicable to an integrated access and backhaul IAB scenario according to an embodiment of this application;
FIG. 6 is a diagram of an architecture of a communication system applicable to a terminal communication scenario according to an embodiment of this application;
FIG. 7 is a schematic interaction flowchart 1 of a communication method according to an embodiment of this application;
FIG. 8 is a diagram 1 of a frame structure in a communication method according to an embodiment of this application;
FIG. 9 is a diagram 1 of a symbol structure in a communication method according to an embodiment of this application;
FIG. 10 is a diagram of a subcarrier structure in a communication method according to an embodiment of this application;
FIG. 11 is a diagram 1 of an unavailable resource in a communication method according to an embodiment of this application;
FIG. 12 is a schematic interaction flowchart 2 of a communication method according to an embodiment of this application;
FIG. 13 is a diagram 2 of a frame structure in a communication method according to an embodiment of this application;
FIG. 14 is a diagram 3 of a frame structure in a communication method according to an embodiment of this application;
FIG. 15 is a diagram 4 of a frame structure in a communication method according to an embodiment of this application;
FIG. 16 is a diagram of frame structures in which symbol boundaries are not aligned in a communication method according to an embodiment of this application;
FIG. 17 is a diagram 2 of a symbol structure in a communication method according to an embodiment of this application;

FIG. 18 is a diagram 3 of a symbol structure in a communication method according to an embodiment of this application;

FIG. 19 is a diagram 4 of a symbol structure in a communication method according to an embodiment of this application;

FIG. 20 is a diagram 5 of a symbol structure in a communication method according to an embodiment of this application;

FIG. 21 is a diagram 2 of an unavailable resource in a communication method according to an embodiment of this application;

FIG. 22 is a diagram 1 of a structure of a communication apparatus according to an embodiment of this application; and

FIG. 23 is a diagram 2 of a structure of a communication apparatus according to an embodiment of this application.

## DESCRIPTION OF EMBODIMENTS

For ease of understanding, the following first describes technical terms in embodiments of this application.

1. Basic time unit

In a new radio (new radio, NR) system, a basic time unit (also referred to as a used time) is a minimum time unit used to describe a time domain length, as shown in the following formula 1:

$$T_c = 1/(\Delta f_{max} \cdot N_f); (1)$$

As shown in the formula 1, $T_c$ is the basic time unit; $\Delta f_{max}$ is a maximum (max) subcarrier spacing SCS supported by NR, for example, 480 kilohertz (kHz); and $N_f$ is a maximum fast Fourier transform (fast Fourier transform, FFT) sampling number (FFT size max) supported by NR, for example, 4096. In this way, the basic time unit may be 0.509 nanosecond (nanosecond, ns).

2. Frame structure

In NR, each radio frame (frame) may include a plurality of slots (slots), for example, 10, 20, 40, 80, or 160. Each radio frame may include 10 subframes (subframes), and each subframe may include one or more slots, for example, 1, 2, 4, 8, or 16. Each slot may include 14 symbols (symbols) or 12 symbols. On this basis, a frame structure may be a related parameter used to describe a symbol in a frame, for example, including a subcarrier spacing, symbol duration, and cyclic prefix (cyclic prefix, CP) duration. In embodiments of this application, the cyclic prefix duration may also be referred to as a cyclic prefix length, a CP length, a cyclic shift code length, or the like. This is not limited.

NR may support a plurality of subcarrier spacings, for example, 15 kHz, 30 kHz, 60 kHz, 120 kHz, 240 kHz, 480 kHz, and 960 kHz. The subcarrier spacing may determine a length of a symbol or a symbol length in time domain. The symbol length may include the symbol duration and the CP duration. The symbol duration is also referred to as a useful symbol length. A CP is mainly used to resist inter-symbol interference and a multipath delay of a channel. The CP duration is also referred to as the cyclic shift code length. Therefore, in NR, different subcarrier spacings may correspond to different symbol lengths, to correspond to different useful symbol lengths and different cyclic shift code lengths.

Specifically, a configuration of the subcarrier spacing may be represented as $\mu$, and may be specifically shown in Table 1.

Table 1

| $\mu$ | $\Delta f = 2^{\mu} \cdot 15$ (kHz) | CP type |
|---|---|---|
| 0 | 15 | Normal (normal) CP |
| 1 | 30 | Normal CP |
| 2 | 60 | Normal/Extended (extended) CP |
| 3 | 120 | Normal CP |
| 4 | 240 | Normal CP |
| 5 | 480 | Normal CP |
| 6 | 960 | Normal CP |

A number of an orthogonal frequency division multiplexing (orthogonal frequency division multiplexing, OFDM) symbol in a time unit, for example, a subframe (subframe) may be represented as: $l \in 0, 1, \ldots, N_{slot}^{subframe,\mu} N_{symb}^{slot} - 1$, where $N_{slot}^{subframe,\mu}$ represents a quantity of slots *slots* included in one subframe *subframe* when the subcarrier spacing is $\mu$, $N_{symb}^{slot}$ represents a quantity of symbols *symbols* included in one slot *slot* when the subcarrier spacing is $\mu$, and a consecutive time domain signal $S_l^{(p,\mu)}(t)$ on an antenna $p$ may be represented as 2 shown in the following formula 1 to formula 4:

$$s_l^{(p,\mu)}(t) = \begin{cases} \bar{s}_l^{(p,\mu)}(t), & t_{\text{start},l}^{\mu} \le t < t_{\text{start},l}^{\mu} + T_{\text{symb},l}^{\mu}; \\ 0 & otherwise \end{cases} \quad (1)$$

$$\bar{s}_l^{(p,\mu)}(t) = \sum_{k=0}^{N_{\text{grid},x}^{\text{size},\mu} N_{\text{sc}}^{\text{RB}}-1} a_{k,l}^{(p,\mu)} e^{j2\pi\left(k+k_0^{\mu}-N_{\text{grid},x}^{\text{size},\mu} N_{\text{sc}}^{\text{RB}}/2\right)\Delta f\left(t-N_{\text{CP},l}^{\mu} T_{\text{c}} - t_{\text{start},l}^{\mu}\right)}; \quad (2)$$

$$k_0^{\mu} = \left(N_{\text{grid},x}^{\text{start},\mu} + N_{\text{grid},x}^{\text{size},\mu}/2\right) N_{\text{sc}}^{\text{RB}} - \left(N_{\text{grid},x}^{\text{start},\mu_0} + N_{\text{grid},x}^{\text{size},\mu_0}/2\right) N_{\text{sc}}^{\text{RB}} 2^{\mu_0-\mu}; \quad (3)$$

$$T_{\text{symb},l}^{\mu} = \left(N_{\text{u}}^{\mu} + N_{\text{CP},l}^{\mu}\right) T_{\text{c}}; \quad (4)$$

Herein, $t = 0$ may represent a start moment of a subframe, $t_{\text{start},l}^{\mu}$ represents a start moment of a symbol *l* when the subcarrier spacing is $\mu$, and $N_{\text{grid}}^{\text{size},\mu}$ may represent a carrier bandwidth of a subcarrier spacing configuration. $N_{\text{grid}}^{\text{start},\mu_0}$ may represent a frequency domain start location of a grid grid of a subcarrier spacing configuration $\mu_0$, $N_{\text{grid}}^{\text{size},\mu_0}$ may represent a frequency domain resource size of a resource grid grid of the subcarrier spacing configuration $\mu_0$, $N_{\text{grid}}^{\text{start},\mu}$ may represent a frequency domain start location of a resource grid grid of a subcarrier spacing configuration $\mu$, and $N_{\text{grid}}^{\text{size},\mu}$ may represent a frequency domain resource size of a grid grid of the subcarrier spacing configuration $\mu$. The subscript *x* represents a direction of a transmission link, for example, an uplink direction, a downlink direction, a sidelink direction, a sending direction, or a receiving direction. $N_{\text{sc}}^{\text{RB}}$ may represent a quantity of subcarriers (subcarriers) included in one resource block (resource block, RB), for example, 12 subcarriers. $\mu_0$ may represent a maximum value of $\mu$. $T_{\text{symb},l}^{\mu}$ may represent a symbol length, $N_{\text{u}}^{\mu}$ represents a useful symbol length by using a quantity of reference time units, $N_{\text{u}}^{\mu} \cdot T_{\text{c}}$ represents a useful symbol length by using physical duration, $N_{\text{CP},l}^{\mu}$ represents a cyclic shift code length by using a quantity of reference time units, and $N_{\text{CP},l}^{\mu} \cdot T_{\text{c}}$ represents a cyclic shift code length by using physical duration. *k* may represent a subcarrier identifier, and *l* may represent a symbol identifier. $a_{k,l}^{(p,\mu)}$ may represent a signal with a subcarrier spacing of $\mu$ on an antenna port *p* on a basic resource unit (*k, l*). $N_{\text{u}}^{\mu}$ and $N_{\text{CP},l}^{\mu}$ may be represented as the following formula 5 and formula 6:

$$N_u^{\mu} = 2048\kappa \cdot 2^{-\mu}; \quad (5)$$

$$N_{CP,l}^{\mu} = \begin{cases} 512\kappa \cdot 2^{-\mu} \\ 144\kappa \cdot 2^{-\mu} + 16\kappa; \quad (6) \\ 144\kappa \cdot 2^{-\mu} \end{cases}$$

Herein, $\kappa$ may be 64, and $N_{CP,l}^{\mu} = 512\kappa \cdot 2^{-\mu}$ may represent a cyclic shift code length of an extended CP. $N_{CP,l}^{\mu} = 144\kappa \cdot 2^{-\mu} + 16\kappa$ may represent a cyclic shift code length of a normal CP, and the normal CP may be a CP of a 1st symbol in a subframe. $N_{CP,l}^{\mu} = 144\kappa \cdot 2^{-\mu}$ may represent a cyclic shift code length of a normal CP, and the normal CP may be a CP of a non-1st symbol in a subframe.

It may be understood that, for frame structures with a same subcarrier spacing, if symbol lengths of the frame structures are fixed, cyclic shift code lengths of the frame structures are basically fixed. Consequently, the symbol length and the cyclic shift code length are not flexible enough, differentiated communication requirements cannot be met, and communication performance is affected.

For example, in a scenario in which a pilot or a reference signal such as a channel state information-reference signal (channel state information-reference signal, CSI-RS) or a channel sounding reference signal (sounding reference signal, SRS) is sent, or measurement information such as channel state information (channel state information, CSI) is sent, a symbol length required by the reference signal or the measurement information is usually short. In this case, because the symbol length is fixed, a transmitter cannot adjust the symbol length to a shorter value. Consequently, a time domain resource occupied by the signal is large, overheads are high, a delay is long, and communication performance is affected. For another example, in a scenario in which impact of a multipath delay is small, a cyclic shift code length required by a signal is usually short. In this case, because the cyclic shift code length is fixed, a transmitter cannot adjust the cyclic shift code length to a smaller value. Consequently, CP overheads are high, and communication performance is affected.

It may be further understood that an FFT sampling number needs to be greater than or equal to a quantity of subcarriers, to meet the Nyquist Theorem. An FFT sampling number supported by NR progressively increases by an integral power of 2, for example, 512, 1024, 2048, and 4096. However, this progressive increase manner may cause a large difference between different FFT sampling numbers, and there is a redundant sampling point. For example, if 520 subcarriers are configured, an FFT sampling number of 512 is unavailable, and a minimum FFT sampling number of 1024 is used. In this case, there are 504 redundant sampling points. Consequently, signal processing complexity is increased, and a processing delay is increased. The sampling number may also be referred to as a sampling point, and both may be replaced with each other. This is not limited in embodiments of this application.

In conclusion, in view of the foregoing technical problem, embodiments of this application provide the following technical solutions, to flexibly adjust a frame structure, so as to meet differentiated communication requirements and avoid impact on communication performance.

The following describes the technical solutions of this application with reference to the accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system, a 5th generation (5th generation, 5G) mobile communication system such as an NR system, and a communication system evolved after 5G, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, or may not include all devices, components, modules, and the like discussed with reference to the accompanying drawings. In addition, a combination of these solutions may alternatively be used.

In addition, in embodiments of this application, terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in this application may represent an "or" relationship.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

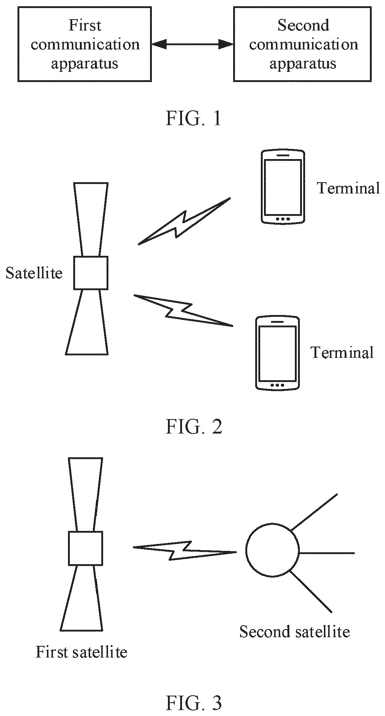

For ease of understanding embodiments of this application, a communication system shown in FIG. 1 is first used as an example to describe in detail a communication system to which embodiments of this application are applicable. For example, FIG. 1 is a diagram of an architecture of a communication system to which a communication method according to an embodiment of this application is applicable.

As shown in FIG. 1, the communication system mainly includes a first communication apparatus and a second communication apparatus, and is applicable to various communication scenarios.

As shown in FIG. 2, the communication system is applicable to a space-to-ground communication scenario. The first communication apparatus may be a terminal, and the second communication apparatus may be a satellite.

The terminal may be a terminal having a transceiver function, or a chip or a chip system that may be disposed in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant computer (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a terminal in integrated communication and sensing, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal in this application may alternatively be a vehicle-mounted module, a vehicle-mounted subassembly, a vehicle-mounted component, a vehicle-mounted chip, or a vehicle-mounted unit that is built in a vehicle as one or more components or units.

The satellite may be a non-terrestrial base station or a non-terrestrial device, for example, an uncrewed aerial vehicle, a hot air balloon, a low earth orbit satellite, a medium earth orbit satellite, or a high earth orbit satellite. A specific form is not limited.

As shown in FIG. 3, the communication system is applicable to an inter-satellite communication scenario. The first communication apparatus may be a first satellite, and the second communication apparatus may be a second satellite.

The first satellite may include a first acquisition, pointing, and tracking (acquisition, pointing, and tracking, APT) system and a first communication system. The first APT system is mainly used by the first satellite to perform functions such as acquisition, pointing, and tracking, for example, determining a direction of arrival of an incident signal, and adjusting a transmit wave to point at a receiving direction, to reduce impact of channel attenuation and interference, and ensure security and a transmission rate of data transmission. The first APT system may be implemented by using an optical system, or may be implemented by using a microwave band system. This is not limited. The first communication system is mainly used for communication between the first satellite and another satellite, for example, the second satellite.

The second satellite may include a second APT system and a second communication system. A specific implementation principle is similar to that of the first satellite. For understanding, refer to the implementation principle of the first satellite. Details are not described again.

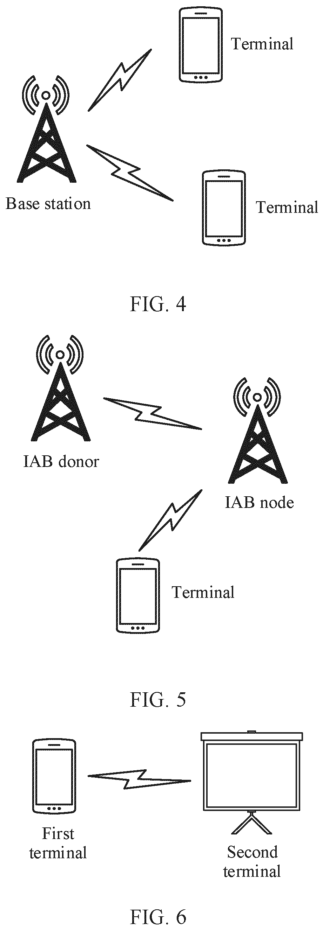

As shown in FIG. 4, the communication system is applicable to a scenario of communication between a terminal and a network device. The first communication apparatus may be a terminal, and the second communication apparatus may be a network device.

For the terminal, refer to the foregoing related descriptions. Details are not described again.

The network device may be an access network device, or may be referred to as a radio access network (radio access network, RAN) device or a base station. The RAN device may be a device that provides access for the terminal. For example, the RAN device may include a gNB in 5G, for example, an NR system, or one antenna panel or a group of antenna panels (including a plurality of antenna panels) of a base station in 5G, or an active antenna unit (active antenna unit, AAU), or may be a network node serving as a gNB, a transmission and reception point (transmission and reception point, TRP), a transmission point (transmission point, TP), or a transmission measurement function (transmission measurement function, TMF), for example, a baseband unit (building base band unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components of one rack. Alternatively, the RAN device may include a central unit (central unit, CU) or a distributed unit (distributed unit, DU). Alternatively, the network device may be an RSU having a base station function, a wired access gateway, or a 5G core network element. Alternatively, the RAN device may include an access point (access point, AP) in a Wi-Fi system, a wireless relay node, a wireless backhaul node, macro base stations in various forms, a micro base station (also referred to as a small cell), a relay station, an access point, a wearable device, a vehicle-mounted device, and the like. Alternatively, the RAN device may include a next-generation mobile communication system, for example, a 6G access network device like a 6G base station. Alternatively, in the next-generation mobile communication system, the network device may be named in another manner, which falls within the protection scope of embodiments of this application. This is not limited in this application.

As shown in FIG. 5, the communication system is applicable to a communication scenario of integrated access and backhaul (integrated access and backhaul, IAB). The first communication apparatus may be a terminal, and the second communication apparatus may be an IAB node (IAB node), or the first communication apparatus may be an IAB node, and the second communication apparatus may be an IAB donor (IAB Donor). A link between the IAB node and the IAB node is a backhaul link (backhaul link), and a link between the terminal and the IAB node is an access link (access link).

As shown in FIG. 6, a communication system is applicable to a scenario of communication between terminals, for example, the internet of things or the internet of vehicles. The first communication apparatus may be a first terminal, and the second communication apparatus may be a second terminal.

In the communication system in embodiments of this application, different frame structures may be configured for the communication system based on different communication requirements, for example, a first cyclic shift code length and a second cyclic shift code length that are different, and/or a first useful symbol length and a second useful symbol length that are different, to flexibly adjust the frame structure, so as to meet differentiated communication requirements.

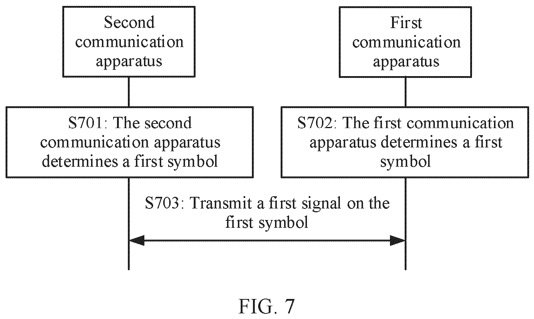

For ease of understanding, the following specifically describes a procedure of interaction between network elements/devices in the foregoing communication system with reference to FIG. 7 to FIG. 16 by using method embodiments. The communication method provided in embodiments of this application is applicable to the foregoing communication system, and is specifically applied to various scenarios mentioned in the foregoing communication system. The following provides specific descriptions.

FIG. 7 is a schematic flowchart 1 of a communication method according to an embodiment of this application. In the method shown in FIG. 7, a symbol used for signal transmission between a first communication apparatus and a second communication apparatus, for example, a first symbol, may be a symbol configured for a first frame structure or a second frame structure. When a symbol length of the first frame structure is the same as a symbol length of the second frame structure, a subcarrier spacing of the first frame structure is different from a subcarrier spacing of the second frame structure, so that a cyclic shift code length of the first frame structure is different from a cyclic shift code length of the second frame structure, to flexibly adjust the frame structure, so as to meet differentiated communication requirements.

Specifically, as shown in FIG. 7, a procedure of the communication method is as follows:

S701: The second communication apparatus determines the first symbol.

The first symbol may be the symbol configured for the first frame structure or the second frame structure, for example, a symbol configured for the first frame structure. The first frame structure may be different from the second frame structure.

The first frame structure may include the subcarrier spacing of the first frame structure and the symbol length of the first frame structure.

The subcarrier spacing of the first frame structure may be a subcarrier spacing supported by a system.

Optionally, the subcarrier spacing supported by the system may be represented as $\Delta f$ that satisfies the following relationship: $\Delta f = 2^{\mu 1} \cdot 3^{\mu 2} \cdot 5^{\mu 3}$, where $\mu 1$, $\mu 2$, and $\mu 3$ may be a subcarrier spacing configuration supported by the system, and values of $\mu 1$, $\mu 2$, and P3 may be integers. It can be learned that, compared with that in NR, a subcarrier spacing configuration including three parameters may be more flexible, so that the subcarrier spacing supported by the system may also be more flexible, and more subcarrier spacings are supported.

For example, the subcarrier spacing supported by the system may include 10 kHz, 12 kHz, 15 kHz, 20 kHz, 24 kHz, 30 kHz, 40 kHz, 48 kHz, 60 kHz, 80 kHz, 92 kHz, 120 kHz, 160 kHz, 184 kHz, 240 kHz, 320 kHz, and 386 kHz.

The symbol length of the first frame structure may include a first cyclic shift code length and a first useful symbol length.

Optionally, the first cyclic shift code length may be related to a subcarrier spacing configuration of the first frame structure. For example, the first cyclic shift code length may be represented as $N_{\text{CP1},l}^{\mu}$, and $N_{\text{CP1},l}^{\mu}$ may satisfy the following relationship: $N_{\text{CP1},l}^{\mu} = 144\kappa \cdot 2^{-\mu 1} \cdot 3^{-\mu 2} \cdot 5^{-\mu 3}$. Herein, $\kappa$ may be a value supported by NR, or may be any possible value. This is not limited. Similar understanding may also be provided for $\kappa$ mentioned below. Details are not described again. The first useful symbol length may be unrelated to the subcarrier spacing configuration of the first frame structure. In this case, the first useful symbol length may be a difference between the symbol length of the first frame structure and the first cyclic shift code length.

Alternatively, optionally, the first useful symbol length may be related to a subcarrier spacing configuration of the first frame structure. In this case, the first useful symbol length may be $1/\Delta f$, where $\Delta f$ is the subcarrier spacing. The first cyclic shift code length may be unrelated to the subcarrier spacing configuration of the first frame structure. In this case, the first cyclic shift code length may be a difference between the symbol length of the first frame structure and the first cyclic shift code length.

The first cyclic shift code length and/or the first useful symbol length may be represented by using a quantity of reference time units. The reference time unit may be used to define a time domain length, or a period of time. In different cases, time domain lengths defined by using the reference time unit may be the same or different. Details are described below.

Manner 1: Different subcarrier spacings may correspond to a same reference time unit.

For example, both a first subcarrier spacing and a second subcarrier spacing correspond to a same reference time unit. A first reference time unit is used as an example. A first cyclic shift code length and/or a second cyclic shift code length that correspond/corresponds to the first subcarrier spacing may be represented by using a quantity of reference time units. In other words, these time domain lengths may be represented by using a unified time domain scale, that is, a quantity of reference time units, so that a device performs time domain-related processing.

Optionally, the reference time unit may be determined based on a subcarrier spacing and a discrete Fourier transform size. For example, there is a correlation relationship between the reference time unit, a maximum subcarrier spacing, and a maximum discrete Fourier transform (discrete Fourier transform, DFT) sampling number, for example, relationships shown in the following formula 6 to formula 9 are satisfied:

$$T_{s-base} = 1/(DFT\ size\ max \cdot \Delta fmax);\ (6)$$

$$DFT\ size\ max = 2^{d1max} \cdot 3^{d2max} \cdot 5^{d3max};\ (7)$$

$$DFT\ size = 2^{d1} \cdot 3^{d2} \cdot 5^{d3};\ (8)$$

$$\Delta fmax = 2^{\mu1max} \cdot 3^{\mu2max} \cdot 5^{\mu3max};\ (9)$$

Herein, $T_{s-base}$ may be a basic time unit, and the reference time unit may be an integer multiple of the basic time unit, for example, $q$ multiples, or any other possible multiple, for example, 32 or 128. Alternatively, the reference time unit may be the basic time unit. This is not limited. In this case, it may also be understood as that different subcarrier spacings may correspond to a same basic time unit. DFT size (*DFT size*) may be referred to as a DFT sampling number, a DFT sampling point, or a DFT sampling number supported by a system, $d1$, $d2$, and $d3$ may be a DFT configuration, and $d1$, $d2$, and $d3$ may be integers. It can be learned that, compared with that in NR, a DFT configuration including three parameters may be more flexible, so that the DFT sampling number supported by the system may also be more flexible, and more DFT sampling numbers are supported.

For example, the DFT sampling number supported by the system may include $2^5$=64, $3^4$=81, $5^3$=125, $3^3$*5=135, 2*3*5²=150, 2*3⁴=162, 2²*3²*5=180, 2⁶*3³=192, 2*5²=225, 2*5³=250, 2*3³*5=270, 3*5³=275, 2²*3*5²=300, 2⁶*5=320, 2⁷*3=384, 2*3²*5²=450, 512, 2*3*5³=625, 2⁷*5=640, 3³*5²=675, 2⁸*3=768, 2²*3²*5²=900, 1024, 2*3³*5²=1350, 2048, 4*3³*5²=2700, and 4096.

*DFT size max* may be the maximum DFT sampling number, or a maximum DFT sampling number supported by a system, $d1max$ is a maximum value of $d1$, $d2max$ is a maximum value of $d2$, and $d3max$ is a maximum value of $d3$. $\Delta fmax$ is the maximum subcarrier spacing, or a maximum subcarrier spacing supported by the system, $\mu1max$ is a maximum value of $\mu1$, $\mu2max$ is a maximum value of $\mu2$, and $\mu3max$ is a maximum value of $\mu3$.

It can be learned that both the DFT sampling number and the subcarrier spacing are maximum values supported by the system, and the basic time unit may be a minimum time unit supported by the system. For example, $T_{s-base}$=1/((2¹²*3³*5²)*(2⁷*3*5)) second (s). In this case, the reference time unit including the basic time unit can more accurately represent an absolute time in time domain.

Manner 2: Different subcarrier spacings may correspond to different reference time units.

For example, a reference time unit of a first subcarrier spacing may be a first reference time unit in M reference time units, and a reference time unit of a second subcarrier spacing may be a second reference time unit in the M reference time units. Values of any two of the M reference time units are different, and M is an integer greater than 1. For example, the first reference time unit is an ith reference time unit in the M reference time units, where i is any integer in 1 to M. In this case, a first cyclic shift code length and/or a first useful symbol length that correspond/corresponds to the first subcarrier spacing may be represented by using a quantity of $i^{th}$ reference time units.

In other words, when the cyclic shift code length and/or the useful symbol length are/is represented by using different reference time units, quantities of these reference time units may be different. For example, the cyclic shift code length may be represented by 10 reference time units A. In this case, if the reference time units A are twice reference time units B, the cyclic shift code length may also be represented by 20 reference time units B. Therefore, for different cyclic shift code lengths and/or useful symbol lengths, reference time units of different scales may be used for representation, to ensure that a quantity of reference time units is proper, so that a device performs time domain-related processing.

Optionally, the M reference time units correspond to M subcarrier spacing sets, and one subcarrier spacing set may correspond to one reference time unit. The subcarrier spacing of the first frame structure may fall within an $i^{th}$ subcarrier spacing set in the M subcarrier spacing sets, and at least a part of subcarrier spacings in any two of the M subcarrier spacing sets may be different. The $i^{th}$ subcarrier spacing set may be represented as the following formula 10:

$$\Delta fi = 2^{\mu i1} \cdot 3^{\mu i2} \cdot 5^{\mu i3}; (10)$$

Herein, $\Delta fi$ may be the $i^{th}$ subcarrier spacing set, $\mu i1$, $\mu i2$, and $\mu i3$ may be a subcarrier spacing configuration of the $i^{th}$ subcarrier spacing set, and $\mu i1$, $\mu i2$, and $\mu i3$ may be integers.

Specifically, a part of subcarrier spacings in carrier spacings supported by the system are defined as basic subcarrier spacings, and the M subcarrier spacing sets may be obtained through classification based on the basic subcarrier spacing. For example, the basic subcarrier spacing may include 10 kHz, 12 kHz, and 15 kHz. In this case, a first subcarrier spacing set includes a subcarrier spacing of 10 kHz and a subcarrier spacing of 10 kHz multiplied by a power of 2, for example, may include 20 kHz, 40 kHz, 80 kHz, 160 kHz, and 320 kHz. A second subcarrier spacing set includes a subcarrier spacing of 12 kHz and a subcarrier spacing of 12 kHz multiplied by a power of 2, for example, may include 12 kHz, 24 kHz, 48 kHz, 96 kHz, 192 kHz, and 384 kHz. A third subcarrier spacing set includes a subcarrier spacing of 15 kHz and a subcarrier spacing of 15 kHz multiplied by a power of 2, for example, may include 15 kHz, 30 kHz, 60 kHz, 120 kHz, and 240 kHz. In this case, the three basic subcarrier spacings are defined, and more other subcarrier spacings may be represented and indicated by using the basic subcarrier spacing. In addition, for the three basic subcarrier spacings, reference alignment may be performed on lengths of symbols in different subcarrier spacing values. When indicating the subcarrier spacings or determining locations of symbols of aligned subcarrier spacings, a network device may use different indication manners based on different basic subcarrier spacings, to reduce signaling overheads and improve communication performance while meeting flexible configuration.

Alternatively, the M subcarrier spacing sets may be obtained through segmentation based on an interval, and the interval may be an interval between a minimum subcarrier spacing supported by a system and a maximum subcarrier spacing supported by the system. For example, a first subcarrier spacing set includes a subcarrier spacing falling within [10 kHz, 100 kHz), a second subcarrier spacing set includes a subcarrier spacing falling within [100 kHz, 200 kHz), a third subcarrier spacing set includes a subcarrier spacing falling within [100 kHz, 300 kHz), and a third subcarrier spacing set includes a subcarrier spacing falling within [300 kHz, 396 kHz]. This is not limited. In this case, different subcarrier spacings are classified into different sets. When the basic time unit or the reference time unit is defined, sizes of different time units may be defined based on different subcarrier spacing sets, to accurately represent an absolute time in time domain. When a time domain offset is indicated by using the basic time unit, the network device may use, based on different subcarrier spacings, different basic time units for indication, to reduce signaling overheads and improve communication performance while meeting flexible configuration.

Optionally, the M reference time units correspond to M DFT sampling number sets, and one DFT sampling number set may correspond to one reference time unit. A DFT sampling number corresponding to the first frame structure may fall within an $i^{th}$ DFT sampling number set in the M DFT sampling number sets, and at least a part of DFT sampling numbers in any two of the M DFT sampling number sets may be different. The $i^{th}$ DFT sampling number set may be represented as the following formula 11:

$$DFT\ size\ i = 2^{di1} \cdot 3^{di2} \cdot 5^{di3}; (11)$$

Herein, *DFT size i* may be the $i^{th}$ DFT sampling number set, $\mu i1$, $\mu i2$, and $\mu i3$ may be the subcarrier spacing configuration of the $i^{th}$ subcarrier spacing set, *di1*, *di2*, and *di3* may be a subcarrier spacing configuration of the $i^{th}$ subcarrier spacing set, and *di1*, *di2*, and *di3* may be integers.

Specifically, it is stipulated that a part of DFT sampling numbers in DFT sampling numbers supported by the system are basic DFT sampling numbers, and the M DFT sampling number sets may be obtained through classification based on the basic DFT sampling number. For example, the DFT sampling number may include $2^5=64$, $3^4=81$, $5^3=125$, $2*3^4=162$, $2*5^3=250$, $3*5^3=275$, and $2*3*5^3=625$. In this case, a first DFT sampling number set includes a DFT sampling number of 64 multiplied by a power of 2, a second DFT sampling number set includes a DFT sampling number of 81 multiplied by a power of 3, a third DFT sampling number set includes a DFT sampling number of 125 multiplied by a power of 5, a fourth DFT sampling number set includes a DFT sampling number of 162 multiplied by a power of 2, a fifth DFT sampling number set includes a DFT sampling number of 250 multiplied by a power of 2, a sixth DFT sampling number set includes a DFT sampling number of 275 multiplied by a power of 3, and a fifth DFT sampling number set includes a DFT sampling number of 625 multiplied by a power of 2 and/or a power of 3.

Alternatively, the M DFT sampling number sets may be obtained through segmentation based on an interval, and the interval may be an interval between a minimum DFT sampling number supported by a system and a maximum DFT sampling number supported by the system. For example, a first DFT sampling number set includes a DFT sampling number falling within [64, 1000), a second DFT sampling number set includes a DFT sampling number falling within [1000, 2000), a third DFT sampling number set includes a DFT sampling number falling within [2000, 3000), a fourth DFT sampling number set includes a DFT sampling number falling within [3000, 4000), and a fifth DFT sampling number set includes a DFT sampling number falling within [4000, 4096]. This is not limited. It can be learned that different DFT sampling numbers are classified into different sets. When the basic time unit or the reference time unit is defined, sizes of different time units may be defined based on different DFT sampling number sets, to accurately represent an absolute time in time domain. When a time domain offset is indicated by using the basic time unit, the network device may use, based on different DFT sampling numbers, different basic time units for indication, to reduce signaling overheads and improve communication performance while meeting flexible configuration.

Optionally, the $i^{th}$ reference time unit may be related to a maximum subcarrier spacing in the $i^{th}$ subcarrier spacing set; and/or the $i^{th}$ reference time unit may be related to a maximum DFT sampling number in the $i^{th}$ DFT sampling number set.

For example, the $i^{th}$ reference time unit satisfies relationships shown in the following formula 12 to formula 14:

$$T_{s-base\ i} = 1/(DFT\ size\ max\ i \cdot \Delta fmax\ i);\ (12)$$

$$DFT\ size\ \max i = 2^{di1max} \cdot 3^{di2max} \cdot 5^{di3max};\ (13)$$

$$\Delta fmax\ i = 2^{\mu i1max} \cdot 3^{\mu i2max} \cdot 5^{\mu i3max};\ (14)$$

Herein, $T_{s-base\ i}$ may be an $i^{th}$ basic time unit, and the $i^{th}$ reference time unit may be an integer multiple of the $i^{th}$ basic time unit. For details, refer to the foregoing related descriptions. Details are not described again. *DFT size max i* may be the maximum DFT sampling number in the $i^{th}$ DFT sampling number set, $\Delta$*fmax i* may be the maximum subcarrier spacing in the $i^{th}$ subcarrier spacing set, *di1max* may be a maximum value of *di*1, *di2max* may be a maximum value of *di*2, *di3max* may be a maximum value of *di*3, $\mu i1$*max* may be a maximum value of $\mu i$1, *pi2max* may be a maximum value of $\mu i$2, and $\mu i3$*max* may be a maximum value of $\mu i$3. It can be learned that when the $i^{th}$ basic time unit is defined, the basic time unit may be defined based on the maximum subcarrier spacing and the maximum DFT sampling number. In other words, different basic time units may correspond to different maximum subcarrier spacings and different maximum DFT sampling numbers, so that a plurality of basic time units are flexibly defined based on the subcarrier spacing and the DFT sampling number, and an absolute time in time domain is accurately represented. In communication, an appropriate basic time unit may be used based on a requirement, to reduce signaling overheads and improve communication performance.

For another example, the $i^{th}$ reference time unit satisfies relationships shown in the following formula 15 to formula 17:

$$T_{s-base\ i} = 1/(DFT\ size\ max \cdot \Delta fmax\ i);\ (15)$$

$$DFT\ size\ max = 2^{d1max} \cdot 3^{d2max} \cdot 5^{d3max};\ (16)$$

$$\Delta fmax\ i = 2^{\mu i1max} \cdot 3^{\mu i2max} \cdot 5^{\mu i3max};\ (17)$$

Herein, $T_{s-base\ i}$ is an $i^{th}$ basic time unit, and the $i^{th}$ reference time unit may be an integer multiple of the $i^{th}$ basic time unit. For details, refer to the foregoing related descriptions. Details are not described again. *DFT size max* may be the maximum DFT sampling number. For details, refer to the foregoing related descriptions. Details are not described again. $\Delta$*fmax i* may be the maximum subcarrier spacing in the $i^{th}$ subcarrier spacing set. For details, refer to the foregoing related descriptions. Details are not described again. It can be learned that when the $i^{th}$ basic time unit is defined, the basic time unit may be defined based on the maximum subcarrier spacing. In other words, different basic time units may correspond to different maximum subcarrier spacings and a same maximum DFT sampling rate, so that a plurality of basic time units are flexibly defined based on the subcarrier spacing, and an absolute time in time domain is accurately represented. In communication, an appropriate basic time unit may be used based on a requirement, to reduce signaling overheads and improve communication performance.

For still another example, the ith reference time unit satisfies relationships shown in the following formula 18 to formula 20:

$$T_{s-base\,i} = 1/(DFT\ size\ max\ i \cdot \Delta fmax);\ (18)$$

$$DFT\ size\ \max i = 2^{di1max} \cdot 3^{di2max} \cdot 5^{di3max};\ (19)$$

$$\Delta fmax = 2^{\mu 1max} \cdot 3^{\mu 2max} \cdot 5^{\mu 3max};\ (20)$$

Herein, $T_{s-base\,i}$ is an ith basic time unit, and the ith reference time unit is an integer multiple of the ith basic time unit. For details, refer to the foregoing related descriptions. Details are not described again. *DFT size max i* is the maximum DFT sampling number in the ith DFT sampling number set. For details, refer to the foregoing related descriptions. Details are not described again. *Δfmax* is the maximum subcarrier spacing. For details, refer to the foregoing related descriptions. Details are not described again. It can be learned that when the ith basic time unit is defined, the basic time unit may be defined based on the maximum DFT sampling number. In other words, different basic time units may correspond to different maximum DFT sampling numbers and a same maximum subcarrier spacing, so that a plurality of basic time units are flexibly defined based on the DFT sampling number, and an absolute time in time domain is accurately represented. In communication, an appropriate basic time unit may be used based on a requirement, to reduce signaling overheads and improve communication performance.

It can be learned that the ith basic time unit may be a minimum time unit for the ith DFT sampling number set and/or the ith subcarrier spacing set. In this way, the ith reference time unit including the ith basic time unit can more accurately represent an absolute time in time domain.

It may be understood that, a quantity of reference time units corresponding to a subcarrier spacing set and/or a DFT sampling number set within which the subcarrier spacing of the first frame structure falls may be used to represent time domain information, for example, the first cyclic shift code length and/or the first useful symbol length, to ensure that a quantity of reference time units used to represent the time domain information is proper.

Manner 3: The first cyclic shift code length and/or a second cyclic shift code length may alternatively be represented by using physical duration, for example, nanosecond (ns) or microsecond (μs). This is not limited. The second frame structure may include the subcarrier spacing of the second frame structure and the symbol length of the second frame structure.

The subcarrier spacing of the second frame structure may alternatively be a subcarrier spacing supported by a system. For a specific implementation, refer to the foregoing related descriptions. Details are not described again. The subcarrier spacing of the second frame structure may be different from the subcarrier spacing of the first frame structure. In other words, a subcarrier spacing configuration of the second frame structure may be different from the subcarrier spacing configuration of the first frame structure. For example, the subcarrier spacing of the first frame structure is 20 kHz, and the subcarrier spacing of the second frame structure is 15 kHz; or the subcarrier spacing of the first frame structure is 40 kHz, and the subcarrier spacing of the second frame structure is 30 kHz. This is not limited.

When the subcarrier spacings are different, the symbol length of the second frame structure may be the same as the symbol length of the first frame structure. The symbol length of the second frame structure may include a second cyclic shift code length and a second useful symbol length.

Optionally, the second cyclic shift code length may be related to the subcarrier spacing configuration of the second frame structure. For example, the second cyclic shift code length may be represented as $N_{CP2,l}^{\mu}$, and $N_{CP2,l}^{\mu}$ may satisfy the following relationship: $N_{CP2,l}^{\mu} = 144\kappa \cdot 2^{-\mu 1} \cdot 3^{-\mu 2} \cdot 5^{-\mu 3}$, or an NR design may be used for $N_{CP2,l}^{\mu}$. For details, refer to the foregoing related descriptions. Details are not described again. In this case, when the subcarrier spacing of the first frame structure is different from the subcarrier spacing of the second frame structure, the second cyclic shift code length is different from the first cyclic shift code length.

Optionally, the second useful symbol length may be related to the subcarrier spacing configuration of the second frame structure. For example, the second useful symbol length may be represented as $N_{u2}^{\mu}$, and $N_{u2}^{\mu}$ may satisfy the

following relationship: $N_{u2}^{\mu} = 2048\kappa \cdot 2^{-\mu 1} \cdot 3^{-\mu 2} \cdot 5^{-\mu 3}$, or an NR design may be used for N 2 . For details, refer to the foregoing related descriptions. Details are not described again. In this case, the second useful symbol length may be different from the first useful symbol length. In this case, when the symbol length of the first frame structure is the same as the symbol length of the second frame structure, the second useful symbol length is also different from the first useful symbol length.

It may be understood that both the second cyclic shift code length and the second useful symbol length are related to the subcarrier spacing configuration of the second frame structure. Therefore, it may also be considered as that the second cyclic shift code length is related to the second useful symbol length. When the second cyclic shift code length changes, the second useful symbol length may also change correspondingly, for example, change equi-proportionally. Alternatively, when the second useful symbol length changes, the second cyclic shift code length may also change correspondingly, for example, change equi-proportionally.

Manner 4: A second cyclic shift code length and/or a second useful symbol length may also be represented by using a quantity of reference time units. For a specific implementation, refer to the related descriptions of Manner 1. Details are not described again.

Manner 5: A second cyclic shift code length and/or a second useful symbol length may alternatively be represented by using a quantity of ith reference time units in M reference time units, that is, represented by using the reference time unit that is the same as that of the first cyclic shift code length and/or the first useful symbol length. For a specific implementation, refer to the related descriptions of Manner 2. Details are not described again.

Manner 6: The first cyclic shift code length and/or the second cyclic shift code length may alternatively be represented by using physical duration. This is not limited.

It may be understood that, it can be learned from the foregoing related descriptions of the first frame structure and the second frame structure that, when a symbol length remains unchanged, that is, a sum of a cyclic shift code length and a useful symbol length remains unchanged, the second communication apparatus may configure different subcarrier spacings, to flexibly allocate a relative length between the cyclic shift code length and the useful symbol length, for example, increase the subcarrier spacing, reduce the cyclic shift code length, and increase the useful symbol length, or reduce the subcarrier spacing, increase the cyclic shift code length, and reduce the useful symbol length, so as to flexibly configure a frame structure. The following describes a configuration principle in detail.

In this embodiment of this application, the second communication apparatus may select, based on a current communication requirement, for example, a current communication environment or a location of the first communication apparatus, a target frame structure suitable for the current communication requirement from all frame structures (including the first frame structure and the second frame structure) supported by the second communication apparatus, for example, the first frame structure or any other possible frame structure. This is not limited.

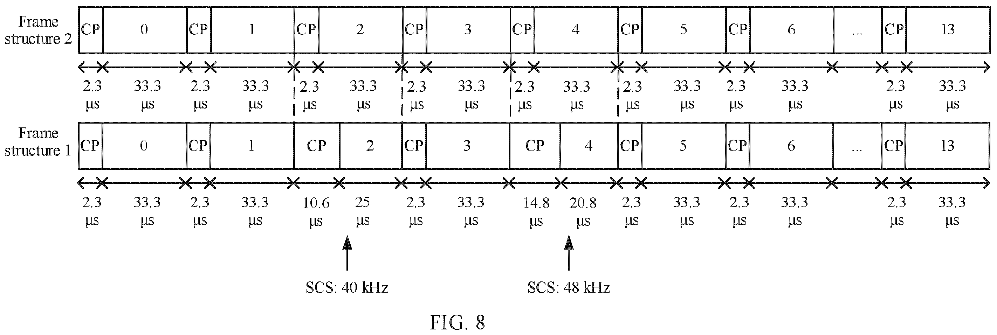

For example, as shown in FIG. 8, when an environment delay requirement is low, a shorter cyclic shift code is required. Therefore, a frame structure with a short cyclic shift code may be selected, for example, a frame structure with a subcarrier spacing of 40 kHz. A symbol of the frame structure may be a symbol 2 of a frame structure 1 in FIG. 8. In this case, a useful symbol length may be 25 μs, and the cyclic shift code length may be approximately 10.6 μs.

When an environment delay requirement is high, a longer cyclic shift code is required. Therefore, a frame structure with a long cyclic shift code may be selected, for example, a frame structure with a subcarrier spacing of 48 kHz. A symbol of the frame structure may be a symbol 4 of the frame structure 1 in FIG. 8. In this case, a useful symbol length may be 20.8 μs, and the cyclic shift code length may be approximately 14.8 μs.

It may be understood that, in FIG. 8, a subcarrier spacing of a symbol other than the symbol 2 and the symbol 4 of the frame structure 1 may be 30 kHz, or may be another subcarrier spacing. This is not limited. In addition, the frame structure shown in FIG. 8 is an example. For example, more subcarrier spacings such as 10 kHz, 20 kHz, 30 kHz, 45 kHz, 60 kHz, 90 kHz and 100 kHz may be configured in one time unit or one frame structure.

When a time domain location of the symbol of the second frame structure is determined, the second frame structure may serve as a reference frame structure, so that the second communication apparatus quickly determines, based on the second frame structure, the first symbol corresponding to the first frame structure. For example, because the symbol length of the second frame structure is the same as the symbol length of the first frame structure, a symbol boundary of the second frame structure may be aligned with a symbol boundary of the first frame structure. The second communication apparatus may determine a structure of the first symbol, for example, a time domain location of the first symbol, based on alignment between the symbol boundary of the second frame structure and the symbol boundary of the first frame structure. Optionally, when the symbol length of the second frame structure is determined, the second communication apparatus may further determine the symbol length of the first symbol based on the symbol length of the second frame structure.

The second communication apparatus may preconfigure a correspondence between frame structures whose symbol boundaries are aligned. The second communication apparatus may determine, based on the correspondence, a specific frame structure (for example, the second frame structure) whose symbol boundary is aligned with that of the target frame structure (for example, the first frame structure) selected by the second communication apparatus.

For example, an implementation form of the correspondence may be shown in the following conditions.

Condition 1: A symbol boundary of a frame structure of 15 kHz≤SCS<30 kHz is aligned with a symbol boundary of a frame structure of 15 kHz, or a symbol length of a frame structure of 15 kHz≤SCS<30 kHz is the same as a symbol length of a frame structure of 15 kHz, for example, SCS=20 kHz or 24 kHz. Optionally, a symbol boundary of a frame structure of SCS=30 kHz may be aligned with the symbol boundary of the frame structure of 15 kHz.

Condition 2: A symbol boundary of a frame structure of 30 kHz≤SCS<60 kHz is aligned with a symbol boundary of a frame structure of 30 kHz, or a symbol length of a frame structure of 30 kHz≤SCS<60 kHz is the same as a symbol length of a frame structure of 30 kHz, for example, SCS=40 kHz or 48 kHz. Optionally, a symbol boundary of a frame structure of SCS=60 kHz may be aligned with the symbol boundary of the frame structure of 30 kHz.

Condition 3: A symbol boundary of a frame structure of 60 kHz≤CS<120 kHz is aligned with a symbol boundary of a frame structure of 60 kHz, or a symbol length of a frame structure of 60 kHz≤CS<120 kHz is the same as a symbol length of a frame structure of 60 kHz, for example, SCS=80 kHz or 100 kHz. Optionally, a symbol boundary of a frame structure of SCS=120 kHz may be aligned with the symbol boundary of the frame structure of 60 kHz. The rest may be deduced by analogy, and details are not described again.

For another example, an implementation form of the correspondence may be shown in at least one row in Table 2. Each row in Table 2 may include indexes of different SCSs and correspondences between different SCSs.

Table 2

| index1 | SCS 1 (kHz) | index2 | SCS 2 (kHz) | index3 | SCS 3 (kHz) |
| --- | --- | --- | --- | --- | --- |
| 0 | 15 | 0 | 20 | 0 | 24 |
| 1 | 30 | 1 | 40 | 1 | 48 |
| 2 | 60 | 2 | 80 | 2 | 100 |
| ... | ... | ... | ... | ... | ... |

As shown in Table 2, the index1 represents an index of the SCS 1, and the SCS 1 may include 15 kHz, 30 kHz, 60 kHz, and the like. The index2 represents an index of the SCS 2, and the SCS 2 may include 20 kHz, 40 kHz, 80 kHz, and the like. The index3 represents an index of the SCS 3, and the SCS 3 may include 24 kHz, 48 kHz, 100 kHz, and the like.

If different SCSs have a same index, symbol boundaries of frame structures of these SCSs are aligned, or symbol lengths of frame structures of these SCSs are the same. In other words, when SCS indexes are the same, symbol boundaries of frame structures of SCSs indicated by the SCS index are aligned, or symbol lengths of frame structures of SCSs indicated by the SCS index are the same. For example, when index1=0, symbol boundaries of frame structures of 20 kHz and 24 kHz are aligned with a symbol boundary of a frame structure of 15 kHz. When index1=1, symbol boundaries of frame structures of 40 kHz and 48 kHz are aligned with a symbol boundary of a frame structure of 30 kHz. When index1=3, symbol boundaries of frame structures of 80 kHz and 100 kHz are aligned with a symbol boundary of a frame structure of 60 kHz. The rest may be deduced by analogy, and details are not described again.

For example, as shown in FIG. 8, a frame structure 2 serves as a reference frame structure, and a subcarrier spacing of a symbol of the frame structure 2 may be 30 kHz. In this case, the second communication apparatus may determine a time domain location of the symbol 2 of the frame structure 1 based on alignment between the symbol boundary of the frame structure of 40 kHz and the symbol boundary of the frame structure of 30 kHz. In this case, the time domain location of the symbol 2 of the frame structure 1 is a time domain location of a symbol 2 of the frame structure 2. The second communication apparatus may determine a time domain location of the symbol 4 of the frame structure 1 based on alignment between the symbol boundary of the frame structure of 48 kHz and the symbol boundary of the frame structure of 30 kHz. In this case, a time domain location of a symbol 13 of the frame structure 1 is a time domain location of a symbol 13 of the frame structure 2.

S702: The first communication apparatus determines the first symbol.

The first communication apparatus may alternatively determine, based on the second frame structure, the first symbol corresponding to the first frame structure. In other words, similar to that of the second communication apparatus, when the second frame structure is determined, the second frame structure may serve as a reference structure, so that the first communication apparatus can quickly determine a structure of the first symbol. Optionally, the first communication apparatus may determine a time domain location of the first symbol based on the second frame structure, and/or the first communication apparatus may determine a symbol length of the first symbol based on the second frame structure. For example, the first communication apparatus may alternatively quickly determine the time domain location of the first symbol based on alignment between a symbol boundary of the second frame structure and a symbol boundary of the first frame structure. Optionally, when the symbol length of the second frame structure is determined, the first communication apparatus may further determine the symbol length of the first symbol based on the symbol length of the second frame structure.

Alternatively, the first communication apparatus may preconfigure a correspondence between frame structures whose symbol boundaries are aligned. For a specific implementation, refer to the related descriptions in S701. Details are not described again.

Alternatively, the first communication apparatus may determine, based on an indication of the second communication apparatus, that the symbol boundary of the first frame structure is aligned with the symbol boundary of the second frame structure. For example, the second communication apparatus may send indication information, and the first communication apparatus may receive second indication information. The second indication information may indicate the second frame structure, for example, including at least one of the following of the second frame structure: the subcarrier spacing, the symbol length, or index information, to indicate symbol boundary alignment by using these pieces of information. This can prevent the second indication information from carrying an additional information element to indicate symbol boundary alignment, thereby reducing signaling overheads. Alternatively, the second indication information may directly indicate the time domain location of the first symbol. This is not limited.

The second indication information may be carried in higher layer signaling, for example, layer 3 (layer 3) signaling, including a radio resource control (radio resource control, RRC) message, or layer2 (layer 2) signaling, including a media access control element (media access control element, MAC-CE) message. Alternatively, the second indication information may be carried in physical signaling, for example, layer1 (layer 1) signaling, including a downlink control information (downlink control information, DCI) message. Alternatively, the second indication information may be carried in any possible message. This is not limited.

It may be understood that "second indication information" is an example name, or may be replaced with any possible name, for example, second information or second control information. This is not limited.

The first communication apparatus may further determine a first cyclic shift code length of the first symbol and a first useful symbol length of the first symbol.

In a possible manner, the second communication apparatus may send first indication information. The first communication apparatus may receive the first indication information, to determine the first cyclic shift code length and the first useful symbol length based on the first indication information. The first indication information indicates at least one of the following of the first frame structure, or at least one that is of the following of the first frame structure and that is indicated by the first indication information is used to determine the first cyclic shift code length and the first useful symbol length, and the at least one may include the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

The first indication information may indicate the subcarrier spacing of the first frame structure. Alternatively, the first indication information may indicate the DFT sampling number corresponding to the first frame structure. The first communication apparatus may autonomously select the subcarrier spacing of the first frame structure based on the DFT sampling number corresponding to the first frame structure, for example, select a maximum subcarrier spacing supported by the DFT sampling number corresponding to the first frame structure,

to implement flexible configuration of the subcarrier spacing. For example, if the DFT sampling number corresponding to the first frame structure is 320, the first communication apparatus may select a subcarrier spacing of 320 kHz. Alternatively, if there is no subcarrier spacing of 320 kHz, the first communication apparatus may select a maximum subcarrier spacing less than 320 kHz. When the subcarrier spacing of the first frame structure is determined, if the first cyclic shift code length is known, the first useful symbol length may be determined, or if the first useful symbol length is known, the first cyclic shift code length may be determined. Therefore, the first indication information may indicate either the first cyclic shift code length or the first useful symbol length, to reduce signaling overheads. Alternatively, the first indication information may directly indicate a ratio of the first cyclic shift code length to the first useful symbol length. In this way, the first communication apparatus can directly determine the first cyclic shift code length and the first useful symbol length, to implement efficient processing.

It may be understood that the first indication information mainly indicates the first frame structure, to represent that all symbols (including the first symbol) in the frame are symbols corresponding to the first frame structure, and does not need to indicate each symbol in the first frame structure, to reduce signaling overheads. The first indication information may be carried in higher layer signaling, or may be carried in physical signaling, or may be carried in any possible message. This is not limited. For details, refer to the related descriptions of the second indication information. Details are not described again.

It may be further understood that "first indication information" is an example name, or may be replaced with any possible name, for example, first information or first control information. This is not limited.

Alternatively, in another possible manner, the second communication apparatus may send first index information. The first communication apparatus may receive the first index information, and determine the first cyclic shift code length and the first useful symbol length based on the first index information. The first index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol.

The second communication apparatus may preconfigure structures of different symbols. A structure of each symbol includes at least one of the following information of the symbol: a cyclic shift code length, a ratio of the cyclic shift code length to a useful symbol length, the useful symbol length, or a subcarrier spacing corresponding to the symbol. All symbols configured by the second communication apparatus may be jointly identified. In this way, at least one of information of each symbol may be represented by using a unique index.

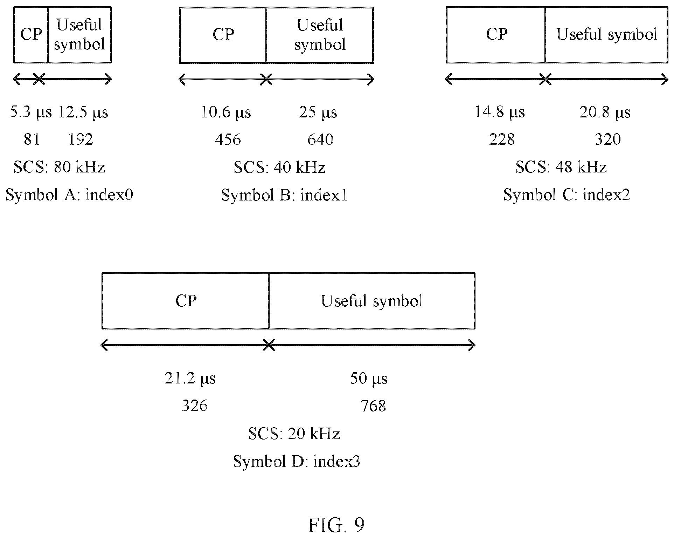

For example, as shown in FIG. 9, structures of four symbols are included, and are respectively represented by using index information 0 (index0), index information 1 (index1), index information 2 (index2), and index information 3 (index3).

The index0 may represent a structure of a symbol A. For example, the structure of the symbol A may include at least one of the following: a subcarrier spacing being 80 kHz, a cyclic shift code length being 5.3 $\mu$s or 81 reference time units, a useful symbol length being 12.5 $\mu$s or 192 reference time units, and a ratio being 81/192 of the cyclic shift code length to the useful symbol length.

The index1 may represent a structure of a symbol B. For example, the structure of the symbol B may include at least one of the following: a subcarrier spacing being 40 kHz, a cyclic shift code length being 10.6 $\mu$s or 456 reference time units, a useful symbol length being 25 $\mu$s or 640 reference time units, and a ratio being 456/640 of the cyclic shift code length to the useful symbol length.

The index2 may represent a structure of a symbol C. For example, the structure of the symbol C may include at least one of the following: a subcarrier spacing being 48 kHz, a cyclic shift code length being 14.8s or 228 reference time units, a useful symbol length being 20.8 $\mu$s or 320 reference time units, and a ratio being 228/320 of the cyclic shift code length to the useful symbol length.

The index3 may represent a structure of a symbol D. For example, the structure of the symbol D may include at least one of the following: a subcarrier spacing being 20 kHz, a cyclic shift code length being 21.2 $\mu$s or 326 reference time units, a useful symbol length being 50 $\mu$s or 768 reference time units, and a ratio being 326/768 of the cyclic shift code length to the useful symbol length.

It may be understood that different index information may be configured for different symbol structures, so that a structure of a specific symbol (for example, the structure of the first symbol) is implicitly indicated by indicating specific index information (for example, the first index information), thereby reducing signaling overheads.

It may be further understood that the index information mainly indicates a structure of a specific symbol. For example, the first index information indicates the structure of the first symbol, so that structures of different symbols in a same frame may be different, thereby implementing more flexible frame structure configuration.

S703: The second communication apparatus transmits a first signal on the first symbol. The first communication apparatus transmits a first signal on the first symbol.

Both the first communication apparatus and the second communication apparatus have determined the first symbol, for example, the time domain location of the first symbol, a subcarrier spacing of the first symbol, and the first cyclic shift code length and the first useful symbol length of the first symbol. The second communication apparatus may send the first signal on the first symbol. Correspondingly, the first communication apparatus may receive the first signal on the first symbol. Alternatively, the first communication apparatus may send the first signal on the first symbol. Correspondingly, the second communication apparatus may receive the first signal on the first symbol.

The first signal may be represented as $s_l^{(p,\mu)}(t)$. For a specific implementation, refer to the foregoing related descriptions. Details are not described again. The first signal may be data, or may be a reference signal, for example, an SRS, a CSI-RS, or a demodulation reference signal (demodulation reference signal, DMRS).

In conclusion, this embodiment 1 of this application may have the following technical effects:

(1) When a subcarrier spacing of a frame structure is determined, that is, a symbol length remains unchanged, different cyclic shift code lengths and different useful symbol lengths, for example, the first cyclic shift code length and the second cyclic shift code length that are different, and the first useful symbol length and the second useful symbol length that are different, may be configured for different frame structures based on different communication requirements, to flexibly adjust the frame structure. In this way, a signal is transmitted on a symbol corresponding to the frame structure, for example, the first symbol, so that differentiated communication requirements can be met.

(2) When cyclic shift code lengths corresponding to different subcarrier spacings are different, a symbol length remains unchanged. In this way, the cyclic shift code length can be adjusted when a quantity of symbols remains unchanged, to cover a larger cell/physical range, and implement communication in a larger range.

(3) The symbol length of the first frame structure is the same as the symbol length of the second frame structure, so that symbol boundaries for different subcarrier spacings can be aligned, to reduce processing complexity of a terminal. In addition, a symbol for an existing frame structure can be compatible, to avoid resource fragmentation, implement efficient resource utilization, and improve communication performance.

A propagation speed of the signal is a speed of light, that is, $C=3*10^8$ m/s, and an effective propagation distance L of the signal, or a coverage radius L of a cell, may be speed of light*cyclic shift code length. For example, if the SCS is 15 kHz, and the cyclic shift code length is $4.6*10^{-6}$ second (s), $L=(3*10^8)*(4.6*10^{-6})=1490$ m; or if the SCS is 24 kHz, and the cyclic shift code length is $29.6*10^{-6}$s, $L=(3*10^8)x(29.6*10^{-6})=9690$ m. It can be learned that, when a symbol length of 15 kHz is the same as a symbol length of 24 kHz, a signal transmission distance can be greatly increased by increasing a cyclic shift code length of a symbol of 24 kHz. For another example, if the SCS is 30 kHz, and the cyclic shift code length is $2.3*10^{-6}$s, $L=(3*10^8)*(2.3*10^{-6})=745$ m; if the SCS is 40 kHz, and the cyclic shift code length is $10.6*10^{-6}$s, $L=(3*10^8)*(10.6*10^{-6})=3434$ m; and if the SCS is 48 kHz, $L=(3*10^8)*(14.8*10^{-6})=4795$ m. It can be learned that when symbol lengths of 30 kHz, 40 kHz, and 48 kHz are the same, a signal transmission distance can also be greatly increased by increasing a cyclic shift code length of a symbol of 40 kHz or a symbol of 48 kHz.

It may be understood that another subcarrier spacing also has a similar principle. For understanding, refer to the foregoing descriptions. Details are not described again.

In a possible design solution, in S703, the second communication apparatus may determine an unavailable resource in a frequency domain resource set corresponding to the first symbol, and transmit the first signal on a frequency domain resource (for example, an available resource) other than the unavailable resource in the frequency domain resource set, to reduce interference, implement resource isolation, and avoid data leakage.

The frequency domain resource set may be a set of a plurality of RBs or a plurality of subcarriers. This is not limited. Specifically, the frequency domain resource set may be flexibly configured based on an actual requirement, to meet the actual requirement.

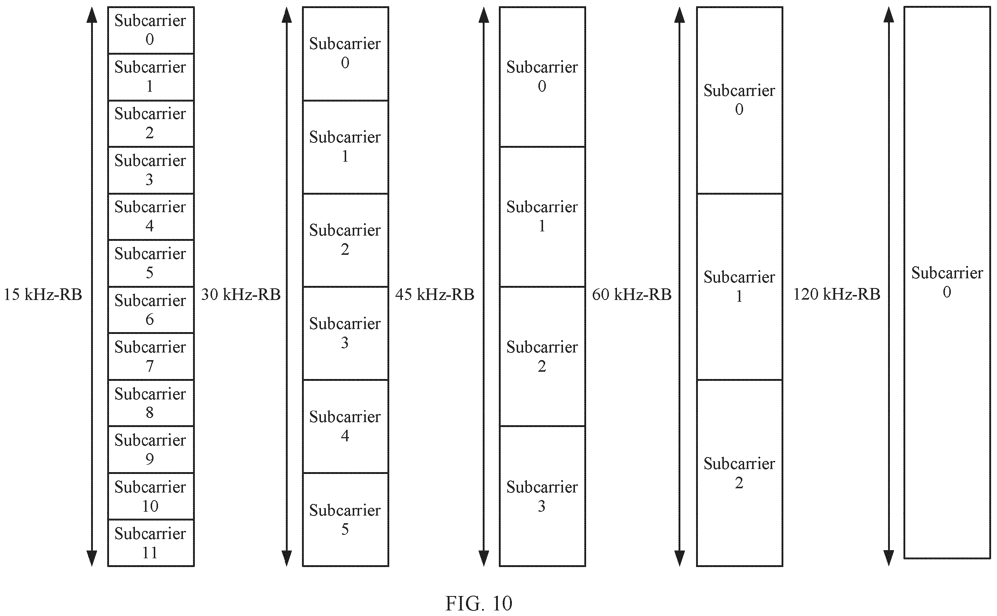

One RB may be represented by using a quantity of subcarriers included in the RB. A quantity of subcarriers included in one RB may depend on a subcarrier spacing corresponding to the RB. For example, as shown in FIG. 10, at 15 kHz, one RB may include 12 subcarriers; at 30 kHz, one RB may include six subcarriers; at 45 kHz, one RB may include four subcarriers; at 60 kHz, one RB may include three subcarriers; and at 120 kHz, one RB may include one or two subcarriers. The rest may be deduced by analogy. Details are not described again.

Alternatively, one RB may be represented by using a subcarrier spacing corresponding to the RB. A plurality of subcarrier spacings may correspond to a plurality of RBs. For example, a subcarrier spacing of 180 kHz is one RB, a subcarrier spacing of 120 kHz is one RB, or a subcarrier spacing of 100 kHz is one RB. The rest may be deduced by analogy. Details are not described again.

On this basis, a frequency domain start location of the frequency domain resource set may be represented by using an RB, for example, a number (index) of the RB. Alternatively, the frequency domain start location may be represented by using a subcarrier spacing corresponding to an RB. For example, it may be predefined in a protocol or configured that the subcarrier spacing corresponds to one domain start location. Alternatively, the frequency domain start location may be represented by using a frequency, for example, an absolute zero point (point A) or any other possible frequency. This is not limited. A bandwidth of the frequency domain resource set may alternatively be represented by using an RB, for example, a quantity of RBs, a quantity of RB groups, or a quantity of subcarriers included in the RB. Alternatively, a bandwidth of the frequency domain resource set may be represented by using a frequency band. For example, the frequency band may be in units of megahertz (MHz), kHz, or gigahertz (GHz). This is not limited.

The unavailable resource represents that the resource cannot be used to carry a signal. The unavailable resource is at least one subcarrier or at least one RB. This is not limited. Specifically, the unavailable resource may be flexibly configured based on an actual requirement, to meet the actual requirement. A location of the unavailable resource may be determined, for example, the unavailable resource is located at an edge of the frequency domain resource set. A quantity of unavailable resources may be determined in the following manner.

Optionally, the quantity of unavailable resources may be related to a subcarrier spacing, that is, be in a correspondence with the subcarrier spacing. For example, an SCS index A1 corresponds to S1 unavailable resources, and A1 and S1 may be positive integers. For another example, an SCS index A2 corresponds to S2 unavailable resources, and A2 and S2 may be positive integers. Optionally, the quantity of unavailable resources may alternatively be related to a modulation and coding scheme (modulation and coding scheme, MCS), that is, be in a correspondence with the MCS. For example, an MCS index B1 corresponds to S3 unavailable resources, and B1 and S3 may be positive integers. For another example, an MCS index B2 corresponds to S4 unavailable resources, and B2 and S4 may be positive integers. The modulation and coding scheme may include parameters such as a modulation scheme (for example, quadrature phase shift keying (quadrature phase shift keying, QPSK) or quadrature amplitude modulation (quadrature amplitude modulation, QAM)) and a bit rate. This is not limited.

For example, a correspondence (denoted as a correspondence 1) between the quantity of unavailable resources, the subcarrier spacing, and the modulation and coding scheme may be shown in at least one row in Table 3.

Table 3

| MCS | SCS | Unavailable resource |
|---|---|---|
| QPSK, bit rate<1/3 | 120 kHz | Two subcarriers, 240 kHz |
| 16QAM, bit rate<1/2 | 120 kHz | Four subcarriers, 480 kHz |
| 64QAM, bit rate<1/2 | 240 kHz | Four subcarriers, 960 kHz |
| ... | ... | ... |

For another example, a correspondence (denoted as a correspondence 2) between the quantity of unavailable resources and the MCS may be shown in at least one row in Table 4.

Table 4

| MCS | Unavailable resource |
|---|---|
| QPSK, bit rate<1/3 | Two subcarriers, 240 kHz |
| 16QAM, bit rate<1/2 | Four subcarriers, 480 kHz |
| 64QAM, bit rate<1/2 | Four subcarriers, 960 kHz |
| ... | ... |

For still another example, a correspondence (denoted as a correspondence 3) between the quantity of unavailable resources and the subcarrier spacing may be shown in at least one row in Table 5.

Table 5

| SCS | Unavailable resource |
|---|---|
| 120 kHz | Two subcarriers, 240 kHz |
| 120 kHz | Four subcarriers, 480 kHz |
| 240 kHz | Four subcarriers, 960 kHz |
| ... | ... |

One or more of the correspondence 1, the correspondence 2, or the correspondence 3 are preconfigured on the second communication apparatus or predefined in a protocol. The second communication apparatus may determine, based on the one or more correspondences, a quantity of unavailable resources in the frequency domain resource set corresponding to the first symbol. Because these unavailable resources may be configured at predefined frequency domain locations, the second communication apparatus can determine resources that are in the frequency domain resource set corresponding to the first symbol and that are available resources, for example, determine a size and a frequency domain location of the available resource, to transmit the first signal on the available resource.

In addition, in S703, the first communication apparatus may alternatively determine an unavailable resource in a frequency domain resource set corresponding to the first symbol, and transmit the first signal on a frequency domain resource (for example, an available resource) other than the unavailable resource in the frequency domain resource set, to reduce interference, implement resource isolation, and avoid data leakage.

For example, the first communication apparatus may determine, based on one or more of the correspondence 1, the correspondence 2, or the correspondence 3, a quantity of unavailable resources in the frequency domain resource set corresponding to the first symbol, to determine a size and a frequency domain location of the available resource, so as to transmit the first signal on the available resource. The one or more correspondences may be preconfigured on the first communication apparatus or predefined in a protocol, or may be indicated by the second communication apparatus by sending signaling, for example, carried in higher layer signaling or physical layer signaling. This is not limited.

For another example, when one or more of the correspondence 1, the correspondence 2, or the correspondence 3 are preconfigured on the second communication apparatus, the second communication apparatus may indicate a modulation and coding scheme and/or a subcarrier spacing to the first communication apparatus, so that the first communication apparatus determines the quantity of unavailable resources based on the modulation and coding scheme and/or the subcarrier spacing that are/is indicated by the second communication apparatus and the one or more preconfigured correspondences. For example, the first communication apparatus may determine the quantity of unavailable resources based on the modulation and coding scheme and the subcarrier spacing that are indicated by the second communication apparatus and the correspondence 1. For another example, the first communication apparatus may determine the quantity of unavailable resources based on the subcarrier spacing indicated by the second communication apparatus and the correspondence 2. For still another example, the first communication apparatus may determine the quantity of unavailable resources based on the modulation and coding scheme indicated by the second communication apparatus and the correspondence 3.

It may be understood that the second communication apparatus may indicate the modulation and coding scheme and/or the subcarrier spacing at a granularity of a symbol, and modulation and coding schemes and/or subcarrier spacings of different symbols may be different, to flexibly configure an unavailable resource on each symbol.

Alternatively, in another possible design solution, the second communication apparatus may send third indication information, and the first communication apparatus may receive the third indication information. The third indication information may indicate an unavailable resource, to flexibly configure the unavailable resource by using signaling. For example, the third indication information may indicate a quantity of subcarriers on the first symbol, for example, two, four, or eight subcarriers. These subcarriers are an unavailable resource on the first symbol. For another example, the third indication information may indicate frequency bands on the first symbol, for example, 240 kHz, 480 kHz, or 1 MHz. These frequency bands are an unavailable resource on the first symbol.

It may be understood that the third indication information may be carried in higher layer signaling, or may be carried in physical signaling, or may be carried in any possible message. This is not limited. For details, refer to the related descriptions of the second indication information. Details are not described again. It may be further understood that "third indication information" is an example name, or may be replaced with any possible name, for example, third information or third control information. This is not limited. In addition, "unavailable resource" is an example name, or may be replaced with any possible name, for example, a guard band or an isolation window. This is not limited.

Optionally, an unavailable resource may be configured for a symbol. For example, a symbol 1 corresponds to an unavailable resource 1, and a symbol 2 corresponds to an unavailable resource 2. Unavailable resources on any two symbols may be different, so that the unavailable resource on each symbol can be flexibly configured. For example, the third indication information may further indicate an unavailable resource on a symbol other than the first symbol. A specific indication manner is similar to that of the unavailable resource on the first symbol. For understanding, refer to the indication manner of the unavailable resource on the first symbol. Details are not described again. In this case, alternatively, the second communication apparatus may first indicate a candidate unavailable resource set, and then indicate the unavailable resource from the candidate unavailable resource set. A specific implementation is not limited.

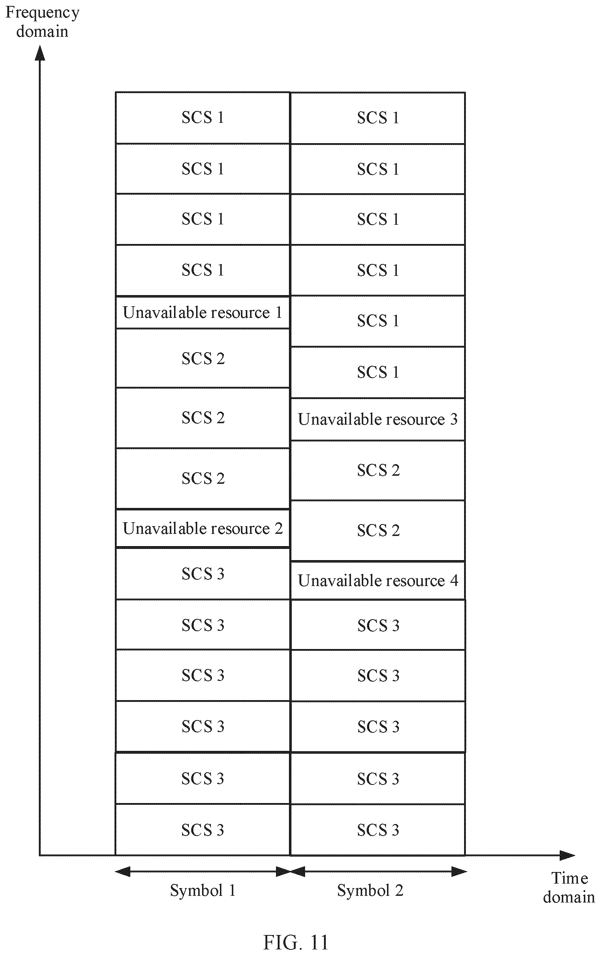

For example, as shown in FIG. 11, an SCS 1, an SCS 2, and an SCS 3 may respectively correspond to different users, for example, a user 1, a user 2, and a user 3, or different services of a same user, for example, a service 1, a service 2, and a service 3. On a symbol 1, a frequency domain resource corresponding to the SCS 1 includes an unavailable resource 1 that is used to isolate data of the user 1 from data of the user 2 or data of the service 1 from data of the service 2 on the symbol 1, and a frequency domain resource corresponding to the SCS 2 includes an unavailable resource 2 that is used to isolate the data of the user 2 from data of the user 3 or data of the service 3 from data of a service 4 on the symbol 1. On a symbol 2, a frequency domain resource corresponding to the SCS 1 includes an unavailable resource 3 that is used to isolate data of the user 1 from data of the user 2 or data of the service 1 from data of the service 2 on the symbol 2, and to isolate the data of the user 2 from data of the user 3 or data of the service 3 from data of a service 4 on the symbol 2.

It can be learned that the unavailable resources configured on the symbol 1 and the symbol 2 may be different, to implement flexible configuration at a granularity of a symbol.

In a possible design solution, the first communication apparatus may send capability information of the first communication apparatus, and the second communication apparatus may receive the capability information of the first communication apparatus.

In this case, optionally, in S701, the second communication apparatus may determine the first symbol based on the capability information of the first communication apparatus.

The capability information of the first communication apparatus may include at least one of the following information: a DFT sampling rate supported by the first communication apparatus, a DFT sampling number supported by the first communication apparatus, switching duration for the DFT sampling number/sampling rate supported by the first communication apparatus, a frame structure supported by the first communication apparatus, a structure of a symbol supported by the first communication apparatus, or an unavailable resource processing capability.

The DFT sampling rate supported by the first communication apparatus and the DFT sampling number supported by the first communication apparatus may be mutually converted. For example, DFT sampling rate supported by the first communication apparatus=subcarrier spacing*DFT sampling number supported by the first communication apparatus. The switching duration for the DFT sampling number/sampling rate supported by the first communication apparatus is duration required for the first communication apparatus to adjust from using one DFT sampling number/sampling rate to using another DFT sampling number/sampling rate. For a specific parameter of the frame structure supported by the first communication apparatus, refer to the related descriptions in S701 and S702. Details are not described again. For a specific parameter of the structure of the symbol supported by the first communication apparatus, refer to the related descriptions in S702. Details are not described again. The unavailable resource processing capability may include that the first communication apparatus supports unavailable resource configuration at a symbol granularity, or that the first communication apparatus does not support unavailable resource configuration at a symbol granularity. The unavailable resource configuration at the symbol granularity may also be referred to as filtering window processing for a symbol, or any other possible expression manner. This is not limited.

The second communication apparatus may flexibly configure a symbol structure based on the capability information of the first communication apparatus, to meet a latency reliability requirement, reduce overheads, and reduce a latency. For example, the second communication apparatus may determine, based on the DFT sampling rate supported by the first communication apparatus, the DFT sampling number supported by the first communication apparatus. The second communication apparatus may determine, based on the switching duration for the DFT sampling number/sampling rate supported by the first communication apparatus, a quantity of changes of a structure of a symbol, or a degree of flexibility of a structure of a symbol in a time unit, for example, a radio frame, a subframe, or a slot. The second communication apparatus may determine a structure of the first symbol based on the frame structure supported by the first communication apparatus. For example, the structure of the first symbol is a structure of a symbol corresponding to the frame structure supported by the first communication apparatus. Alternatively, the second communication apparatus may determine a structure of the first symbol based on the structure of the symbol supported by the first communication apparatus. For example, the structure of the first symbol is the structure of the symbol supported by the first communication apparatus.

Alternatively, the second communication apparatus may configure the unavailable resource of the first communication apparatus based on the capability information of the first communication apparatus, to improve resource utilization. For example, if the first communication apparatus does not support the unavailable resource configuration at the symbol granularity, the second communication apparatus may configure an unavailable resource on a symbol in a time unit, for example, a start symbol of the time unit. The unavailable resource on the symbol is applicable to another symbol in the time unit. For another example, if the first communication apparatus supports the unavailable resource configuration at the symbol granularity, the second communication apparatus may configure an unavailable resource on each symbol in a time unit. Unavailable resources on any two symbols in the time unit may be different.

Optionally, the first communication apparatus may further feed back a recommended symbol structure or a frame structure of the first symbol to the second communication apparatus, for example, a CP length, a subcarrier spacing configuration, and index information of the symbol structure, for another example, a delay spread range determined based on information such as artificial intelligence (artificial intelligence, AI), a channel map, or a location.

Optionally, for neighboring cell measurement, different second communication apparatuses may exchange a reference signal configuration, and a second communication apparatus serving the first communication apparatus notifies the first communication apparatus of the reference signal configuration, to implement flexible configuration of a frame structure or a symbol structure of a neighboring cell measurement reference signal. For example, a neighboring cell measurement reference signal with a short symbol length is configured, to reduce pilot overheads, and a processing delay and complexity of the first communication apparatus.

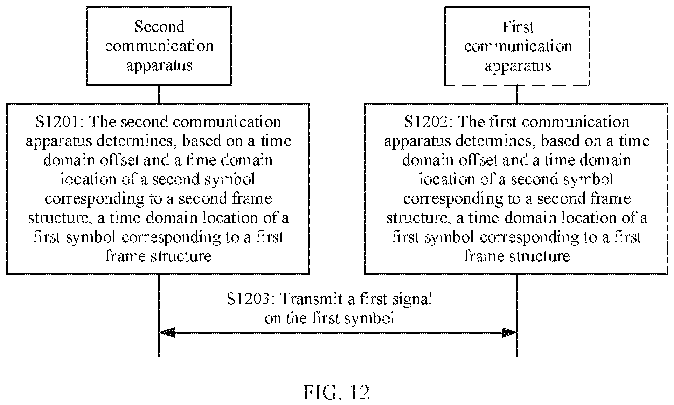

FIG. 12 is a schematic flowchart 2 of a communication method according to an embodiment of this application. In the method, a symbol used for signal transmission between a first communication apparatus and a second communication apparatus, for example, a first symbol, may be a symbol configured for a first frame structure or a second frame structure. When a subcarrier spacing of the first frame structure is different from a subcarrier spacing of the second frame structure, a symbol length of the first frame structure is different from a symbol length of the second frame structure, or when the first frame structure and the second frame structure have a same subcarrier spacing but different cyclic prefix lengths, a symbol length of the first frame structure is different from a symbol length of the second frame structure, to flexibly adjust the frame structure, so as to meet differentiated communication requirements.

Specifically, as shown in FIG. 12, a procedure of the communication method is as follows:

S1201: The second communication apparatus determines, based on a time domain offset and a time domain location of a second symbol corresponding to the second frame structure, a time domain location of a first symbol corresponding to the first frame structure.

The second symbol may be the symbol configured for the first frame structure or the second frame structure, for example, a symbol configured for the second frame structure. The first frame structure may be different from the second frame structure.

The first frame structure may include at least one of the following: the subcarrier spacing of the first frame structure, the cyclic shift code length of the first frame structure, and the symbol length of the first frame structure. The subcarrier spacing of the first frame structure may be a subcarrier spacing supported by a system. For a specific implementation, refer to the related descriptions in S701. Details are not described again.

The symbol length of the first frame structure may include a first cyclic shift code length and a first useful symbol length.

The first cyclic shift code length and the first useful symbol length meet one or more of the following cases:

Case 1: A sum of the first cyclic shift code length and the first useful symbol length is relatively fixed. To be specific, when the first cyclic shift code length changes or the first useful symbol length changes, the symbol length remains unchanged. For a specific implementation, refer to the related descriptions of the first frame structure in the foregoing embodiment 1. Details are not described again.

Case 2: The first cyclic shift code length is related to the first useful symbol length. For example, both the first cyclic shift code length and the first useful symbol length are related to the subcarrier spacing of the first frame structure. In this case, when the first cyclic shift code length changes, the first useful symbol length may also change correspondingly, for example, change equi-proportionally. Alternatively, when the first useful symbol length changes, the first cyclic shift code length may also change correspondingly, for example, change equi-proportionally. For a specific implementation, refer to the related descriptions of the second frame structure in the foregoing embodiment 1. Details are not described again.

Case 3: The first cyclic shift code length is not related to the first useful symbol length. To be specific, the first cyclic shift code length and the first useful symbol length may be separately configured, a change in the first cyclic shift code length may not cause a change in the first useful symbol length, and a change in the first useful symbol length may not cause a change in the first cyclic shift code length.

Specifically, the first cyclic shift code length is not related to the subcarrier spacing of the first frame structure. To be specific, a subcarrier spacing corresponding to the first cyclic shift code length may be different from the subcarrier spacing of the first frame structure, to implement flexible configuration of the frame structure.

For example, the subcarrier spacing corresponding to the first cyclic shift code length may be represented as $\Delta f1$, and $\Delta f1$ may satisfy the following relationship: $\Delta f1 = 2^{\mu 11} \cdot 3^{\mu 21} \cdot 5^{\mu 31}$, where $\mu 11$, $\mu 21$, and $\mu 31$ may be a subcarrier spacing configuration corresponding to the first cyclic shift code length, and belongs to a subcarrier spacing configuration supported by a system. In this case, the first cyclic shift code length may be represented as $N^{\mu}_{\mathrm{CP1},l}$, and $N^{\mu}_{\mathrm{CP1},l}$ may satisfy the following relationship: $N^{\mu}_{\mathrm{CP1},l} = 144\kappa \cdot 2^{-\mu 11} \cdot 3^{-\mu 21} \cdot 5^{-\mu 31}$.

For another example, the subcarrier spacing of the first frame structure may be represented as $\Delta f2$, and $\Delta f2$ may satisfy the following relationship: $\Delta f2 = 2^{\mu 12} \cdot 3^{\mu 22} \cdot 5^{\mu 32}$ where $\mu 12$, $\mu 22$, and $\mu 32$ may be a subcarrier spacing configuration of the first frame structure, and belongs to a subcarrier spacing configuration supported by a system. Alternatively, the subcarrier spacing of the first frame structure may still use an NR design. In this case, the subcarrier spacing of the first frame structure may be a subcarrier spacing supported by NR, for example, 15 kHz, 30 kHz, or 60 kHz. For details, refer to the foregoing related descriptions of NR. Details are not described again.

It may be understood that the subcarrier spacing configuration of the first frame structure is different from the subcarrier spacing configuration corresponding to the first cyclic shift code length, so that the subcarrier spacing of the first frame structure and the subcarrier spacing corresponding to the first cyclic shift code length can be separately and independently configured, to implement flexible configuration of the frame structure. For example, the system configures 40 kHz as the subcarrier spacing of the first frame structure, and 48 kHz as the subcarrier spacing corresponding to the first cyclic shift code length; or the system configures 60 kHz as the subcarrier spacing of the first frame structure, and 48 kHz as the subcarrier spacing corresponding to the first cyclic shift code length. This is not limited.

The first useful symbol length may be related to the subcarrier spacing of the first frame structure. For example, the first useful symbol length may be represented as $N^{\mu}_{u1}$, and $N^{\mu}_{u1}$ may satisfy the following relationship: $N^{\mu}_{u1} = 2048\kappa \cdot 2^{-\mu 12} \cdot 3^{-\mu 22} \cdot 5^{-\mu 32}$, or an NR design may be used for $N^{\mu}_{\mathrm{CP1},l}$. For details, refer to the related descriptions of NR. Details are not described again.

It may be understood that the first cyclic shift code length and/or the first useful symbol length may be represented by using a quantity of reference time units, or represented by using a quantity of $i^{th}$ reference time units in M reference time units, or represented by using physical duration. For details, refer to the related descriptions in S701. Details are not described again.

The second frame structure may include at least one of the following: the subcarrier spacing of the second frame structure, the cyclic shift code length of the second frame structure, and the symbol length of the second frame structure. The subcarrier spacing of the second frame structure may be a subcarrier spacing supported by a system. For a specific implementation, refer to the related descriptions in S701. Details are not described again.

When the subcarrier spacings are different, the symbol length of the first frame structure is different from the symbol length of the second frame structure. The symbol length of the second frame structure may include a second cyclic shift code length and a second useful symbol length.

The second cyclic shift code length may be related to a subcarrier spacing configuration of the second frame structure. For example, the second cyclic shift code length may be represented as $N_{\mathrm{CP2},l}^{\mu}$, and $N_{\mathrm{CP2},l}^{\mu}$ may satisfy the following relationship: $N_{\mathrm{CP2},l}^{\mu} = 144\kappa \cdot 2^{-\mu 11} \cdot 3^{-\mu 21} \cdot 5^{-\mu 31}$, or an NR design may be used for $N_{\mathrm{CP2},l}^{\mu}$. For details, refer to the foregoing related descriptions. Details are not described again. In this case, when the subcarrier spacing corresponding to the first cyclic shift code length is different from the subcarrier spacing of the second frame structure, the second cyclic shift code length may be different from the first cyclic shift code length.

The second useful symbol length may be related to a subcarrier spacing configuration of the second frame structure. For example, the second useful symbol length may be represented as $N_{u2}^{\mu}$, and $N_{u2}^{\mu}$ may satisfy the following relationship: $N_{u2}^{\mu} = 2048\kappa \cdot 2^{-\mu 11} \cdot 3^{-\mu 21} \cdot 5^{-\mu 31}$, or an NR design may be used for $N_{u2}^{\mu}$. For details, refer to the foregoing related descriptions. Details are not described again. In this case, when the subcarrier spacing of the first frame structure is different from the subcarrier spacing of the second frame structure, the second useful symbol length may also be different from the first useful symbol length.

It may be understood that the second cyclic shift code length and/or the second useful symbol length may be represented by using a quantity of reference time units, or represented by using a quantity of $i^{th}$ reference time units in M reference time units, or represented by using physical duration. For details, refer to the related descriptions in S701. Details are not described again.

For ease of understanding, with reference to Case 1 to Case 3, a part of possible parameter configurations in the frame structure may be shown in at least one row in Table 6. Each row in Table 6 may represent a DFT sampling rate, a DFT sampling number, a subcarrier spacing, and a symbol length in one case.

Table 6

| DFT sampling rate | DFT sampling number | Subcarrier spacing | Symbol length | Description |
|---|---|---|---|---|
| 122880 | 2048 | 60 kHz | 66.7 μs | The DFT sampling rate supported by NR is still used |
| 61440 | $768=2^8*3$ | 20 kHz | 50 μs | The DFT sampling number supported by the system is newly added |
| 30720 | $640=2^7*5$ | 24 kHz | 41.7 μs | |
| 15360 | $384=2^7*3$ | 40 kHz | 25 μs | The subcarrier spacing supported by the system is newly added |
| 7680 | $320=2^6*5$ | 48 kHz | 20.8 μs | |
| | $192=2^6*3$ | 80 kHz | 12.5 μs | The symbol length supported by the system is newly added |
| 54000 | $900=2^2*3^2*5^2$ | 15 kHz | 66.7 μs | The DFT sampling rate supported by the system is newly added |
| 27000 | $450=2*3^2*5^2$ | 30 kHz | 50 μs | |
| 13500 | $225=3^2*5^2$ | 60 kHz | 41.7 μs | The DFT sampling number supported by the system is newly added |
| 6750 | $180=2^2*3^2*5$ | 60 kHz | 25 μs | |
| 18000*3 | $150=2*3*5^2$ | 120 kHz | 20.8 μs | The subcarrier spacing supported by NR is still used |
| 10800*5 | | | 12.5 μs | The symbol length supported by the system is newly added |
| 54000 | $1350=2*3^3*5^2$ | 10 kHz | 100 μs | The DFT sampling rate supported by the system is newly added |
| 27000 | $675=3^3*5^2$ | 20 kHz | 50 μs | |
| 13500 | $300=2^2*3*5^2$ | 45 kHz | 22.2 μs | The DFT sampling number supported by the system is newly added |
| 6750 | $270=2*3^3*5$ | 50 kHz | 20 μs | |
| | $135=3^3*5$ | 100 kHz | 10 μs | |

(continued)

| DFT sampling rate | DFT sampling number | Subcarrier spacing | Symbol length | Description |
|---|---|---|---|---|
| | | | | The subcarrier spacing supported by the system is newly added<br>The symbol length supported by the system is newly added |

It may be understood that the parameters of the frame structure shown in Table 6 are merely a part of possible parameters. This is not limited.

When the symbol length of the first frame structure is different from the symbol length of the second frame structure, a symbol boundary of the symbol of the first frame structure, for example, the first symbol, and a symbol boundary of the symbol of the second frame structure, for example, the second symbol may not be aligned, and there may be a time domain offset between the first symbol and the second symbol. Therefore, in a process of determining the first symbol, the second communication apparatus needs to determine the time domain offset between the first symbol and the second symbol, to determine the time domain location of the first symbol. Details are described below.

In this embodiment of this application, the second communication apparatus may select, based on a current communication requirement, for example, a current communication environment or a location of the first communication apparatus, a target frame structure suitable for the current communication requirement from all frame structures (including the first frame structure and the second frame structure) supported by the second communication apparatus, for example, the first frame structure or any other possible frame structure. This is not limited.

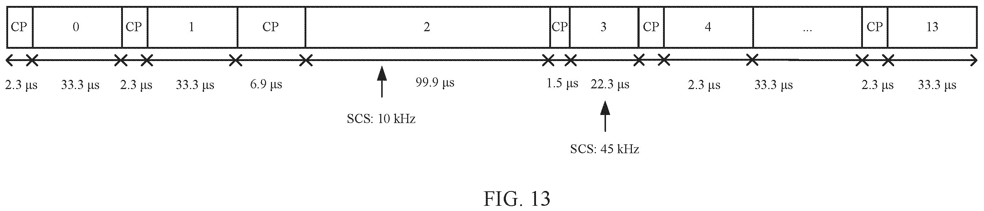

For example, as shown in FIG. 13, a preconfigured frame structure is a frame structure with a subcarrier spacing of 30 kHz, a useful symbol length may be 33.3 $\mu$s, and a cyclic shift code length is approximately 2.3 $\mu$s. On this basis, the second communication apparatus may equi-proportionally adjust the cyclic shift code length and the useful symbol length based on an actual requirement.

When an environment delay requirement is high, a longer cyclic shift code is required. The second communication apparatus may configure a frame structure with a long cyclic shift code, for example, a frame structure with a subcarrier spacing of 10 kHz. A symbol of the frame structure may be a symbol 2 in FIG. 13. A useful symbol length of the symbol 2 may be 99.9 $\mu$s, and a cyclic shift code length of the symbol 2 may be approximately 6.9 $\mu$s. In this case, compared with a symbol of the frame structure with the subcarrier spacing of 30 kHz, both the useful symbol length and the cyclic shift code length of the symbol of the frame structure with the subcarrier spacing of 10 kHz may be increased by three times.

When an environment delay requirement is low, a shorter cyclic shift code is required. The second communication apparatus may configure a frame structure with a short cyclic shift code, for example, a frame structure with a subcarrier spacing of 45 kHz. A symbol of the frame structure may be a symbol 3 in FIG. 13. A useful symbol length of the symbol 3 may be 22.3 $\mu$s, and a cyclic shift code length of the symbol 3 may be approximately 1.5 $\mu$s. In this case, compared with a symbol of the frame structure with the subcarrier spacing of 30 kHz, both the useful symbol length and the cyclic shift code length of the symbol of the frame structure with the subcarrier spacing of 45 kHz may be reduced by 2/3.

It may be understood that, because a system supports more subcarrier spacings, the cyclic shift code length may also be more flexible. In this way, the cyclic shift code length can be adjusted as required, to reduce overheads, shorten a time domain processing time, and reduce a communication delay.

It may be further understood that, in FIG. 13, a symbol other than the symbol 2 and the symbol 3 may still be for the preconfigured frame structure. In addition, the frame structure shown in FIG. 13 is an example, and is not limited. For example, more subcarrier spacings such as 10 kHz, 20 kHz, 30 kHz, 45 kHz, 60 kHz, 90 kHz and 100 kHz may be configured in one time unit or one frame structure. This is not limited. To be specific, a device may transmit data on symbols of different frame structures based on different service requirements.

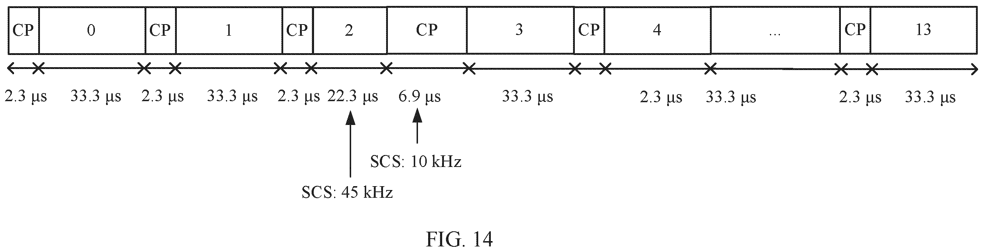

For example, as shown in FIG. 14, a frame structure preconfigured by the second communication apparatus is a frame structure with a subcarrier spacing of 30 kHz, a useful symbol length may be 33.3 $\mu$s, and a cyclic shift code length is approximately 2.3 $\mu$s. On this basis, the second communication apparatus may independently adjust the cyclic shift code length and the useful symbol length based on an actual requirement.

When an environment delay requirement remains unchanged and a data transmission amount decreases, the second communication apparatus may configure a frame structure in which a cyclic shift code length remains unchanged and a useful symbol length is shortened. A symbol of the frame structure may be a symbol 2 of the frame structure in FIG. 14. A cyclic shift code length of the symbol 2 may still be approximately 2.3 $\mu$s, a subcarrier spacing corresponding to a useful symbol length of the symbol 2 is 45 kHz, and the useful symbol length of the symbol 2 may be 22.3 $\mu$s. In this case,

the useful symbol length is shortened, to reduce communication overheads, and improve communication efficiency.

When an environment delay requirement is high, but a data transmission amount remains unchanged, the second communication apparatus may configure a frame structure in which a cyclic shift code length increases and a useful symbol length remains unchanged. A symbol of the frame structure may be a symbol 3 of the frame structure in FIG. 14. A subcarrier spacing corresponding to a cyclic shift code length of the symbol 3 is 10 kHz, so that the cyclic shift code length of the symbol 3 may be approximately 6.9 $\mu$s. A useful symbol length of the symbol 3 is still 33.3 $\mu$s. In this case, an increase in the cyclic shift code length can effectively resist a multipath delay.

It may be understood that, because the cyclic shift code length and the useful symbol length may be independently adjusted, the cyclic shift code length and the useful symbol length may be determined as required, to reduce overheads, shorten a time domain processing time, and reduce a communication delay.

It may be further understood that, in FIG. 14, a symbol other than the symbol 2 and the symbol 3 may still be for the preconfigured frame structure. This is not limited. In addition, the frame structure shown in FIG. 14 is an example, and is not limited. For example, more subcarrier spacings such as 10 kHz, 20 kHz, 30 kHz, 45 kHz, 60 kHz, 90 kHz and 100 kHz may be configured in one time unit or one frame structure. This is not limited. To be specific, a device may transmit data on symbols of different frame structures based on different service requirements.

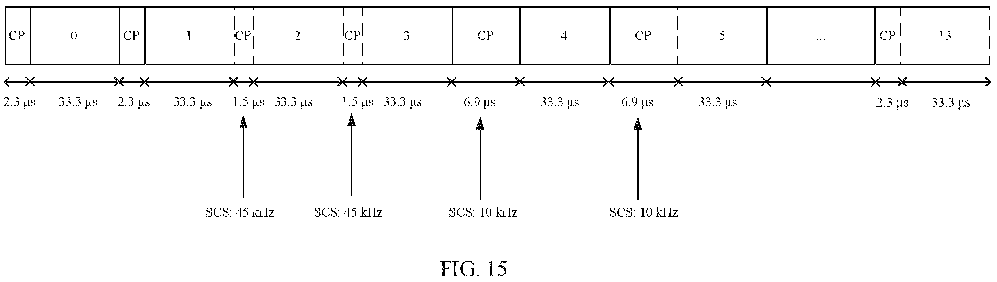

For example, as shown in FIG. 15, a subcarrier spacing of a frame structure is 30 kHz, and a useful symbol length may be 33.3 $\mu$s. In other words, the subcarrier spacing supported by NR is still used. On this basis, the second communication apparatus may adjust the cyclic shift code length based on an actual requirement. In this case, the subcarrier spacing corresponding to the useful symbol length is still the subcarrier spacing supported by NR.

When an environment delay requirement is low, the second communication apparatus may configure a frame structure in which a cyclic shift code length is shortened and a useful symbol length remains unchanged. Symbols of the frame structure may be a symbol 2 and a symbol 3 of the frame structure in FIG. 15. Subcarrier spacings corresponding to cyclic shift code lengths of the symbol 2 and the symbol 3 are 45 kHz, and the cyclic shift code lengths of the symbol 2 and the symbol 3 may be approximately 1.5 $\mu$s. Useful symbol lengths of the symbol 3 and a symbol 4 are still 33.3 $\mu$s.

When an environment delay requirement is high, the second communication apparatus may configure a frame structure in which a cyclic shift code length is increased and a useful symbol length remains unchanged. Symbols of the frame structure may be the symbol 4 and a symbol 5 of the frame structure in FIG. 15. Subcarrier spacings corresponding to cyclic shift code lengths of the symbol 4 and the symbol 5 are 10 kHz, and the cyclic shift code lengths of the symbol 4 and the symbol 5 may be approximately 6.9 $\mu$s. Useful symbol lengths of the symbol 4 and the symbol 5 are still 33.3 $\mu$s.

It may be understood that, because the cyclic shift code length is flexibly adjusted, the cyclic shift code length can be adjusted as required, to reduce overheads, shorten a time domain processing time, and reduce a communication delay.

It may be further understood that, in FIG. 15, a symbol other than the symbol 2 to the symbol 5 may still be for the preconfigured frame structure. In addition, the frame structure shown in FIG. 15 is an example, and is not limited. For example, more subcarrier spacings such as 10 kHz, 20 kHz, 30 kHz, 45 kHz, 60 kHz, 90 kHz and 100 kHz may be configured in one time unit or one frame structure. This is not limited. To be specific, a device may transmit data on symbols of different frame structures based on different service requirements.

When a time domain location of the symbol of the second frame structure is determined, the second frame structure may serve as a reference frame structure, so that the second communication apparatus quickly determines, based on the time domain offset and the time domain location of the symbol of the second frame structure, for example, the time domain location of the second symbol, the time domain location of the first symbol corresponding to the first frame structure. The time domain offset may be a time domain offset between the time domain location of the first symbol and the time domain location of the second symbol. For example, the time domain offset may include at least one of the following: a time domain offset between a start time domain location of the first symbol and a start time domain location of the second symbol, a time domain offset between an end time domain location of the first symbol and an end time domain location of the second symbol, a time domain offset between the start time domain location of the first symbol and the end time domain location of the second symbol, or a time domain offset between the end time domain location of the first symbol and the start time domain location of the second symbol.

Optionally, the time domain offset may be represented by using a quantity of reference time units, or represented by using a quantity of ith reference time units in M reference time units, or represented by using physical duration. For details, refer to the related descriptions in S701. Details are not described again.

Optionally, the second frame structure (namely, the reference frame structure) may be a frame structure in an existing NR system. For details, refer to the related descriptions in S701. Details are not described again.

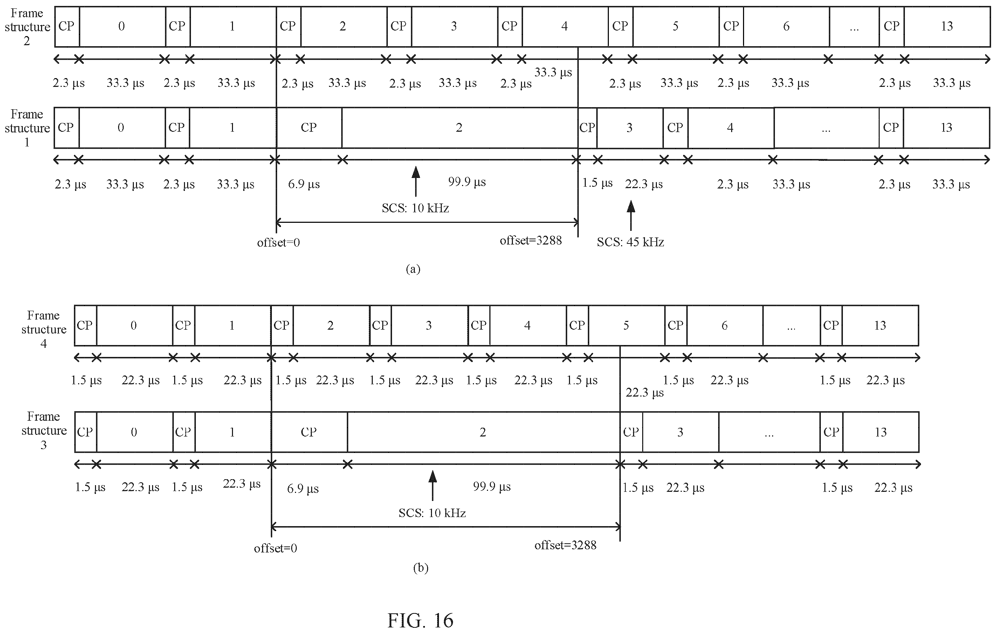

For example, as shown in (a) in FIG. 16, a symbol 2 in a frame structure 1 is a symbol of a frame structure with a subcarrier spacing of 10 kHz, a useful symbol length of the symbol 2 may be 99.9 $\mu$s, and a cyclic shift code length of the symbol 2 may be approximately 6.9 $\mu$s. A symbol 3 in the frame structure 1 is a symbol of a frame structure with a subcarrier spacing of 45 kHz, a useful symbol length of the symbol 3 may be 22.3 $\mu$s, and a cyclic shift code length of the symbol 3 may be approximately 1.5 $\mu$s. In addition, all symbols other than the symbol 2 and the symbol 3 in the frame structure 1 are symbols of a frame structure with a subcarrier spacing of 30 kHz. A frame structure 2 serves as a reference frame structure, and a subcarrier spacing of a symbol of the frame structure 2 may be 30 kHz. In this case, the second communication apparatus may determine a symbol, for example, a symbol 2, in the frame structure 2 as a reference symbol. The second communication apparatus may determine a start time domain location of the symbol 2 in the frame structure 1 based on a start time domain location of the reference symbol and a time domain offset 1 between the reference symbol and the symbol 2 in the frame structure 1. In this case, because the time domain offset 1 is zero, that is, offset=0, a start time domain location of the symbol 2 in the frame structure 1 is the start time domain location of the reference symbol. In addition, the second communication apparatus may further determine a start time domain location of the symbol 3 in the frame structure 1 based on the start time domain location of the reference symbol and a time domain offset 2 between the reference symbol and the symbol 3 in the frame structure 1, that is, offset=3288. In this case, a start time domain location of the symbol 3 in the frame structure 1 is as follows: time domain location of the reference symbol + time domain offset 2.

It may be understood that the second communication apparatus may also determine a start time domain location of another symbol in the frame structure 1, for example, a symbol 0, a symbol 1, or a symbol 4. For a specific implementation principle, refer to the foregoing related descriptions. Details are not described again.

Optionally, the second frame structure (namely, the reference frame structure) may be a configured frame structure, for example, the first frame structure described above. For details, refer to the related descriptions in S701. Details are not described again.

For example, as shown in (b) in FIG. 16, a symbol 2 in a frame structure 3 is a symbol of a frame structure with a subcarrier spacing of 10 kHz, a useful symbol length of the symbol 2 may be 99.9 μs, and a cyclic shift code length of the symbol 2 may be approximately 6.9 μs. In addition, all symbols other than the symbol 2 in the frame structure 3 are symbols of a frame structure with a subcarrier spacing of 45 kHz. A frame structure 4 serves as a reference frame structure, and a subcarrier spacing of a symbol of the frame structure 4 may be 45 kHz. In this case, the second communication apparatus may determine a symbol, for example, a symbol 2, in the frame structure 4 as a reference symbol. The second communication apparatus may determine a start time domain location of the symbol 2 in the frame structure 3 based on a start time domain location of the reference symbol and a time domain offset 3 between the reference symbol and the symbol 2 in the frame structure 3. In this case, because the time domain offset 3 is zero, that is, offset=0, a start time domain location of the symbol 2 in the frame structure 3 is the start time domain location of the reference symbol. In addition, the second communication apparatus may further determine a start time domain location of a symbol 3 in the frame structure 3 based on the start time domain location of the reference symbol and a time domain offset 4 between the reference symbol and the symbol 3 in the frame structure 3, that is, offset=3288. In this case, a start time domain location of the symbol 3 in the frame structure 3 is as follows: time domain location of the reference symbol + time domain offset 4.

It may be understood that the second communication apparatus may also determine a start time domain location of another symbol in the frame structure 3, for example, a symbol 0 or a symbol 1. For a specific implementation principle, refer to the foregoing related descriptions. Details are not described again.

In addition, the second communication apparatus may further determine a first cyclic shift code length of the first symbol and a first useful symbol length of the first symbol. For example, the second communication apparatus may determine the first cyclic shift code length and the first useful symbol length based on the pre-selected target frame structure, namely, the first frame structure.

S1202: The first communication apparatus determines, based on a time domain offset and a time domain location of a second symbol corresponding to the second frame structure, a time domain location of a first symbol corresponding to the first frame structure.

The second communication apparatus may send fourth indication information, and the first communication apparatus may receive the fourth indication information. The fourth indication information may indicate the time domain offset. In this way, various time domain offsets can be flexibly indicated by using signaling.

Optionally, the fourth indication information may further indicate at least one of the following: the time domain location of the second symbol or a quantity of first symbols. In other words, when the fourth indication information indicates the time domain offset, the fourth indication information may further be reused to indicate the time domain location of the second symbol and/or the quantity of first symbols. This can reduce signaling overheads. Alternatively, the time domain location of the second symbol and/or the quantity of first symbols may be indicated by using other signaling. This is not limited.

The time domain location of the second symbol may be indicated in an explicit manner. For example, the fourth indication information may indicate an absolute time domain location of the second symbol, for example, the start time domain location or the end time domain location of the second symbol. This is not limited. Alternatively, the fourth indication information may indicate a relative time domain location of the second symbol, for example, a time domain offset of the second symbol relative to a reference time domain location. The reference time domain location may be a time domain location predefined in a protocol or preconfigured. Alternatively, the time domain location of the second symbol may be indicated in an implicit manner. For example, the fourth indication information may indicate an index of the second symbol, to implicitly indicate the time domain location of the second symbol by using the index of the second symbol.

The quantity of first symbols may be a quantity of consecutive first symbols. The quantity of first symbols may be used by the first communication apparatus to determine an entire time domain interval occupied by the first symbol, so that the first communication apparatus can transmit a first signal in the time domain interval.

For example, as shown in (a) in FIG. 16, the fourth indication information may indicate: the symbol 2, the offset=0, and a quantity of symbols being 1; and/or the symbol 2, the offset=3288, and a quantity of symbols being 1. The symbol 2 indicates that the reference symbol is the symbol 2 in the frame structure 2, that is, indicates that the time domain location of the reference symbol is a start time domain location of the symbol 2 in the frame structure 2. The offset=0 and the quantity of symbols being 1 are used to indicate that a time domain offset of the symbol 2 in the frame structure 1 relative to the reference symbol is 0, and in the frame structure 1, there is one consecutive symbol whose frame structure is the same as that of the symbol 2, namely, the symbol 2. The offset=3288 and the quantity of symbols being 1 are used to indicate that a time domain offset of the symbol 3 in the frame structure 1 relative to the reference symbol is 3288 reference time units, and in the frame structure 1, there is one consecutive symbol whose frame structure is the same as that of the symbol 3, namely, the symbol 3.

It may be understood that the fourth indication information may alternatively indicate the start time domain location of another symbol in the frame structure 1, for example, the symbol 0, the symbol 1, or the symbol 4. For a specific implementation principle, refer to the foregoing related descriptions. Details are not described again.

For example, as shown in (b) in FIG. 16, the fourth indication information may indicate: the symbol 2, the offset=0, and a quantity of symbols being 1; and/or the symbol 2, the offset=3288, and a quantity of symbols being 11. The symbol 2 indicates that the reference symbol is the symbol 2 in the frame structure 4, that is, indicates that the time domain location of the reference symbol is a start time domain location of the symbol 2 in the frame structure 4. The offset=0 and the quantity of symbols being 1 are used to indicate that a time domain offset of the symbol 2 in the frame structure 3 relative to the reference symbol is 0, and in the frame structure 3, there is one consecutive symbol whose frame structure is the same as that of the symbol 2, namely, the symbol 2. The offset=3288 and the quantity of symbols being 11 are used to indicate that a time domain offset of the symbol 3 in the frame structure 3 relative to the reference symbol is 3288 reference time units, and in the frame structure 3, there are 11 consecutive symbols whose frame structures are the same as that of the symbol 3, namely, there are 10 consecutive symbols, after the symbol 3, whose frame structures are the same as that of the symbol 3.

It may be understood that the fourth indication information may alternatively indicate the start time domain location of another symbol in the frame structure 3, for example, the symbol 0 or the symbol 1. For a specific implementation principle, refer to the foregoing related descriptions. Details are not described again.

It may be understood that, if the fourth indication information may not only indicate related information of the first symbol, but also indicate related information of a symbol other than the first symbol in the first frame structure, the fourth indication information may not include an index of each symbol in the first frame structure. In this case, the fourth indication information may implicitly indicate a ranking of each symbol in the first frame structure, that is, indicate an index of each symbol based on a storage ranking of related information of each symbol in the fourth indication information. Alternatively, the fourth indication information may include an index of each symbol in the first frame structure. This is not limited. However, if the fourth indication information indicates related information of a part of specific symbols in the first frame structure, the fourth indication information may include indexes of these symbols.

It may be further understood that the fourth indication information may be carried in higher layer signaling, or may be carried in physical signaling, or may be carried in any possible message. This is not limited. For details, refer to the related descriptions of the second indication information. Details are not described again. It may be further understood that "fourth indication information" is an example name, or may be replaced with any possible name, for example, fourth information or fourth control information. This is not limited.

The first communication apparatus may further determine a first cyclic shift code length of the first symbol and a first useful symbol length of the first symbol.

In a possible manner, the second communication apparatus may send fifth indication information. The first communication apparatus may receive the fifth indication information, to determine the first cyclic shift code length and the first useful symbol length based on the fifth indication information, that is, determine a structure of the first symbol, so as to transmit the first signal on the first symbol. The fifth indication information may indicate at least one of the following of the first frame structure, or at least one that is of the following of the first frame structure and that is indicated by the fifth indication information is used to determine the first cyclic shift code length and the first useful symbol length, and the at least one may include the first cyclic shift code length, a ratio of the first cyclic shift code length to the first useful symbol length, the first useful symbol length, the subcarrier spacing of the first frame structure, or a DFT sampling number corresponding to the first frame structure.

For the foregoing case 1, because the first cyclic shift code length is related to the first useful symbol length, the first cyclic shift code length and the first useful symbol length may be determined when the subcarrier spacing of the first frame structure is known, or the subcarrier spacing of the first frame structure and the first useful symbol length may be determined when the first cyclic shift code length is known, or the subcarrier spacing of the first frame structure and the first cyclic shift code length may be determined when the first useful symbol length is known. Therefore, the fifth indication information may indicate any one of the subcarrier spacing of the first frame structure, the first cyclic shift code length, or the first useful symbol length, to reduce signaling overheads. Alternatively, the fifth indication information may directly indicate a ratio of the first cyclic shift code length to the first useful symbol length. In this way, the first communication apparatus can directly determine the first cyclic shift code length and the first useful symbol length, to implement efficient processing.

Alternatively, for the foregoing case 2, because the first cyclic shift code length is not related to the first useful symbol length, the fifth indication information may indicate the subcarrier spacing corresponding to the first cyclic shift code length, so that the first communication apparatus determines the first cyclic shift code length. Alternatively, the fifth indication information may directly indicate the first cyclic shift code length. Alternatively, the fifth indication information may indicate the subcarrier spacing of the first frame structure, so that the first communication apparatus determines the first useful symbol length. Alternatively, the fifth indication information may directly indicate the first useful symbol length. Alternatively, the fifth indication information may directly indicate a ratio of the first cyclic shift code length to the first useful symbol length.

In addition, for the subcarrier spacing of the first frame structure, the fifth indication information may directly indicate the subcarrier spacing of the first frame structure, or may indicate a DFT sampling number corresponding to the first frame structure, so that the first communication apparatus determines the subcarrier spacing of the first frame structure. This is not limited.

It may be understood that the fifth indication information mainly indicates the first frame structure, to represent that all symbols (including the first symbol) in the frame are symbols corresponding to the first frame structure, and does not need to indicate each symbol in the first frame structure, to reduce signaling overheads. The fifth indication information may be carried in higher layer signaling, or may be carried in physical signaling, or may be carried in any possible message. This is not limited. For details, refer to the related descriptions of the second indication information. Details are not described again.

It may be further understood that "fifth indication information" is an example name, or may be replaced with any possible name, for example, fifth information or fifth control information. This is not limited.

Alternatively, in another possible manner, the second communication apparatus may send second index information. The first communication apparatus may receive the second index information, and determine the first cyclic shift code length and the first useful symbol length based on the second index information. The second index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol.

The second communication apparatus may preconfigure structures of different symbols. A structure of each symbol includes at least one of the following information of the symbol: a cyclic shift code length, a ratio of the cyclic shift code length to a useful symbol length, the useful symbol length, or a subcarrier spacing corresponding to the symbol. All symbols configured by the second communication apparatus may be jointly identified. In this way, at least one of information of each symbol may be represented by using a unique index.

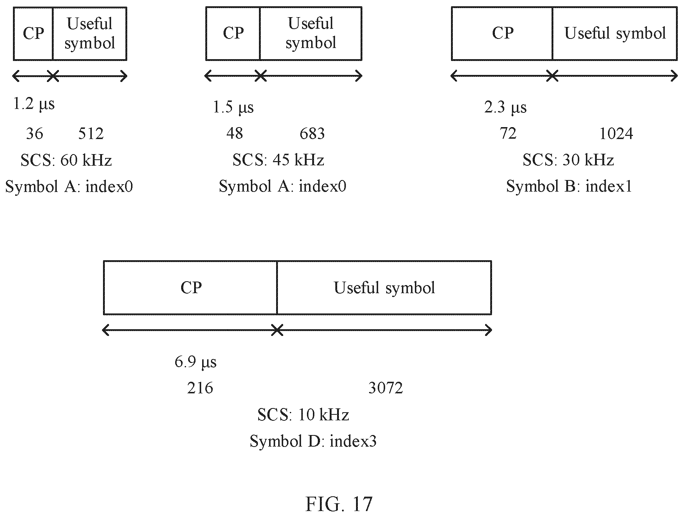

For example, as shown in FIG. 17, when the cyclic shift code length is associated with the useful symbol length, structures of four symbols are included, and are respectively represented by using index information 0 (index0), index information 1 (index1), index information 2 (index2), and index information 3 (index3).

The index0 may represent a structure of a symbol A. For example, the structure of the symbol A may include at least one of the following: a subcarrier spacing being 60 kHz, a cyclic shift code length being 1.2 $\mu$s or 36 reference time units, a useful symbol length being 512 reference time units, and a ratio being 36/512 of the cyclic shift code length to the useful symbol length.

The index 1 may represent a structure of a symbol B. For example, the structure of the symbol B may include at least one of the following: a subcarrier spacing being 45 kHz, a cyclic shift code length being 1.5 $\mu$s or 48 reference time units, a useful symbol length being 683 reference time units, and a ratio being 48/683 of the cyclic shift code length to the useful symbol length.

The index2 may represent a structure of a symbol C. For example, the structure of the symbol C may include at least one of the following: a subcarrier spacing being 30 kHz, a cyclic shift code length being 2.3s or 72 reference time units, a useful symbol length being 1024 reference time units, and a ratio being 72/1024 of the cyclic shift code length to the useful symbol length.

The index3 may represent a structure of a symbol D. For example, the structure of the symbol D may include at least one of the following: a subcarrier spacing being 10 kHz, a cyclic shift code length being 6.9 $\mu$s or 216 reference time units, a useful symbol length being 3072 reference time units, and a ratio being 216/3072 of the cyclic shift code length to the useful symbol length.

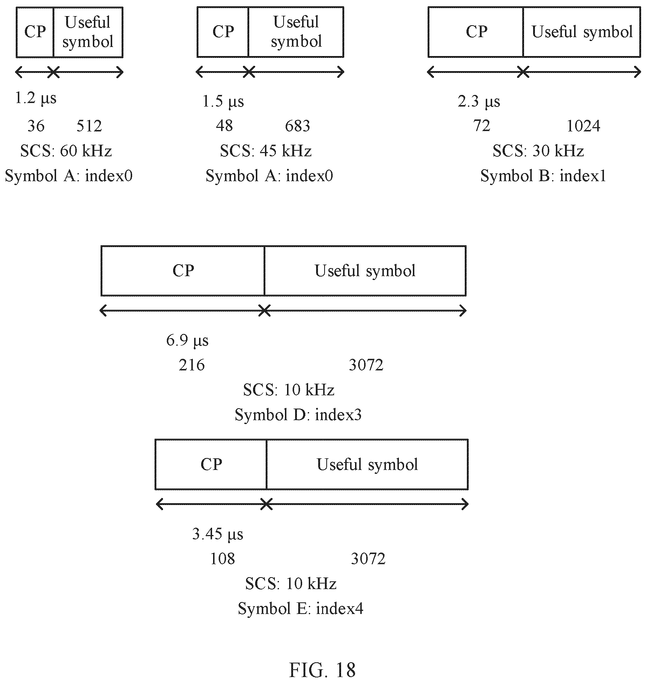

For another example, as shown in FIG. 18, when the cyclic shift code length is not associated with the useful symbol length, structures of five symbols are included, and are respectively represented by using index information 0 (index0), index information 1 (index1), index information 2 (index2), index information 3 (index3), and index information 4 (index4).

For the index0 to the index3, refer to the related descriptions of FIG. 17. Details are not described again.

The index4 may represent a structure of a symbol E, for example, a subcarrier spacing being 10 kHz, a cyclic shift code length being 3.45 µs or 108 reference time units, a useful symbol length being 3072 reference time units, and a ratio being 108/3072 of the cyclic shift code length to the useful symbol length.

It can be learned that, because the cyclic shift code length is not associated with the useful symbol length, when the subcarrier spacing does not change, the cyclic shift code length may be independently configured, so that different cyclic shift code lengths may be separately configured for a symbol D and the symbol E.

Alternatively, in still another possible manner, the first communication apparatus receives fifth indication information and second index information, and determines the first cyclic shift code length and the first useful symbol length based on the fifth indication information and the second index information.

The fifth indication information may indicate a DFT sampling number corresponding to the first frame structure, the first index information corresponds to a structure of the first symbol, and the structure of the first symbol may include at least one of the following: the first cyclic shift code length, a ratio of the first cyclic shift code length to the first useful symbol length, the first useful symbol length, or a subcarrier spacing corresponding to the first symbol. Alternatively, the fifth indication information may indicate at least one of the following of the first frame structure: the subcarrier spacing of the first frame structure or the first useful symbol length, the first index information corresponds to a structure of the first symbol, and the structure of the first symbol may include at least one of the following: the first cyclic shift code length or a DFT sampling number corresponding to the first symbol. Alternatively, the fifth indication information may indicate at least one of the following of the first frame structure: the subcarrier spacing of the first frame structure, the first useful symbol length, or a DFT sampling number corresponding to the first frame structure, the first index information corresponds to a structure of a first symbol, and the structure of the first symbol may include the first cyclic shift code length.

It can be learned that the fifth indication information mainly indicates the frame structure, and the first index information mainly indicates the structure of the symbol, that is, the frame structure and the structure of the symbol are jointly indicated. In this way, the structure of the first symbol can be configured more flexibly.

It may be understood that the second communication apparatus may preconfigure structures of different symbols. When the frame structure and the structure of the symbol are jointly indicated, all symbols corresponding to a same frame structure may be jointly identified. In this way, at least one of information of each symbol corresponding to the same frame structure may be represented by using a unique index. However, indexes of symbols corresponding to different frame structures may be the same.

Optionally, numbers (index information) of symbol structures are unified, that is, symbol structures of different subcarrier spacings are jointly numbered. In other words, the first communication apparatus and/or the second communication apparatus may determine the symbol structure based on the index information. For example, joint numbering is performed for different subcarrier spacings. A terminal may determine the structure of the first symbol based on the index information of the symbol structure.

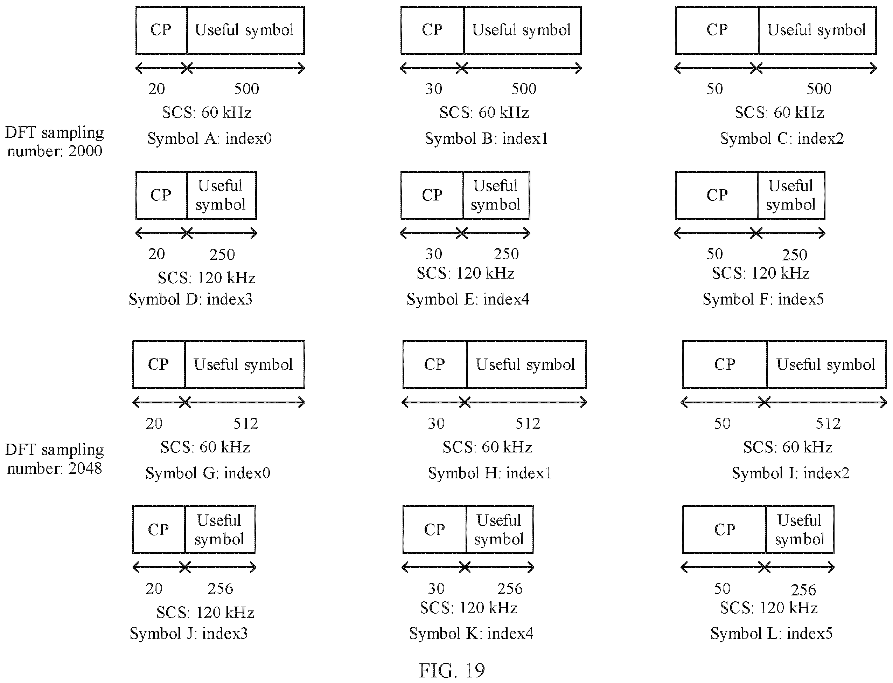

For example, as shown in FIG. 19, a corresponding DFT sampling number is 2000, and structures of six symbols are included, which are respectively represented by using index information 0 (index0) to index information 5 (index4).

The index0 may represent a structure of a symbol A. For example, the structure of the symbol A may include at least one of the following: a subcarrier spacing being 60 kHz, a cyclic shift code length being 20 reference time units, and a useful symbol length being 500 reference time units.

The index 1 may represent a structure of a symbol B. For example, the structure of the symbol B may include at least one of the following: a subcarrier spacing being 60 kHz, a cyclic shift code length being 30 reference time units, and a useful symbol length being 500 reference time units.

The index2 may represent a structure of a symbol C. For example, the structure of the symbol C may include at least one of the following: a subcarrier spacing being 60 kHz, a cyclic shift code length being 50 reference time units, and a useful symbol length being 500 reference time units.

The index3 may represent a structure of a symbol D. For example, the structure of the symbol D may include at least one of the following: a subcarrier spacing being 120 kHz, a cyclic shift code length being 20 reference time units, and a useful symbol length being 250 reference time units.

The index4 may represent a structure of a symbol E. For example, the structure of the symbol E may include at least one of the following: a subcarrier spacing being 120 kHz, a cyclic shift code length being 30 reference time units, and a useful symbol length being 250 reference time units.

The index5 may represent a structure of a symbol F. For example, the structure of the symbol F may include at least one of the following: a subcarrier spacing being 120 kHz, a cyclic shift code length being 50 reference time units, and a useful symbol length being 250 reference time units.

As shown in FIG. 19, a corresponding DFT sampling number is 2048, and structures of six symbols are included, which are also respectively represented by using index information 0 (index0) to index information 5 (index4). In this case, a useful symbol length of each symbol may be different from a useful symbol length corresponding to the DFT sampling number of 2000, for example, the useful symbol length is 256 or 512, and a parameter of each symbol may be the same as a parameter corresponding to the DFT sampling number of 2000. For understanding, refer to the foregoing descriptions.

Details are not described again.

Optionally, the first communication apparatus and/or the second communication apparatus may number (index information) a symbol structure for a subcarrier spacing, that is, determine the index information based on the subcarrier spacing. For example, independent numbering is performed for different subcarrier spacings. A terminal may determine the structure of the first symbol based on the subcarrier spacing and the index information of the symbol structure.

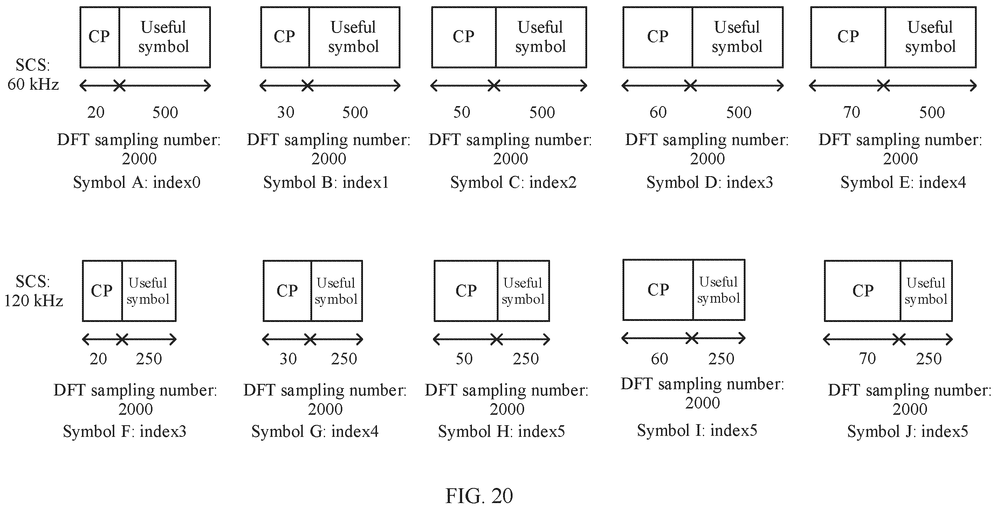

For example, as shown in FIG. 20, a corresponding subcarrier spacing is 60 kHz, and structures of five symbols are included, which are respectively represented by using index information 0 (index0) to index information 4 (index4).

The index0 may represent a structure of a symbol A. For example, the structure of the symbol A may include at least one of the following: a cyclic shift code length being 20 reference time units, a useful symbol length being 500 reference time units, and a DFT sampling number being 2000.

The index1 may represent a structure of a symbol B. For example, the structure of the symbol B may include at least one of the following: a cyclic shift code length being 30 reference time units, a useful symbol length being 500 reference time units, and a DFT sampling number being 2000.

The index2 may represent a structure of a symbol C. For example, the structure of the symbol C may include at least one of the following: a cyclic shift code length being 50 reference time units, a useful symbol length being 500 reference time units, and a DFT sampling number being 2000.

The index3 may represent a structure of a symbol D. For example, the structure of the symbol D may include at least one of the following: a cyclic shift code length being 60 reference time units, a useful symbol length being 500 reference time units, and a DFT sampling number being 2000.

The index4 may represent a structure of a symbol E. For example, the structure of the symbol E may include at least one of the following: a cyclic shift code length being 70 reference time units, a useful symbol length being 500 reference time units, and a DFT sampling number being 2000.

As shown in FIG. 20, a corresponding subcarrier spacing is 120 kHz, and structures of five symbols are included, which are also respectively represented by using index information 0 (index0) to index information 4 (index4).

The index0 may represent a structure of a symbol F. For example, the structure of the symbol F may include at least one of the following: a cyclic shift code length being 10 reference time units, a useful symbol length being 250 reference time units, and a DFT sampling number being 2000. In this case, a useful symbol length of each symbol may be different from a useful symbol length corresponding to the SCS of 60 kHz, for example, the useful symbol length is 250 or 500, and a parameter of each symbol may be the same as a parameter corresponding to the SCS of 60 kHz. For understanding, refer to the foregoing descriptions. Details are not described again.

It may be understood that the index information mainly indicates a structure of a specific symbol. For example, the first index information indicates the structure of the first symbol, so that structures of different symbols in a same frame may be different, thereby implementing more flexible frame structure configuration.

S1203: The second communication apparatus transmits a first signal on the first symbol. The first communication apparatus transmits a first signal on the first symbol.

For a specific implementation of S1203, refer to the related descriptions in S703. Details are not described again.

It may be understood that, when the symbol boundary of the first symbol is not aligned with the symbol boundary of the second symbol, a boundary of a time unit in which the first symbol is located, for example, a radio frame, a subframe, or a slot, may be aligned with a boundary of a time unit in which the second symbol is located, to facilitate signal processing. Alternatively, a boundary of a time unit in which the first symbol is located may not be aligned with a boundary of a time unit in which the second symbol is located. This is not limited.

In conclusion, when subcarrier spacings of frame structures are different, time domain locations of symbols corresponding to different frame structures may not be aligned. In this case, the first communication apparatus may determine, by using a symbol with a determined time domain location, for example, the second symbol corresponding to the second frame structure, as a reference, a time domain location of a symbol with an undetermined time domain location, for example, the time domain location of the first symbol corresponding to the first frame structure, based on a time domain offset between the symbol with the determined time domain location and the symbol with the undetermined time domain location, for example, the time domain offset, so that the first communication apparatus can transmit the first signal on the first symbol.

In a possible design solution, in S1203, the second communication apparatus may determine an unavailable resource in a frequency domain resource set corresponding to the first symbol, and transmit the first signal on a frequency domain resource other than the unavailable resource in the frequency domain resource set. For a specific implementation, refer to the foregoing related descriptions. Details are not described again. In addition, the first communication apparatus may alternatively determine an unavailable resource in a frequency domain resource set corresponding to the first symbol, and transmit the first signal on a frequency domain resource other than the unavailable resource in the frequency domain resource set, to reduce interference, implement resource isolation, and avoid data leakage.

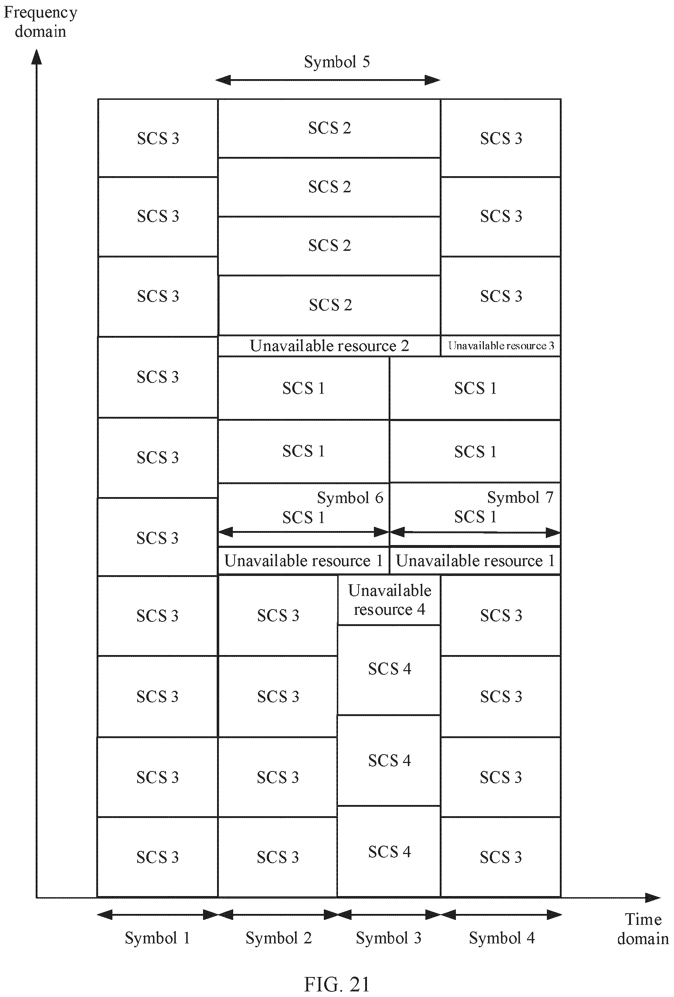

For example, as shown in FIG. 21, an SCS 1, an SCS 2, an SCS 3, and an SCS 4 may respectively correspond to different users, for example, a user 1, a user 2, a user 3, and a user 4, or different services of a same user, for example, a service 1, a service 2, a service 3, and a service 4. The SCS 1 corresponds to a symbol 6 and a symbol 7. To be specific, there is a frequency domain resource corresponding to the SCS 1 on the symbol 6 and the symbol 7, and a symbol length of the symbol 6 is the same as a symbol length of the symbol 7. The SCS 2 corresponds to a symbol 5. To be specific, there is a frequency domain resource corresponding to the SCS 2 on the symbol 5. The SCS 3 corresponds to a symbol 1, a symbol 2, and a symbol 4. To be specific, there is a frequency domain resource corresponding to the SCS 3 on the symbol 1, the symbol 2, and the symbol 4, and symbol lengths of the symbol 1, the symbol 2, and the symbol 4 are the same. The SCS 4 corresponds to a symbol 3. To be specific, there is a frequency domain resource corresponding to the SCS 4 on the symbol 3. In this case, symbol lengths of symbols corresponding to different SCSs may be different, that is, the symbol lengths of the symbol 6 and the symbol 7, the symbol lengths of the symbol 1, the symbol 2, and the symbol 4, a symbol length of the symbol 5, and a symbol length of the symbol 3 may be different.

In this case, on the symbol 6 and the symbol 7, the frequency domain resource corresponding to the SCS 1 includes unavailable resources 1 that are used to isolate data of the user 3 and the user 4 from data of the user 1, or to isolate data of the service 3 and the service 4 from data of the service 1. On the symbol 5, the frequency domain resource corresponding to the SCS 2 includes an unavailable resource 2 that are used to isolate data of the user 1 from data of the user 2, or data of the service 1 from data of the service 2. On the symbol 4, the frequency domain resource corresponding to the SCS 3 includes an unavailable resource 3 that is used to isolate the data of the user 3 from the data of the user 1, or isolate the data of the service 3 from the data of the service 1. On the symbol 3, the frequency domain resource corresponding to the SCS 4 includes an unavailable resource 4 that is used to isolate the data of the user 4 from the data of the user 1, or isolate the data of the service 4 from the data of the service 1.

It can be learned that the unavailable resources configured on the symbol 1 to the symbol 7 may be different, to implement flexible configuration at a granularity of a symbol.

It may be understood that, for a specific implementation of the unavailable resource, refer to the related descriptions in the foregoing embodiment 1. Details are not described again.

In a possible design solution, the first communication apparatus may send capability information of the first communication apparatus, and the second communication apparatus may receive the capability information of the first communication apparatus.

In this case, optionally, in S1201, the second communication apparatus may determine the first symbol based on the capability information of the first communication apparatus. For a specific implementation, refer to the foregoing related descriptions. Details are not described again.

In a possible design solution, before S1203, the first communication apparatus may further determine the time domain location of the second symbol.

The second communication apparatus may send sixth indication information. The first communication apparatus may receive the sixth indication information, to determine the time domain location of the second symbol based on the sixth indication information. The sixth indication information may indicate at least one of the following of the second frame structure: the second cyclic shift code length, a ratio of the second cyclic shift code length to the second useful symbol length, the second useful symbol length, the subcarrier spacing of the second frame structure, or a DFT sampling number corresponding to the second frame structure. A specific implementation principle is similar to that of the fifth indication information. For understanding, refer to the specific implementation principle of the fifth indication information. Details are not described again.

It may be understood that the sixth indication information may be carried in higher layer signaling, or may be carried in physical signaling, or may be carried in any possible message. This is not limited. For details, refer to the related descriptions of the second indication information. Details are not described again. It may be further understood that "sixth indication information" is an example name, or may be replaced with any possible name, for example, sixth information or sixth control information. This is not limited.

Alternatively, the second communication apparatus may send third index information. The first communication apparatus may receive the third index information, to determine the time domain location of the second symbol based on the third index information. The third index information corresponds to a structure of the second symbol, and the structure of the second symbol may include at least one of the following: the second cyclic shift code length, a ratio of the second cyclic shift code length to the second useful symbol length, the second useful symbol length, or a subcarrier spacing corresponding to the second symbol. A specific implementation principle is similar to that of the second index information. For understanding, refer to the specific implementation principle of the second index information. Details are not described again.

Alternatively, the second communication apparatus may send sixth indication information and third index information. The first communication apparatus may receive the sixth indication information and the third index information, to determine the time domain location of the second symbol based on the sixth indication information and the third index information.

The sixth indication information indicates a DFT sampling number corresponding to the second frame structure, the third index information corresponds to a structure of the second symbol, and the structure of the second symbol includes at least one of the following: a second cyclic shift code length, a ratio of the first cyclic shift code length to a second useful symbol length, the first useful symbol length, or a subcarrier spacing corresponding to the second symbol. Alternatively, the sixth indication information indicates at least one of the following of the second frame structure: the subcarrier spacing of the second frame structure or the second useful symbol length, the third index information corresponds to a structure of the second symbol, and the structure of the second symbol includes at least one of the following: the second cyclic shift code length or a DFT sampling number corresponding to the second symbol. Alternatively, the sixth indication information indicates at least one of the following of the second frame structure: the subcarrier spacing of the second frame structure, the second useful symbol length, or a DFT sampling number corresponding to the second frame structure, the third index information corresponds to a structure of a second symbol, and the structure of the second symbol includes the second cyclic shift code length.

It can be learned that the sixth indication information mainly indicates the frame structure, and the third index information mainly indicates the structure of the symbol, that is, the frame structure and the structure of the symbol are jointly indicated. In this way, the structure of the second symbol can be configured more flexibly. In addition, a specific implementation principle of joint indication of the sixth indication information and the third index information is similar to that of the joint indication of the fifth indication information and the second index information. For understanding, refer to the specific implementation principle of the joint indication of the fifth indication information and the second index information. Details are not described again.

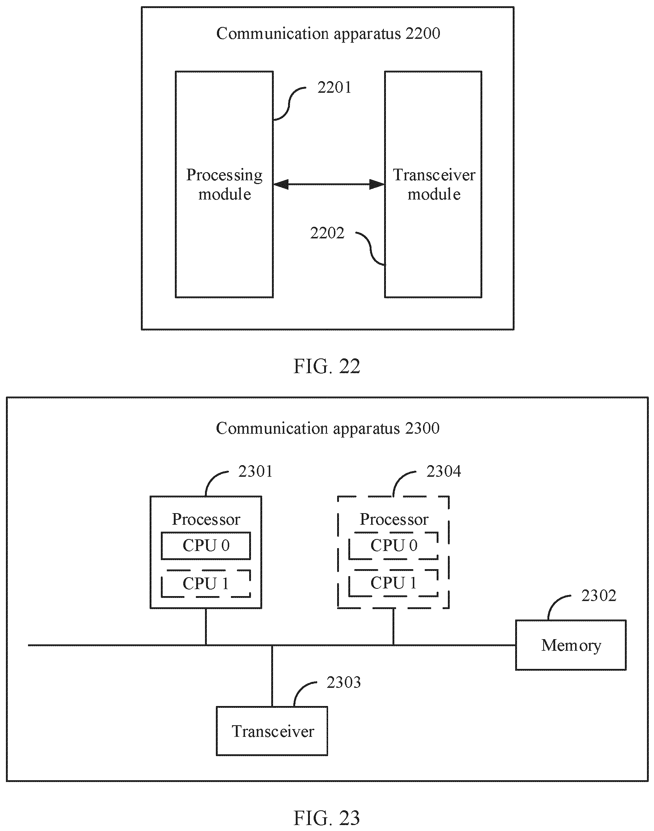

The foregoing describes in detail, with reference to FIG. 7 to FIG. 21, the communication methods provided in embodiments of this application. The following describes in detail, with reference to FIG. 22 and FIG. 23, a communication apparatus configured to perform the communication method provided in embodiments of this application.

To implement various functions in the foregoing methods provided in embodiments of this application, the first communication apparatus and the second communication apparatus each may include a hardware structure and/or a software module, to implement the foregoing functions in a form of the hardware structure, the software module, or a combination of the hardware structure and the software module. Whether a function in the foregoing functions is implemented by the hardware structure, the software module, or the combination of the hardware structure and the software module depends on particular applications and design constraints of the technical solutions.

For example, FIG. 22 is a diagram 1 of a structure of a communication apparatus according to an embodiment of this application. As shown in FIG. 22, an embodiment of this application provides a communication apparatus 2200. The communication apparatus 2200 may be a terminal or a network device, may be an apparatus in a terminal device or a network device, or may be an apparatus that can be used together with a terminal device or a network device. In a possible implementation, the communication apparatus 2200 may include modules or units that are in a one-to-one correspondence with the methods/operations/steps/actions performed by the first communication apparatus or the second communication apparatus in the foregoing method embodiments. The unit may be implemented by a hardware circuit, software, or a combination of a hardware circuit and software. For example, the communication apparatus 2200 includes a transceiver module 2201 and a processing module 2202. For ease of description, FIG. 22 merely shows main parts of the communication apparatus.

In some embodiments, the communication apparatus 2000 may be used in the communication systems shown in FIG. 1 to FIG. 6, and perform functions of the first communication apparatus in the method shown in FIG. 7.

The processing module is configured to determine a first symbol, and the transceiver module is configured to transmit a first signal on the first symbol. The first symbol is a symbol configured for a first frame structure or a second frame structure, a symbol length of the first frame structure is the same as a symbol length of the second frame structure, the symbol length of the first frame structure includes a first cyclic shift code length and a first useful symbol length, the symbol length of the second frame structure includes a second cyclic shift code length and a second useful symbol length. The first cyclic shift code length is different from the second cyclic shift code length, and the first useful symbol length is different from the second useful symbol length.

In a possible design solution, the transceiver module is further configured to receive first indication information, and the processing module is further configured to determine the first cyclic shift code length and the first useful symbol length based on the first indication information. The first indication information indicates at least one of the following of the first frame structure: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

Alternatively, in a possible design solution, the transceiver module is further configured to receive first index information, and the processing module is further configured to determine the first cyclic shift code length and the first useful symbol length based on the first index information. The first index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol.

In a possible design solution, the processing module is further configured to determine, based on the second frame structure, the first symbol corresponding to the first frame structure.

Optionally, a symbol boundary of the second frame structure is aligned with a symbol boundary of the first frame structure. The processing module is further configured to determine a time domain location of the first symbol based on alignment between the symbol boundary of the second frame structure and the symbol boundary of the first frame structure.

Optionally, the transceiver module is further configured to receive second indication information, where the second indication information indicates the second frame structure, for example, including at least one of the following of the second frame structure: a subcarrier spacing, the symbol length, or index information.

In a possible design solution, the processing module is further configured to determine an unavailable resource in a frequency domain resource set corresponding to the first symbol, and the transceiver module is further configured to transmit the first signal on a frequency domain resource other than the unavailable resource in the frequency domain resource set.

Optionally, the transceiver module is further configured to receive third indication information. The third indication information indicates an unavailable resource.

Optionally, the transceiver module 2201 may include a sending module (not shown in FIG. 22) and a receiving module (not shown in FIG. 22). The sending module is configured to implement a sending function of the communication apparatus 2200, and the receiving module is configured to implement a receiving function of the communication apparatus 2200.

Optionally, the communication apparatus 2200 may further include a storage module (not shown in FIG. 22), and the storage module stores a program or instructions. When the processing module 2202 executes the program or the instructions, the communication apparatus 2200 is enabled to perform a function of the first communication apparatus in the communication method shown in FIG. 7.

It should be noted that the communication apparatus 2200 may be a terminal or a network device, may be a chip (system) or another part or component that may be disposed in a terminal or a network device, or may be an apparatus that includes a terminal or a network device. This is not limited in this application.

In addition, for technical effects of the communication apparatus 2200, refer to the technical effects of the communication method shown in FIG. 7. Details are not described herein again.

In some other embodiments, the communication apparatus 2200 may be used in the communication systems shown in FIG. 1 to FIG. 6, and perform functions of the second communication apparatus in the method shown in FIG. 7.

The processing module is configured to determine a first symbol, and the transceiver module is configured to transmit a first signal on the first symbol. The first symbol is a symbol configured for a first frame structure or a second frame structure, a symbol length of the first frame structure is the same as a symbol length of the second frame structure, the symbol length of the first frame structure includes a first cyclic shift code length and a first useful symbol length, the symbol length of the second frame structure includes a second cyclic shift code length and a second useful symbol length. The first cyclic shift code length is different from the second cyclic shift code length, and the first useful symbol length is different from the second useful symbol length.

In a possible design solution, the transceiver module is further configured to send first indication information. At least one that is of the following of the first frame structure and that is indicated by the first indication information is used to determine the first cyclic shift code length and the first useful symbol length: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure. The at least one of the following is used to determine the first cyclic shift code length and the first useful symbol length.

In a possible design solution, the transceiver module is further configured to send first index information. The first index information corresponds to a structure of the first symbol, and at least one that is of the following and that is included in the structure of the first symbol is used to determine the first cyclic shift code length and the first useful symbol length: the first cyclic shift code length, a ratio of the first cyclic shift code length to the first useful symbol length, the first useful symbol length, or a subcarrier spacing corresponding to the first symbol. The at least one of the following is used to determine the first cyclic shift code length and the first useful symbol length.

In a possible design solution, the processing module is further configured to determine, based on the second frame structure, the first symbol corresponding to the first frame structure.

Optionally, the processing module is further configured to determine a time domain location of the first symbol based on alignment between a symbol boundary of the second frame structure and a symbol boundary of the first frame structure.

Optionally, the transceiver module is further configured to send second indication information. The second indication information indicates the second frame structure.

In a possible design solution, the processing module is further configured to determine an unavailable resource in a frequency domain resource set corresponding to the first symbol, and the transceiver module is further configured to transmit the first signal on a frequency domain resource other than the unavailable resource in the frequency domain resource set.

Optionally, the transceiver module is further configured to send third indication information. The third indication information indicates an unavailable resource.

Optionally, the transceiver module 2201 may include a sending module (not shown in FIG. 22) and a receiving module (not shown in FIG. 22). The sending module is configured to implement a sending function of the communication apparatus 2200, and the receiving module is configured to implement a receiving function of the communication apparatus 2200.

Optionally, the communication apparatus 2200 may further include a storage module (not shown in FIG. 22), and the storage module stores a program or instructions. When the processing module 2202 executes the program or the instructions, the communication apparatus 2200 is enabled to perform a function of the second communication apparatus in the communication method shown in FIG. 7.

It should be noted that the communication apparatus 2200 may be a terminal or a network device, may be a chip (system) or another part or component that may be disposed in a terminal or a network device, or may be an apparatus that includes a terminal or a network device. This is not limited in this application.

In addition, for technical effects of the communication apparatus 2200, refer to the technical effects of the communication method shown in FIG. 7. Details are not described herein again.

Alternatively, in some embodiments, the communication apparatus 2200 may be used in the communication systems shown in FIG. 1 to FIG. 6, and perform functions of the first communication apparatus in the method shown in FIG. 12.

The processing module is configured to determine, based on a time domain offset and a time domain location of a second symbol corresponding to a second frame structure, a time domain location of a first symbol corresponding to a first frame structure, and the transceiver module is configured to transmit a first signal on the first symbol. The time domain offset is a time domain offset between the time domain location of the first symbol and the time domain location of the second symbol, and a symbol length of the first frame structure is different from a symbol length of the second frame structure.

Optionally, the transceiver module is further configured to receive fourth indication information. The fourth indication information indicates the time domain offset.

In a possible design solution, the processing module is further configured to determine a first cyclic shift code length of the first symbol and a first useful symbol length of the first symbol.

Optionally, the transceiver module is further configured to receive fifth indication information, and the processing module is further configured to determine the first cyclic shift code length and the first useful symbol length based on the fifth indication information. The fifth indication information indicates at least one of the following of the first frame structure: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

Optionally, the transceiver module is further configured to receive second index information, and the processing module is further configured to determine the first cyclic shift code length and the first useful symbol length based on the second index information. The second index information corresponds to a structure of the first symbol, and the structure of the first symbol includes at least one of the following: the first cyclic shift code length, a ratio of the first cyclic shift code length to the first useful symbol length, the first useful symbol length, or a subcarrier spacing corresponding to the first symbol.

Optionally, the transceiver module is further configured to receive fifth indication information and second index information, and the processing module is further configured to determine the first cyclic shift code length and the first useful symbol length based on the fifth indication information and the second index information.

In a possible design solution, the processing module is further configured to determine the time domain location of the second symbol.

Optionally, the transceiver module is further configured to receive sixth indication information, and the processing module is further configured to determine the time domain location of the second symbol based on the sixth indication information. The sixth indication information indicates at least one of the following of the second frame structure: a second cyclic shift code length, a ratio of the second cyclic shift code length to a second useful symbol length, the second useful symbol length, a subcarrier spacing of the second frame structure, or a DFT sampling number corresponding to the second frame structure.

Optionally, the transceiver module is further configured to receive third index information, and the processing module is further configured to determine the time domain location of the second symbol based on the third index information. The third index information corresponds to a structure of the second symbol, and the structure of the second symbol includes at least one of the following: a second cyclic shift code length, a ratio of the second cyclic shift code length to a second useful symbol length, the second useful symbol length, or a subcarrier spacing corresponding to the second symbol.

**EP 4 583 467 A1**

Optionally, the transceiver module is further configured to receive sixth indication information and third index information, and the processing module is further configured to determine the time domain location of the second symbol based on the sixth indication information and the third index information.

Optionally, the communication apparatus 2200 may further include a storage module (not shown in FIG. 22), and the storage module stores a program or instructions. When the processing module 2202 executes the program or the instructions, the communication apparatus 2200 is enabled to perform a function of the first communication apparatus in the communication method shown in FIG. 12.

It should be noted that the communication apparatus 2200 may be a terminal or a network device, may be a chip (system) or another part or component that may be disposed in a terminal or a network device, or may be an apparatus that includes a terminal or a network device. This is not limited in this application.

In addition, for technical effects of the communication apparatus 2200, refer to the technical effects of the communication method shown in FIG. 12. Details are not described herein again.

Alternatively, in some other embodiments, the communication apparatus 2200 may be used in the communication systems shown in FIG. 1 to FIG. 6, and perform functions of the second communication apparatus in the method shown in FIG. 12.

The processing module is configured to determine, based on a time domain offset and a time domain location of a second symbol corresponding to a second frame structure, a time domain location of a first symbol corresponding to a first frame structure, and the transceiver module is configured to transmit a first signal on the first symbol. The time domain offset is a time domain offset between the time domain location of the first symbol and the time domain location of the second symbol, and a symbol length of the first frame structure is different from a symbol length of the second frame structure.

Optionally, the transceiver module is further configured to send fourth indication information. The fourth indication information indicates the time domain offset.

Further, the fourth indication information further indicates at least one of the following: the time domain location of the second symbol or a quantity of first symbols.

In a possible design solution, the processing module is further configured to determine a first cyclic shift code length of the first symbol and a first useful symbol length of the first symbol.

Optionally, the transceiver module is further configured to send fifth indication information. At least one that is of the following of the first frame structure and that is indicated by the fifth indication information is used to determine the first cyclic shift code length and the first useful symbol length: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure.

Optionally, the transceiver module is further configured to send second index information. The second index information corresponds to a structure of the first symbol, and at least one that is of the following and that is included in the structure of the first symbol is used to determine the first cyclic shift code length and the first useful symbol length: the first cyclic shift code length, a ratio of the first cyclic shift code length to the first useful symbol length, the first useful symbol length, or a subcarrier spacing corresponding to the first symbol.

Optionally, the transceiver module is further configured to send fifth indication information and second index information.

In a possible design solution, the processing module is further configured to determine the time domain location of the second symbol.

Optionally, the transceiver module is further configured to send sixth indication information. At least one that is of the following of the second frame structure and that is indicated by the sixth indication information is used to determine the time domain location of the second symbol: a second cyclic shift code length, a ratio of the second cyclic shift code length to a second useful symbol length, the second useful symbol length, a subcarrier spacing of the second frame structure, or a DFT sampling number corresponding to the second frame structure.

Optionally, the transceiver module is further configured to send third index information. The third index information corresponds to a structure of the second symbol, and at least one that is of the following and that is included in the structure of the second symbol is used to determine the time domain location of the second symbol: a second cyclic shift code length, a ratio of the second cyclic shift code length to a second useful symbol length, the second useful symbol length, or a subcarrier spacing corresponding to the second symbol.

Optionally, the transceiver module is further configured to send sixth indication information and third index information.

Optionally, the communication apparatus 2200 may further include a storage module (not shown in FIG. 22), and the storage module stores a program or instructions. When the processing module 2202 executes the program or the instructions, the communication apparatus 2200 is enabled to perform a function of the second communication apparatus in the communication method shown in FIG. 12.

It should be noted that the communication apparatus 2200 may be a terminal or a network device, may be a chip (system) or another part or component that may be disposed in a terminal or a network device, or may be an apparatus that includes a terminal or a network device. This is not limited in this application.

In addition, for technical effects of the communication apparatus 2200, refer to the technical effects of the communication method shown in FIG. 12. Details are not described herein again.

For example, FIG. 23 is a diagram 2 of a structure of a communication apparatus according to an embodiment of this application. For example, the communication apparatus may be a terminal, or may be a chip (system) or another part or component that may be disposed in a terminal. As shown in FIG. 23, the communication apparatus 2300 may include a processor 2301. Optionally, the communication apparatus 2300 may further include a memory 2302 and/or a transceiver 2303. The processor 2301 is coupled to the memory 2302 and the transceiver 2303, for example, may be connected to the memory 2302 and the transceiver 2303 through a communication bus.

The following describes each component of the communication apparatus 2300 in detail with reference to FIG. 23.

The processor 2301 is a control center of the communication apparatus 2300, and may be one processor, or may be a general term of a plurality of processing elements. For example, the processor 2301 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 2301 may perform various functions of the communication apparatus 2300 by running or executing a software program stored in the memory 2302 and invoking data stored in the memory 2302, for example, perform the communication method shown in FIG. 7 or FIG. 12.

During specific implementation, in an embodiment, the processor 2301 may include one or more CPUs, for example, a CPU 0 and a CPU 1 shown in FIG. 23.

During specific implementation, in an embodiment, the communication apparatus 2300 may alternatively include a plurality of processors, for example, the processor 2301 and a processor 2304 shown in FIG. 23. Each of the processors may be a single-core processor (single-CPU), or may be a multi-core processor (multi-CPU). The processor herein may be one or more devices, circuits, and/or processing cores for processing data (for example, computer program instructions).

The memory 2302 is configured to store a software program for performing the solutions in this application, and the processor 2301 controls execution of the software program. For a specific implementation, refer to the foregoing method embodiments. Details are not described herein again.

Optionally, the memory 2302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 2302 may be integrated with the processor 2301, or may exist independently, and is coupled to the processor 2301 through an interface circuit (not shown in FIG. 23) of the communication apparatus 2300. This is not specifically limited in embodiments of this application.

The transceiver 2303 is configured to communicate with another communication apparatus. For example, the communication apparatus 2300 is a terminal, and the transceiver 2303 may be configured to communicate with a network device or communicate with another terminal device. For another example, the communication apparatus 2300 is a network device, and the transceiver 2303 may be configured to communicate with a terminal or communicate with another network device.

Optionally, the transceiver 2303 may include a receiver and a transmitter (not separately shown in FIG. 23). The receiver is configured to implement a receiving function, and the transmitter is configured to implement a sending function.

Optionally, the transceiver 2303 may be integrated with the processor 2301, or may exist independently, and is coupled to the processor 2301 through an interface circuit (not shown in FIG. 23) of the communication apparatus 2300. This is not specifically limited in embodiments of this application.

It should be noted that the structure of the communication apparatus 2300 shown in FIG. 23 does not constitute a limitation on the communication apparatus. An actual communication apparatus may include more or fewer components than those shown in the figure, or combine a part of the components, or have different layouts of the components.

In addition, for technical effects of the communication apparatus 2300, refer to the technical effects of the communication method in the foregoing method embodiments. Details are not described herein again.

It should be understood that, in embodiments of this application, the processor may be a CPU, or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may represent: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logical of the processes, and should not be construed as any limitation on the implementation processes of embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division and may be another division during actual implementation. For example, a plurality of units or components may be combined or integrated into another system, or a part of features may be ignored or may not be performed. In addition, the displayed or discussed mutual couplings or direct couplings or communication connections may be implemented through a part of interfaces. The indirect couplings or communication connections between the apparatuses or units may be implemented in electronic, mechanical, or other forms.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   determining, by a first communication apparatus, a first symbol, wherein the first symbol is a symbol configured for a first frame structure or a second frame structure, a symbol length of the first frame structure is the same as a symbol length of the second frame structure, the symbol length of the first frame structure comprises a first cyclic shift code length and a first useful symbol length, and the symbol length of the second frame structure comprises a second cyclic shift code length and a second useful symbol length; and the first cyclic shift code length is different from the second cyclic shift code length, and the first useful symbol length is different from the second useful symbol length; and
   transmitting, by the first communication apparatus, a first signal on the first symbol.

2. The method according to claim 1, wherein the method further comprises:

   receiving, by the first communication apparatus, first indication information, wherein the first indication information indicates at least one of the following of the first frame structure: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure; or
   receiving, by the first communication apparatus, first index information, wherein the first index information corresponds to a structure of the first symbol, and the structure of the first symbol comprises at least one of the following: the first cyclic shift code length, a ratio of the first cyclic shift code length to the first useful symbol length, the first useful symbol length, or a subcarrier spacing corresponding to the first symbol; and
   determining, by the first communication apparatus, the first cyclic shift code length and the first useful symbol length based on the first indication information or the first index information.

3. The method according to claim 1 or 2, wherein the determining, by a first communication apparatus, a first symbol comprises:
   determining, by the first communication apparatus based on the second frame structure, the first symbol corresponding to the first frame structure.

4. The method according to claim 3, wherein a symbol boundary of the second frame structure is aligned with a symbol boundary of the first frame structure.

5. The method according to claim 4, wherein the determining, by the first communication apparatus based on the second frame structure, the first symbol corresponding to the first frame structure comprises:
   determining, by the first communication apparatus, a time domain location of the first symbol based on alignment between the symbol boundary of the second frame structure and the symbol boundary of the first frame structure.

**6.** The method according to any one of claims 1 to 5, wherein the method further comprises:
receiving, by the first communication apparatus, second indication information, wherein the second indication information indicates the second frame structure.

**7.** The method according to any one of claims 1 to 6, wherein the transmitting, by the first communication apparatus, a first signal on the first symbol comprises:

determining, by the first communication apparatus, an unavailable resource in a frequency domain resource set corresponding to the first symbol; and
transmitting, by the first communication apparatus, the first signal on a frequency domain resource other than the unavailable resource in the frequency domain resource set.

**8.** A communication method, wherein the method comprises:

determining, by a second communication apparatus, a first symbol, wherein the first symbol is a symbol configured for a first frame structure or a second frame structure, a symbol length of the first frame structure is the same as a symbol length of the second frame structure, the symbol length of the first frame structure comprises a first cyclic shift code length and a first useful symbol length, and the symbol length of the second frame structure comprises a second cyclic shift code length and a second useful symbol length; and the first cyclic shift code length is different from the second cyclic shift code length, and the first useful symbol length is different from the second useful symbol length; and
transmitting, by the second communication apparatus, a first signal on the first symbol.

**9.** The method according to claim 8, wherein the method further comprises:

sending, by the second communication apparatus, first indication information, wherein at least one that is of the following of the first frame structure and that is indicated by the first indication information is used to determine the first cyclic shift code length and the first useful symbol length: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure; or
sending, by the second communication apparatus, first index information, wherein the first index information corresponds to a structure of the first symbol, and at least one that is of the following and that is comprised in the structure of the first symbol is used to determine the first cyclic shift code length and the first useful symbol length: the first cyclic shift code length, a ratio of the first cyclic shift code length to the first useful symbol length, the first useful symbol length, or a subcarrier spacing corresponding to the first symbol.

**10.** The method according to claim 9 or 10, wherein the determining, by a second communication apparatus, a first symbol comprises:
determining, by the second communication apparatus based on the second frame structure, the first symbol corresponding to the first frame structure.

**11.** The method according to claim 10, wherein a symbol boundary of the second frame structure is aligned with a symbol boundary of the first frame structure.

**12.** The method according to any one of claims 8 to 11, wherein the transmitting, by the second communication apparatus, a first signal on the first symbol comprises:

determining, by the second communication apparatus, an unavailable resource in a frequency domain resource set corresponding to the first symbol; and
transmitting, by the second communication apparatus, the first signal on a frequency domain resource other than the unavailable resource in the frequency domain resource set.

**13.** The method according to any one of claims 1 to 12, wherein at least one of the first cyclic shift code length, the second cyclic shift code length, the first useful symbol length, and the second useful symbol length is represented by using a quantity of reference time units, and the reference time unit is related to a maximum subcarrier spacing and a maximum DFT sampling number.

**14.** The method according to claim 13, wherein the reference time unit satisfies the following relationship:

$$T_{s-base} = 1/(DFT\ size\ max \cdot \Delta fmax);$$

$$DFT\ size\ max = 2^{d1max} \cdot 3^{d2max} \cdot 5^{d3max};$$

$$\Delta fmax = 2^{\mu1max} \cdot 3^{\mu2max} \cdot 5^{\mu3max};$$

$T_{s-base}$ is a basic time unit, the reference time unit is an integer multiple of the basic time unit, *DFT size max* is the maximum DFT sampling number, $\Delta fmax$ is the maximum subcarrier spacing, *d1, d2,* and d3 are integers, *d1max* is a maximum value of *d1*, *d2max* is a maximum value of d2, *d3max* is a maximum value of d3, $\mu$1, $\mu$2, and $\mu$3 are integers, $\mu$1*max* is a maximum value of $\mu$1, $\mu$2*max* is a maximum value of $\mu$2, and $\mu$3*max* is a maximum value of $\mu$3.

**15.** The method according to any one of claims 1 to 14, wherein at least one of the first cyclic shift code length, the second cyclic shift code length, the first useful symbol length, and the second useful symbol length is represented by using a quantity of ith reference time units in M reference time units, values of any two of the M reference time units are different, M is an integer greater than 1, and i is any integer in 1 to M.

**16.** The method according to claim 15, wherein the subcarrier spacing of the first frame structure falls within an ith subcarrier spacing set in M subcarrier spacing sets, and at least a part of subcarrier spacings in any two of the M subcarrier spacing sets are different; and/or the DFT sampling number corresponding to the first frame structure falls within an ith DFT sampling number set in M DFT sampling number sets, and at least a part of DFT sampling numbers in any two of the M DFT sampling number sets are different, wherein
the ith reference time unit is related to a maximum subcarrier spacing in the ith subcarrier spacing set, and/or the ith reference time unit is related to a maximum DFT sampling number in the ith DFT sampling number set.

**17.** The method according to claim 16, wherein the ith reference time unit satisfies the following relationship:

$$T_{s-base\ i} = 1/(DFT\ size\ max\ i \cdot \Delta fmax\ i);$$

$$DFT\ size\ max\ i = 2^{di1max} \cdot 3^{di2max} \cdot 5^{di3max};$$

$$\Delta fmax\ i = 2^{\mu i1max} \cdot 3^{\mu i2max} \cdot 5^{\mu i3max};$$

$T_{s-base\ i}$ is an ith basic time unit, the ith reference time unit is an integer multiple of the ith basic time unit, *DFT size max i* is the maximum DFT sampling number in the ith DFT sampling number set, $\Delta fmax\ i$ is the maximum subcarrier spacing in the ith subcarrier spacing set, *di*1, di2, and *di*3 are integers, *di1max* is a maximum value of *di*1, *di2max* is a maximum value of *di2*, *di3max* is a maximum value of *di3*, $\mu$*i*1, $\mu$*i*2, and $\mu$*i*3 are integers, $\mu$*i1max* is a maximum value of $\mu$*i*1, $\mu$*i2max* is a maximum value of $\mu$*i*2, and $\mu$*i3max* is a maximum value of $\mu$*i*3; or
the ith reference time unit satisfies the following relationship:

$$T_{s-base\ i} = 1/(DFT\ size\ max \cdot \Delta fmax\ i);$$

$$DFT\ size\ max = 2^{d1max} \cdot 3^{d2max} \cdot 5^{d3max};$$

$$\Delta fmax\ i = 2^{\mu i1max} \cdot 3^{\mu i2max} \cdot 5^{\mu i3max};$$

$T_{s-base\ i}$ is an ith basic time unit, the ith reference time unit is an integer multiple of the ith basic time unit, *DFT size max* is the maximum DFT sampling number, $\Delta fmax\ i$ is the maximum subcarrier spacing in the ith subcarrier spacing set, *d*1, *d*2, and *d*3 are integers, *d1max* is the maximum value of *d*1, *d2max* is the maximum value of d2, *d3max* is the maximum value of d3, $\mu$*i*1, $\mu$*i*2, and $\mu$*i*3 are integers, $\mu$*i1max* is a maximum value of $\mu$*i*1, $\mu$*i2max* is a maximum value of $\mu$*i*2, and $\mu$*i3max* is a maximum value of $\mu$*i*3; or

the i<sup>th</sup> reference time unit satisfies the following relationship:

$$T_{s-base\ i} = 1/(DFT\ size\ max\ i \cdot \Delta fmax\ i);$$

$$DFT\ size\ \max i = 2^{di1max} \cdot 3^{di2max} \cdot 5^{di3max};$$

$$\Delta fmax\ i = 2^{\mu1max} \cdot 3^{\mu2max} \cdot 5^{\mu3max};$$

$T_{s\text{-}base\ i}$ is an i<sup>th</sup> basic time unit, the i<sup>th</sup> reference time unit is an integer multiple of the i<sup>th</sup> basic time unit, *DFT size max i* is the maximum DFT sampling number in the i<sup>th</sup> DFT sampling number set, $\Delta fmax$ is the maximum subcarrier spacing, *di*1, *di2*, and *di3* are integers, *di1max* is a maximum value of *di1*, *di2max* is a maximum value of *di2*, *di3max* is a maximum value of *di3*, $\mu1$, $\mu2$, and $\mu3$ are integers, $\mu1max$ is the maximum value of $\mu1$, $\mu2max$ is the maximum value of $\mu2$, and $\mu3max$ is the maximum value of $\mu3$.

18. A communication method, wherein the method comprises:

determining, by a first communication apparatus based on a time domain offset and a time domain location of a second symbol corresponding to a second frame structure, a time domain location of a first symbol corresponding to a first frame structure, wherein the time domain offset is an offset between the time domain location of the first symbol and the time domain location of the second symbol, and a symbol length of the first frame structure is different from a symbol length of the second frame structure; and
transmitting, by the first communication apparatus, a first signal on the first symbol.

19. The method according to claim 18, wherein the method further comprises:
receiving, by the first communication apparatus, fourth indication information, wherein the fourth indication information indicates the time domain offset.

20. The method according to claim 18 or 19, wherein the method further comprises:
determining, by the first communication apparatus, a first cyclic shift code length of the first symbol and a first useful symbol length of the first symbol.

21. The method according to claim 20, wherein the determining, by the first communication apparatus, a first cyclic shift code length of the first symbol and a first useful symbol length of the first symbol comprises:

receiving, by the first communication apparatus, fifth indication information and/or second index information, wherein the fifth indication information indicates at least one of the following of the first frame structure: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure; or the second index information corresponds to a structure of the first symbol, and the structure of the first symbol comprises at least one of the following: the first cyclic shift code length, a ratio of the first cyclic shift code length to the first useful symbol length, the first useful symbol length, or a subcarrier spacing corresponding to the first symbol; and
determining, by the first communication apparatus, the first cyclic shift code length and the first useful symbol length based on the fifth indication information and/or the second index information.

22. The method according to any one of claims 18 to 21, wherein the method further comprises:

receiving, by the first communication apparatus, sixth indication information and/or third index information, wherein the sixth indication information indicates at least one of the following of the second frame structure: a second cyclic shift code length, a ratio of the second cyclic shift code length to a second useful symbol length, the second useful symbol length, a subcarrier spacing of the second frame structure, or a DFT sampling number corresponding to the second frame structure; or the third index information corresponds to a structure of the second symbol, and the structure of the second symbol comprises at least one of the following: a second cyclic shift code length, a ratio of the second cyclic shift code length to a second useful symbol length, the second useful symbol length, or a subcarrier spacing corresponding to the second symbol; and
determining, by the first communication apparatus, the time domain location of the second symbol based on the sixth indication information and/or the third index information.

23. A communication method, wherein the method comprises:

determining, by a second communication apparatus based on a time domain offset and a time domain location of a second symbol corresponding to a second frame structure, a time domain location of a first symbol corresponding to a first frame structure, wherein the time domain offset is a time domain offset between the time domain location of the first symbol and the time domain location of the second symbol, and a symbol length of the first frame structure is different from a symbol length of the second frame structure; and
transmitting, by the second communication apparatus, a first signal on the first symbol.

24. The method according to claim 23, wherein the time domain offset is represented by using a quantity of reference time units.

25. The method according to claim 24, wherein the method further comprises:
sending, by the second communication apparatus, fourth indication information, wherein the fourth indication information indicates the time domain offset.

26. The method according to claim 19 or 25, wherein the fourth indication information further indicates at least one of the following: the time domain location of the second symbol or a quantity of first symbols.

27. The method according to claim 26, wherein the method further comprises:

sending, by the second communication apparatus, fifth indication information and/or second index information, wherein at least one that is of the following of the first frame structure and that is indicated by the fifth indication information is used to determine the first cyclic shift code length and the first useful symbol length: the first cyclic shift code length, a ratio of the first cyclic shift code length to the first useful symbol length, the first useful symbol length, a subcarrier spacing of the first frame structure, or a discrete Fourier transform DFT sampling number corresponding to the first frame structure; or the second index information corresponds to a structure of the first symbol, and at least one that is of the following and that is comprised in the structure of the first symbol is used to determine the first cyclic shift code length and the first useful symbol length: the first cyclic shift code length, a ratio of the first cyclic shift code length to the first useful symbol length, the first useful symbol length, or a subcarrier spacing corresponding to the first symbol; and
the fifth indication information and/or the second index information are/is used to determine the first cyclic shift code length of the first symbol and the first useful symbol length of the first symbol.

28. The method according to any one of claims 20 and 21, and 27, wherein at least one of the first cyclic shift code length and the first useful symbol length is represented by using a quantity of reference time units.

29. The method according to any one of claims 23, 25 and 27, wherein the method further comprises:
determining, by the second communication apparatus, the time domain location of the second symbol.

30. The method according to claim 29, wherein the method further comprises:

sending, by the second communication apparatus, sixth indication information and/or third index information, wherein at least one that is of the following of the second frame structure and that is indicated by the sixth indication information is used to determine the time domain location of the second symbol: a second cyclic shift code length, a ratio of the second cyclic shift code length to a second useful symbol length, the second useful symbol length, a subcarrier spacing of the second frame structure, or a DFT sampling number corresponding to the second frame structure; or the third index information corresponds to a structure of the second symbol, and at least one that is of the following and that is comprised in the structure of the second symbol is used to determine the time domain location of the second symbol: a second cyclic shift code length, a ratio of the second cyclic shift code length to a second useful symbol length, the second useful symbol length, or a subcarrier spacing corresponding to the second symbol; and
the sixth indication information and/or the third index information are/is used to determine the time domain location of the second symbol.

31. The method according to claim 22 or 30, wherein at least one of the second cyclic shift code length and the second useful symbol length is represented by using a quantity of reference time units.

32. The method according to claim 24, 28, or 31, wherein the reference time unit is related to a maximum subcarrier spacing and a maximum DFT sampling number.

33. The method according to claim 32, wherein the reference time unit satisfies the following relationship:

$$T_{s-base} = 1/(DFT\ size\ max \cdot \Delta fmax);$$

$$DFT\ size\ max = 2^{d1max} \cdot 3^{d2max} \cdot 5^{d3max};$$

$$\Delta fmax = 2^{\mu 1max} \cdot 3^{\mu 2max} \cdot 5^{\mu 3max};$$

$T_{s\text{-}base}$ is a basic time unit, the reference time unit is an integer multiple of the basic time unit, *DFT size max* is the maximum DFT sampling number, $\Delta fmax$ is the maximum subcarrier spacing, *d1, d2*, and *d3* are integers, *d1max* is a maximum value of *d*1, *d2max* is a maximum value of d2, *d3max* is a maximum value of *d*3, $\mu$1, $\mu$2, and $\mu$3 are integers, $\mu$1*max* is a maximum value of $\mu$1, $\mu$2*max* is a maximum value of $\mu$2, and $\mu$3*max* is a maximum value of $\mu$3.

34. The method according to claim 24, 28, or 31, wherein the reference time unit is an ith reference time unit in M reference time units, values of any two of the M reference time units are different, M is an integer greater than 1; and i is any integer in 1 to M.

35. The method according to claim 34, wherein the subcarrier spacing falls within an ith subcarrier spacing set in M subcarrier spacing sets, and at least a part of subcarrier spacings in any two of the M subcarrier spacing sets are different; and/or the DFT sampling number falls within an ith DFT sampling number set in M DFT sampling number sets, and at least a part of DFT sampling numbers in any two of the M DFT sampling number sets are different, wherein the ith reference time unit is related to a maximum subcarrier spacing in the ith subcarrier spacing set, and/or the ith reference time unit is related to a maximum DFT sampling number in the ith DFT sampling number set.

36. The method according to claim 35, wherein the ith reference time unit satisfies the following relationship:

$$T_{s-base\ i} = 1/(DFT\ size\ max\ i \cdot \Delta fmax\ i);$$

$$DFT\ size\ max\ i = 2^{di1max} \cdot 3^{di2max} \cdot 5^{di3max};$$

$$\Delta fmax\ i = 2^{\mu i1max} \cdot 3^{\mu i2max} \cdot 5^{\mu i3max};$$

$T_{s\text{-}base\ i}$ is an ith basic time unit, the ith reference time unit is an integer multiple of the ith basic time unit, *DFT size max i* is the maximum DFT sampling number in the ith DFT sampling number set, $\Delta fmax$ i is the maximum subcarrier spacing in the ith subcarrier spacing set, *di*1, di2, and *di*3 are integers, *di1max* is a maximum value of *di*1, *di2max* is a maximum value of *di*2, *di3max* is a maximum value of *di*3, $\mu i$1, $\mu i$2, and $\mu i$3 are integers, $\mu i$1*max* is a maximum value of $\mu i$1, $\mu i$2*max* is a maximum value of $\mu i$2, and $\mu i$3*max* is a maximum value of $\mu i$3; or the ith reference time unit satisfies the following relationship:

$$T_{s-base\ i} = 1/(DFT\ size\ max \cdot \Delta fmax\ i);$$

$$DFT\ size\ max = 2^{d1max} \cdot 3^{d2max} \cdot 5^{d3max};$$

$$\Delta fmax\ i = 2^{\mu i1max} \cdot 3^{\mu i2max} \cdot 5^{\mu i3max};$$

$T_{s\text{-}base\ i}$ is an ith basic time unit, the ith reference time unit is an integer multiple of the ith basic time unit, *DFT size max* is the maximum DFT sampling number, $\Delta fmax$ i is the maximum subcarrier spacing in the ith subcarrier

spacing set, $d1$, $d2$, and $d3$ are integers, $d1max$ is the maximum value of $d1$, $d2max$ is the maximum value of d2, $d3max$ is the maximum value of $d3$, $\mu i1$, $\mu i2$, and $\mu i3$ are integers, $\mu i1max$ is a maximum value of $\mu i1$, $\mu i2max$ is a maximum value of $\mu i2$, and $\mu i3max$ is a maximum value of $\mu i3$; or

the $i^{th}$ reference time unit satisfies the following relationship:

$$T_{s-base\,i} = 1/(DFT\ size\ max\ i \cdot \Delta fmax\ i);$$

$$DFT\ size\ \max i = 2^{di1max} \cdot 3^{di2max} \cdot 5^{di3max};$$

$$\Delta fmax\ i = 2^{\mu1max} \cdot 3^{\mu2max} \cdot 5^{\mu3max};$$

$T_{s-base\,i}$ is an $i^{th}$ basic time unit, the $i^{th}$ reference time unit is an integer multiple of the $i^{th}$ basic time unit, $DFT\ size\ max\ i$ is the maximum DFT sampling number in the $i^{th}$ DFT sampling number set, $\Delta fmax$ is the maximum subcarrier spacing, $di1$, $di2$, and $di3$ are integers, $di1max$ is a maximum value of $di1$, $di2max$ is a maximum value of $di2$, $di3max$ is a maximum value of $di3$, $\mu1$, $\mu2$, and $\mu3$ are integers, $\mu1max$ is the maximum value of $\mu1$, $\mu2max$ is the maximum value of $\mu2$, and $\mu3max$ is the maximum value of $\mu3$.

37. The method according to any one of claims 18 to 36, wherein a boundary of a time unit in which the first symbol is located is aligned with a boundary of a time unit in which the second symbol is located.

38. A communication apparatus, wherein the apparatus comprises a processor, and the processor is configured to perform the method according to any one of claims 1 to 37.

39. A communication apparatus, wherein the apparatus comprises a processor, the processor is coupled to a memory, and the processor is configured to execute a computer program stored in the memory, so that the apparatus performs the method according to any one of claims 1 to 37.

40. A computer-readable storage medium, wherein the computer-readable storage medium comprises a computer program or instructions, and when the computer program or the instructions are run on a computer, the computer is enabled to perform the communication method according to any one of claims 1 to 37.

41. A computer program product, wherein the computer program product comprises a computer program or instructions, and when the computer program or the instructions are run on a computer, the computer is enabled to perform the communication method according to any one of claims 1 to 37.

42. A communication system, comprising a first communication apparatus configured to perform the method according to any one of claims 1 to 7 and a second communication apparatus configured to perform the method according to any one of claims 8 to 17, or comprising a first communication apparatus configured to perform the method according to any one of claims 18 to 22 and a second communication apparatus configured to perform the method according to any one of claims 23 to 37.

FIG. 1

FIG. 2

FIG. 3

Terminal

Base station

Terminal

FIG. 4

IAB donor

IAB node

Terminal

FIG. 5

First
terminal

Second
terminal

FIG. 6

```
┌─────────────────┐                    ┌─────────────────┐
│     Second      │                    │      First      │
│  communication  │                    │  communication  │
│    apparatus    │                    │    apparatus    │
└─────────────────┘                    └─────────────────┘
         │                                      │
┌────────────────────────┐          ┌──────────────────────────────┐
│  S701: The second      │          │  S702: The first communication│
│  communication apparatus│         │  apparatus determines a first │
│  determines a first symbol│       │           symbol              │
└────────────────────────┘          └──────────────────────────────┘
         │                                      │
         │    S703: Transmit a first signal on the │
         │              first symbol               │
         │◄──────────────────────────────────────►│
         │                                      │
```

FIG. 7

Frame structure 2 | CP | 0 | CP | 1 | CP | 2 | CP | 3 | CP | 4 | CP | 5 | CP | 6 | ... | CP | 13

2.3 µs | 33.3 µs | 2.3 µs | 33.3 µs | 2.3 µs | 33.3 µs | 2.3 µs | 33.3 µs | 2.3 µs | 33.3 µs | 2.3 µs | 33.3 µs | 2.3 µs | 33.3 µs | 2.3 µs | 33.3 µs

Frame structure 1 | CP | 0 | CP | 1 | CP | 2 | CP | 3 | CP | 4 | CP | 5 | CP | 6 | ... | CP | 13

2.3 µs | 33.3 µs | 2.3 µs | 33.3 µs | 10.6 µs | 25 µs | 2.3 µs | 33.3 µs | 14.8 µs | 20.8 µs | 2.3 µs | 33.3 µs | 2.3 µs | 33.3 µs | 2.3 µs | 33.3 µs

SCS: 40 kHz

SCS: 48 kHz

FIG. 8

| CP | Useful symbol |
|----|---------------|

←—✕——————→

5.3 µs 12.5 µs

81    192

SCS: 80 kHz

Symbol A: index0

| CP | Useful symbol |
|----|---------------|

←————✕——————→

10.6 µs        25 µs

456           640

SCS: 40 kHz

Symbol B: index1

| CP | Useful symbol |
|----|---------------|

←————✕——————→

14.8 µs        20.8 µs

228           320

SCS: 48 kHz

Symbol C: index2

| CP | Useful symbol |
|----|---------------|

←————✕——————→

21.2 µs              50 µs

326                  768

SCS: 20 kHz

Symbol D: index3

FIG. 9

FIG. 10

Frequency
domain

| Symbol 1 | Symbol 2 |
|---|---|
| SCS 1 | SCS 1 |
| SCS 1 | SCS 1 |
| SCS 1 | SCS 1 |
| SCS 1 | SCS 1 |
| Unavailable resource 1 | SCS 1 |
| SCS 2 | SCS 1 |
| SCS 2 | Unavailable resource 3 |
| SCS 2 | SCS 2 |
| Unavailable resource 2 | SCS 2 |
| SCS 3 | Unavailable resource 4 |
| SCS 3 | SCS 3 |
| SCS 3 | SCS 3 |
| SCS 3 | SCS 3 |
| SCS 3 | SCS 3 |
| SCS 3 | SCS 3 |

Symbol 1      Symbol 2

Time
domain

FIG. 11

```
┌─────────────────┐                    ┌─────────────────┐
│     Second      │                    │      First      │
│  communication  │                    │  communication  │
│    apparatus    │                    │    apparatus    │
└─────────────────┘                    └─────────────────┘
┌──────────────────────────┐   ┌──────────────────────────┐
│ S1201: The second        │   │ S1202: The first         │
│ communication            │   │ communication            │
│ apparatus determines,    │   │ apparatus determines,    │
│ based on a time          │   │ based on a time          │
│ domain offset and a time │   │ domain offset and a time │
│ domain location of a     │   │ domain location of a     │
│ second symbol            │   │ second symbol            │
│ corresponding to a       │   │ corresponding to a       │
│ second frame structure,  │   │ second frame structure,  │
│ a time domain location   │   │ a time domain location   │
│ of a first symbol        │   │ of a first symbol        │
│ corresponding to a first │   │ corresponding to a first │
│ frame structure          │   │ frame structure          │
└──────────────────────────┘   └──────────────────────────┘

            S1203: Transmit a first signal
                 on the first symbol
        ◄──────────────────────────────────►
```

FIG. 12

| CP | 0 | CP | 1 | CP | 2 | CP | 3 | CP | 4 | ... | CP | 13 |

2.3 µs  33.3 µs  2.3 µs  33.3 µs  6.9 µs  99.9 µs  1.5 µs  22.3 µs  2.3 µs  33.3 µs  2.3 µs  33.3 µs

SCS: 10 kHz

SCS: 45 kHz

FIG. 13

| CP | 0 | CP | 1 | CP | 2 | CP | 3 | CP | 4 | ... | CP | 13 |

2.3 μs    33.3 μs    2.3 μs    33.3 μs    2.3 μs  22.3 μs    6.9 μs    33.3 μs    2.3 μs    33.3 μs    2.3 μs    33.3 μs

SCS: 10 kHz

SCS: 45 kHz

FIG. 14

EP 4 583 467 A1

| CP | 0 | CP | 1 | CP | 2 | CP | 3 | CP | 4 | CP | 5 | ... | CP | 13 |

2.3 µs   33.3 µs   2.3 µs   33.3 µs   1.5 µs   33.3 µs   1.5 µs   33.3 µs   6.9 µs   33.3 µs   6.9 µs   33.3 µs   2.3 µs   33.3 µs

SCS: 45 kHz          SCS: 45 kHz          SCS: 10 kHz          SCS: 10 kHz

FIG. 15

FIG. 16

| CP | Useful symbol |
|---|---|

←——✕——→

1.2 μs

36          512

SCS: 60 kHz

Symbol A: index0

| CP | Useful symbol |
|---|---|

←——✕——→

1.5 μs

48          683

SCS: 45 kHz

Symbol A: index0

| CP | Useful symbol |
|---|---|

←——✕——→

2.3 μs

72               1024

SCS: 30 kHz

Symbol B: index1

| CP | Useful symbol |
|---|---|

←———————✕———————→

6.9 μs

216                    3072

SCS: 10 kHz

Symbol D: index3

FIG. 17

| CP | Useful symbol |
|----|---------------|

←——✕——→

1.2 μs

36      512

SCS: 60 kHz

Symbol A: index0

| CP | Useful symbol |
|----|---------------|

←——✕———————→

1.5 μs

48        683

SCS: 45 kHz

Symbol A: index0

| CP | Useful symbol |
|----|---------------|

←———✕————————→

2.3 μs

72           1024

SCS: 30 kHz

Symbol B: index1

| CP | Useful symbol |
|----|---------------|

←——————✕——————————→

6.9 μs

216                3072

SCS: 10 kHz

Symbol D: index3

| CP | Useful symbol |
|----|---------------|

←————✕———————————→

3.45 μs

108                3072

SCS: 10 kHz

Symbol E: index4

FIG. 18

EP 4 583 467 A1

| CP | Useful symbol |
|---|---|

20       500

SCS: 60 kHz

Symbol A: index0

| CP | Useful symbol |
|---|---|

30       500

SCS: 60 kHz

Symbol B: index1

| CP | Useful symbol |
|---|---|

50       500

SCS: 60 kHz

Symbol C: index2

DFT sampling number: 2000

| CP | Useful symbol |
|---|---|

20       250

SCS: 120 kHz

Symbol D: index3

| CP | Useful symbol |
|---|---|

30       250

SCS: 120 kHz

Symbol E: index4

| CP | Useful symbol |
|---|---|

50       250

SCS: 120 kHz

Symbol F: index5

| CP | Useful symbol |
|---|---|

20       512

SCS: 60 kHz

Symbol G: index0

| CP | Useful symbol |
|---|---|

30       512

SCS: 60 kHz

Symbol H: index1

| CP | Useful symbol |
|---|---|

50       512

SCS: 60 kHz

Symbol I: index2

DFT sampling number: 2048

| CP | Useful symbol |
|---|---|

20       256

SCS: 120 kHz

Symbol J: index3

| CP | Useful symbol |
|---|---|

30       256

SCS: 120 kHz

Symbol K: index4

| CP | Useful symbol |
|---|---|

50       256

SCS: 120 kHz

Symbol L: index5

FIG. 19

EP 4 583 467 A1

SCS:
60 kHz

| CP | Useful symbol |

20        500

DFT sampling number:
2000
Symbol A: index0

| CP | Useful symbol |

30        500

DFT sampling number:
2000
Symbol B: index1

| CP | Useful symbol |

50        500

DFT sampling number:
2000
Symbol C: index2

| CP | Useful symbol |

60        500

DFT sampling number:
2000
Symbol D: index3

| CP | Useful symbol |

70        500

DFT sampling number:
2000
Symbol E: index4

SCS:
120 kHz

| CP | Useful symbol |

20      250

DFT sampling number:
2000
Symbol F: index3

| CP | Useful symbol |

30      250

DFT sampling number:
2000
Symbol G: index4

| CP | Useful symbol |

50      250

DFT sampling number:
2000
Symbol H: index5

| CP | Useful symbol |

60      250

DFT sampling number:
2000
Symbol I: index5

| CP | Useful symbol |

70      250

DFT sampling number:
2000
Symbol J: index5

FIG. 20

FIG. 21

Communication apparatus 2200

Processing module

2201

Transceiver module

2202

FIG. 22

Communication apparatus 2300

2301

Processor

CPU 0

CPU 1

2304

Processor

CPU 0

CPU 1

2302

Memory

2303

Transceiver

FIG. 23

## INTERNATIONAL SEARCH REPORT

| International application No. |
| --- |
| **PCT/CN2022/122933** |

| A. | CLASSIFICATION OF SUBJECT MATTER |
| --- | --- |
| | H04L 27/00(2006.01)i |

According to International Patent Classification (IPC) or to both national classification and IPC

| B. | FIELDS SEARCHED |
| --- | --- |

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNTXT; CNKI; VEN; ENTXT; 3GPP: 帧结构, 符号, 循环移位, 循环前缀, 有用符号, 长度, 时长, 子载波间隔, 参考, 对齐, 偏移, frame structure, symbol, cyclic prefix, useful, length, duration, SCS, numerology, reference, align

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101116302 A (MOTOROLA INC.) 30 January 2008 (2008-01-30) description, page 2, line 19 to page 10, line 19, and figures 1-4 | 1, 7, 8, 12, 13, 38-42 |
| A | CN 112217753 A (CHENGDU HUAWEI TECHNOLOGIES CO., LTD.) 12 January 2021 (2021-01-12) entire document | 1-42 |
| A | US 2015256308 A1 (HUAWEI TECHNOLOGIES CO., LTD.) 10 September 2015 (2015-09-10) entire document | 1-42 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 June 2023** | **15 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/122933**

| Patent document cited in search report | | | Publication date (day/month/year) | Patent family member(s) | | | Publication date (day/month/year) |
|---|---|---|---|---|---|---|---|
| CN | 101116302 | A | 30 January 2008 | EP | 1849278 | A1 | 31 October 2007 |
| | | | | US | 2006176966 | A1 | 10 August 2006 |
| | | | | TW | 200637296 | A | 16 October 2006 |
| | | | | WO | 2006086093 | A1 | 17 August 2006 |
| | | | | KR | 20070101307 | A | 16 October 2007 |
| | | | | KR | 101199630 | B1 | 08 November 2012 |
| | | | | JP | 2006222956 | A | 24 August 2006 |
| CN | 112217753 | A | 12 January 2021 | None | | | |
| US | 2015256308 | A1 | 10 September 2015 | US | 2019013904 | A1 | 10 January 2019 |
| | | | | US | 11239962 | B2 | 01 February 2022 |
| | | | | CA | 2944798 | A1 | 11 September 2015 |
| | | | | CA | 2944798 | C | 15 December 2020 |
| | | | | US | 2018270027 | A1 | 20 September 2018 |
| | | | | US | 11082173 | B2 | 03 August 2021 |
| | | | | US | 2016191216 | A1 | 30 June 2016 |
| | | | | US | 10826657 | B2 | 03 November 2020 |
| | | | | US | 10862634 | B2 | 08 December 2020 |
| | | | | EP | 3103299 | A1 | 14 December 2016 |
| | | | | EP | 3103299 | A4 | 01 March 2017 |
| | | | | EP | 3103299 | B1 | 29 August 2018 |
| | | | | EP | 3767907 | A1 | 20 January 2021 |
| | | | | EP | 3767907 | B1 | 08 June 2022 |
| | | | | WO | 2015131827 | A1 | 11 September 2015 |
| | | | | RU | 2679565 | C1 | 11 February 2019 |
| | | | | EP | 3429153 | A1 | 16 January 2019 |
| | | | | EP | 3429153 | B1 | 30 September 2020 |
| | | | | EP | 3429152 | A1 | 16 January 2019 |
| | | | | EP | 3429152 | B1 | 27 May 2020 |
| | | | | ES | 2834896 | T3 | 21 June 2021 |
| | | | | AU | 2018200771 | A1 | 22 February 2018 |
| | | | | AU | 2018200771 | B2 | 06 June 2019 |
| | | | | EP | 3429150 | A1 | 16 January 2019 |
| | | | | EP | 3429150 | B1 | 16 September 2020 |
| | | | | RU | 2643643 | C1 | 02 February 2018 |
| | | | | JP | 2018196142 | A | 06 December 2018 |
| | | | | JP | 6545874 | B2 | 17 July 2019 |
| | | | | JP | 2019193288 | A | 31 October 2019 |
| | | | | JP | 6869289 | B2 | 12 May 2021 |
| | | | | AU | 2015226638 | A1 | 20 October 2016 |
| | | | | AU | 2015226638 | B2 | 30 November 2017 |
| | | | | KR | 20180130010 | A | 05 December 2018 |
| | | | | KR | 102071931 | B1 | 31 January 2020 |
| | | | | KR | 20160131085 | A | 15 November 2016 |
| | | | | KR | 101925428 | B1 | 05 December 2018 |
| | | | | JP | 2017513421 | A | 25 May 2017 |
| | | | | JP | 6386592 | B2 | 05 September 2018 |
| | | | | SG | 11201608092 | QA | 29 November 2016 |
| | | | | US | 2018241519 | A1 | 23 August 2018 |
| | | | | US | 11063712 | B2 | 13 July 2021 |
| | | | | EP | 3429151 | A1 | 16 January 2019 |

Form PCT/ISA/210 (patent family annex) (July 2022)

INTERNATIONAL SEARCH REPORT
Information on patent family members

| International application No. |
| PCT/CN2022/122933 |

| Patent document cited in search report | Publication date (day/month/year) | Patent family member(s) | | Publication date (day/month/year) |
|---|---|---|---|---|
| | | EP | 3429151 B1 | 10 June 2020 |
| | | US | 2018234216 A1 | 16 August 2018 |
| | | US | 11075722 B2 | 27 July 2021 |

Form PCT/ISA/210 (patent family annex) (July 2022)